(19) Europäisches Patentamt
European Patent Office
Office européen des brevets

(11) **EP 1 847 992 A2**

(12) **EUROPEAN PATENT APPLICATION**

(43) Date of publication:
**24.10.2007 Bulletin 2007/43**

(51) Int Cl.:
*G11B 7/257* (2006.01)    *G11B 7/243* (2006.01)

(21) Application number: **07105335.9**

(22) Date of filing: **30.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.04.2006 JP 2006118081**

(71) Applicant: **Kabushiki Kaisha Toshiba**
**Minato-ku, Tokyo 105-8001 (JP)**

(72) Inventors:
• **Nakai, Tsukasa**
**Toshiba Corp. IPD**
**Tokyo 105-8001 (JP)**
• **Oomachi, Noritake**
**Toshiba Corporation IPD**
**Tokyo 105-8001 (JP)**

• **Ashida, Sumio**
**Toshiba Corporation IPD**
**Tokyo 105-8001 (JP)**
• **Nakamura, Naomasa**
**Toshiba Corporation IPD**
**Tokyo 105-8001 (JP)**
• **Yusu, Keiichiro**
**Toshiba Corporation IPD**
**Tokyo 105-8001 (JP)**
• **Satoh, Yasuhiro**
**Toshiba Corporation IPD**
**Tokyo 105-8001 (JP)**

(74) Representative: **Henkel, Feiler & Hänzel**
**Patentanwälte**
**Maximiliansplatz 21**
**80333 München (DE)**

(54) **Optical Recording Medium, Information Recording and Reproducing Apparatus, and Information Recording and Reproducing Method**

(57)    In a phase-change optical disk which has a substrate (1a, 1b) and a stacked structure (19, 20) including an interference film, a phase-change recording film (13a, 13b), an interface film (11a, 11b, 15a, 15b, 17a), and a reflecting film (16a, 16b) and which enables the recording film (13a, 13b) to be recorded into or erased from reversibly with light, the elements (including Ge and Te) constituting the recording film (13a, 13b) have a segregation or a concentration distribution in the direction of the thickness of the recording film (13a, 13b) from a region (places shown by 21a, 21b) in contact with the phase-change recording film (13a, 13b), or in the in-plane direction (or in the direction perpendicular to the thickness) of the recording film (13a, 13b).

(Example of fragmentary sectional view of single-sided, dual-layer optical disk)

FIG.1

## Description

One embodiment of the invention relates to an optical recording medium into which information is recorded by irradiating an optical beam to change the state reversibly, and more particularly to a phase-change recording medium where the state change is such that the atomic arrangement of a thin film holding recorded information transits from amorphous material to crystalline material or vice versa.

(Principle of phase-change optical recording)

A phase-change optical recording film generally takes on an amorphous atomic arrangement when a part of the film heated higher than its melting point fuses and is cooled rapidly. Recent researches have suggested that there is a possibility that the atomic arrangement is not in a completely amorphous state and has a short range regularity. However, in the measurement of XRD (X-ray diffraction), no peak which would be observed if there were any crystal has been confirmed.
Accordingly, it is conceivable that there is no long range (or long distance) regularity, which is an essential characteristic of a crystal state and, if any, the long range regularity is very weak.
Therefore, hereinafter, "a state where the recording film takes on an amorphous atomic arrangement when a part of the film heated higher than the melting point is cooled rapidly" is referred to as an amorphous state, as before. Furthermore, in a case where the recording film is held in the temperature range of crystallization temperature below the melting point for longer than a specific time, if its initial state is crystal, the film remains crystalline, whereas if its initial state is amorphous, the film crystallizes (solid state erasing mode). Depending on the material of the recording film, a method of crystallizing the recording film involves heating the vicinity of the amorphous part of the recording film higher than the melting point and melting the film and then cooling the film slowly (melting erasing mode).
The principle of the phase-change recording medium is such that, since the intensity of reflected light from the amorphous portion differs from that from the crystal portion, the strength and weakness of the reflected light is converted into the strength and weakness of an electric signal and further the electric signal is A/D converted, thereby reading information.
A method may be used which performs recording and reading information by using not only a phase change between crystal and amorphous material but also the transition between a metastable crystal phase, such as a martensite phase, and a stable crystal phase, or the transition between a plurality of metastable crystal phases.

(Method of achieving high density)

There are two methods for increasing the amount of information recordable on a single recording medium, or the recording capacity. One method is to miniaturize the pitch of recording marks in the direction of the track. As the pitch is miniaturized further, it reaches a range smaller than the size of the optical beam, which might causes a case where two recording marks are included in the reproducing beam spot temporarily. When the recording marks are separated from each other sufficiently, the reproduced signal is modulated greatly, producing a signal with a large amplitude. When the recording marks are close to each other, the reproduced signal has a small amplitude, making an error liable to occur in converting the signal into digital data.
Another method of improving the recording density is to make the track pitch narrower. With this method, the recording density can be increased without being strongly affected by a decrease in the signal intensity due to the miniaturization of mark pitches. However, this method has a problem: the information in a track deteriorates, or cross erase takes place, in an area where the track pitch is almost equal to or smaller than the size of the optical beam, while the adjacent tracks are being written into or erased from.
The causes of cross erase are that the marks are irradiated directly by the outer edge of the laser beam on the adjacent track and that the shape of the marks deteriorates as a result of, during recording, the flow of heat to the adjacent tracks and raising the mark temperature at the adjacent tracks. Solving these problems is required to achieve a higher-density phase-change recording medium. Moreover, to read more microscopic marks accurately and minimize the probability of reading errors, it is necessary to make the outer edge of the formed recording marks smooth to suppress the noise component as much as possible.

(Larger capacity using multilayer medium)

Still another method of achieving larger capacity is to provide a plurality of layers for storing information and stack them one on top of another. This method has been disclosed in Jpn. Pat. Appln. KOKAI Publication No. 2000-322770. A medium so designed that two layers are stacked one on top of the other and reading and writing can be done from one side is called a single-sided, dual-layer medium, or simply a dual-layer medium. In a single-sided, dual-layer medium, when an information layer provided farther away from the light incident side (hereinafter, referred to as L1) is accessed, an information layer provided closer to the light incident side (hereinafter, referred to as L0) is required to secure a transmittance of about 50% or more to prevent light from being attenuated more than necessary at L0. To do this, it is necessary to make the recording film very thin, or as thin as 10 nm or less, at L0.

As a result of making the film thinner, the holding time required for crystallization lengthens, which permits some of the information to remain undeleted at a normal rewriting speed. To overcome this problem, Proceedings of the 12th Phase-Change Recording Workshop Symposium (PCOS 2000), pp. 36-41, has disclosed that a method of replacing a part of the GeSbTe recording film with Sn is effective. Similarly, Jpn. Pat. Appln. KOKAI Publication No. 2001-232941 has disclosed that a method of replacing a part of the GeSbTe recording film with Bi, In, Sn, Pb is effective in overcoming the above problem. However, to secure the erasing range, improving only the recording film material is insufficient. It is necessary to provide a film which has the effect of enhancing crystallization at the interface with the recording film. Although Proceedings of the 12th Phase-Change Recording Workshop Symposium (PCOS 2000), pp. 36-41, has shown that germanium nitride (GeN) is available for "an interface film with a crystallization enhancing effect", the result of examinations carried out by the inventors of this application has shown that a combination of an ultrathin film of the recording film material as thin as 10 nm or less and a conventional interface film material, such as GeN, permitted cross erase to occur, preventing sufficient narrowing of the track pitch. Moreover, the result of examinations carried out by the inventors of this application has shown that silicon carbide (SiC) whose crystallization enhancing function had been reported had a large optical attenuation coefficient at a laser light wavelength of 405 nm used in the next-generation high-density optical disk and therefore suffered a very large optical loss. In addition, it has also been found that germanium nitride (GeN) and silicon nitride ($SiN_x$) have optical losses. It has therefore become clear that a medium with no interface film enabled the recrystallization of the melted part to be suppressed and therefore cross erase to be kept low, but the erase ratio (ER) was entirely insufficient.

(High-speed recording method)

Another demand placed on phase-change optical recording is high-speed recording. For example, in video recording, if recording can be done in a shorter time than the actual viewing time, it is easy to realize a time shift function of turning back the clock in dubbing distribution mediums or in recording broadcasts and viewing the previous images. One factor which prevents high-speed recording in phase-change recording is the problem of information being partially erased and remaining behind in performing crystallization with a laser beam at a relatively low erasing level at the time of overwriting, that is, an insufficient erase ratio problem. This problem arises because the recording marks pass through the laser spot at such a high speed that the information is not held in a crystallizable temperature region for a sufficiently long time, which permits the information to be partially erased and remain behind.

Jpn. Pat. Appln. KOKAI Publication No. 11-213446 has disclosed a method of providing materials, including GeN, at the interface with a recording film to speed up crystallization, thereby increasing the erasing speed. The inventors of this application conducted an experiment using the material disclosed in Jpn. Pat. Appln. KOKAI Publication No. 11-213446 as an interface film without controlling the state of the recording film or the interface state. The result of the experiment has shown that a part of the melted part recrystallized at the time of recording, that is, making the necessary size of a recording mark region larger than the mark to be melted. Use of such an interface film causes a region larger than necessary to be melted, contributing to the cross erase described above, which has the opposite effect from a high-density recording viewpoint. In other words, when recording is carried out with laser power in the allowable range from a cross erase viewpoint, the width of the formed recording mark becomes narrower, which causes a problem: the ratio of the obtained signal-to-noise ratio (CNR) decreases. It has thus become clear that a medium without an interface film enables the recrystallization of the melted part to be suppressed and cross erase to be kept low, but has an entirely insufficient erase ratio. Therefore, a new interface film material has been demanded that enables the crystallization speed in erasing to be increased and the recrystallization of the melted part in recording to be suppressed.

(Film design of phase-change recording medium)

As explained in the principle of phase-change optical recording, in a phase-change recording medium, an amorphous mark is formed (or data is written) in a desired part of a recording film by the irradiation of a laser pulse, or conversely, the data is erased by irradiating a low-power laser beam onto the amorphous mark to crystallize the mark. In writing data, the part irradiated with the laser beam is cooled rapidly, thereby forming an amorphous mark. In erasing the data, the amorphous part is cooled slowly, thereby crystallizing the amorphous part. If the laser absorption factor of the recording film part is large, a recording or an erasing operation can be carried out with low laser power. Conversely, if the laser absorption factor is small, high laser power is required for recording or erasing. The absorption factor of the recording film is determined by the optical characteristics and thermophysical characteristics of each of the film materials of a medium composed of a multilayer film. For example, even if the absorption factor is the same, the configuration can be changed according to the selection of film materials, which enables a rapid cooling structure and a slow cooling structure to be formed or thermophysical anisotropy to be produced in the in-plane direction and cross-sectional direction of the film.

Specifically, the film design of a phase-change recording medium includes optical design and thermal design. Optical design requires an understanding of the optical characteristic of each thin film and thermal design needs an understanding of thermophysical properties, including the melting point, melting latent heat, crystallization temperature, and others of each film. The optical constants of a thin film can be measured using an instrument, such as an ellipsometer. Some studies have suggested that the thermophysical properties of a thin film on the order of nanometers differ from those of a bulk. However, deference between the thermophysical properties of a thin film and those of a bulk could not be measured systematically without the effects of other factors. Thus, to compensate for the effects of other factors to grasp the thermophysical properties of a thin film, experimental parameters were required for thermal design and analysis. Further, there are no methods of measuring the interface (or boundary) thermal resistance between thin films on the order of nanometers. The inventors of this application have made a keen examination of these problems and established a thermal design method of taking into account the thermophysical properties of a thin film measured by a higher-accuracy method in thermal design and the interface thermal resistance between thin films, with the result that the inventors have completed the invention.

(Interface layer material)

Jpn. Pat. Appln. KOKAI Publication No. 2003-6794 has disclosed the technique for mixing several oxides, including Ta205, with carbide or nitride to obtain a sulfur (S)-free protective film material as a well-known technique for providing an interface layer material with a crystallization enhancing function, in addition to GeN. The object of Jpn. Pat. Appln. KOKAI Publication No. 2003-6794 is to improve on the current DVD which mainly uses a laser diode with a wavelength of A = 650 nm. The material disclosed in Jpn. Pat. Appln. KOKAI Publication No. 2003-6794 becomes opaque with a next-generation blue laser diode ($\lambda$ = 405 nm), making the optical loss larger. Therefore, the next-generation high-density medium has a problem. Similarly, the aforementioned GeN is opaque at $\lambda$ = 405 nm, making the optical loss larger.

Furthermore, Jpn. Pat. Appln. KOKAI Publication No. 2003-323743 has disclosed the technique related to $(ZrO2)_M(Cr2O3)_{100-M}$, that is, the Zr-Cr-O series, as a well-known technique for an interface layer material containing ZrO2. Although a material of this family is mixed with Cr2O3, it is known that the material has a very large attenuation coefficient in the visible wavelength range. Therefore, even if a small amount of the material is mixed into the film, the thin film has a relatively large attenuation coefficient.

(Recording film material family)

As described above, since the melting erasing mode is used in an erasing step in a eutectic recording film, its cap layer is not required to have a crystallization enhancing function. Therefore, the details, including film materials and maicro-structures, were not examined. In addition, since the melting erasing mode is used for the eutectic series, it is very difficult to record and reproduce information into and from both a land (L) and a groove (G), that is, do land-groove recording. Accordingly, the eutectic series is at a great disadvantage in making the recording density higher.

In contrast, a so-called pseudo-binary-series recording film material, such as Ge2Sb2Te5, has the property of performing the phase transition from amorphous to crystalline at high speed in the solid phase (solid-phase erasing mode). When the recording film is thin, the time required for crystallization becomes longer. Thus, it is necessary to increase the crystallization speed by controlling the state of the recording film or use an interface layer material with a crystallization enhancing function. By doing this, land-groove recording can be realized higher density media.

As described above, phenomenological and crystallographic knowledge of recording films and interface layer materials using the phase-change method or thermophysical and chemical knowledge of bulks has been accumulated in very large amounts and applied to the research and development of and the design of mediums. However, there are no studies from a microscopic viewpoint or information on the electronic state of the material or the like at present.

As for GeTe, which has various problems when being used as a phase-change recording film material and therefore is considered to be hardly used, S.K. Bahl, et al. attempted to examine the electronic state (J. Appl. Phys., Vol. (1970) p. 2196). In the study, S.K. Bahl, et al. attempted to estimate rough changes in the band structures of the crystalline state and amorphous state on the basis of a simple band model from an electron transport phenomenon, such as the temperature dependence of electric resistivity. However, because the estimation was based on the simple band model and the experimental data was obtained from only an electron transport phenomenon, they did no more than propose a very simple band model. Therefore, they made no contribution to applications to phase-change recording mediums.

Furthermore, as for one of the materials usable for phase-change recording mediums, Ogawa, et al. attempted to estimate the electronic state of Ge2Sb2Te5 by calculation (Proceedings of the 9th Phase-Change Recording Workshop Symposium (PCOS 1997), pp. 50-53). In this case, too, although they attempted to do a trial calculation of the band structures from the crystal structure on the basis of the temperature dependence of electric resistivity and the like, they could not compare the calculation result with the experimental result and failed to apply the material to phase-change recording mediums.

In Jpn. Pat. Appln. KOKAI Publication No. 2000-322770, Jpn. Pat. Appln. KOKAI Publication No. 2001-232941, Jpn. Pat. Appln. KOKAI Publication No. 11-213446, Jpn. Pat. Appln. KOKAI Publication No. 2003-6794, Jpn. Pat. Appln. KOKAI Publication No. 2003-323743, or Proceedings of the 12th Phase-Change Recording Workshop Symposium (PCOS 2000), pp. 36-41), J. Appll. Phys. Vol. (1970) p. 2196, or Proceedings of the 9th Phase-Change Recording Workshop Symposium (PCOS 1997), pp. 50-53, a phase-change information recording medium capable of high-speed, high-density recording has a recrystallization problem in the melted area at the time of recording, with the result that cross erase liable to be an obstacle to land-groove recording tends to take place. Moreover, it is difficult to realize a high-density, large-capacity phase-change recording medium which provides a high contrast between crystalloid and amorphous material even with a short wavelength laser beam ($\lambda$ = 405 nm or less) to secure CNR sufficiently, has a sufficiently high erase ratio at high linear velocity, excels in the overwrite (OW) cycle characteristic and environment resistance, and is capable of high-speed overwriting.

An object of the invention is to therefore provide a high-density, large-capacity phase-change recording medium capable of high-speed overwriting.

According to one aspect of the invention, there is provided an optical recording medium so configured that the elements constituting the recording film have a segregation or a concentration distribution in the direction of the thickness of the recording film from a region in contact with the recording film, or in the in-plane direction of the recording film.

The invention can be more fully understood from the following detailed description when taken in conjunction with the accompanying drawings, in which:

FIG. 1 is a diagram to help explain an example of the sectional structure of an optical recording medium according to an embodiment of the invention;

FIG. 2 shows an example of the configuration of a sample used in measuring the DOS for the valance band of a recording film;

FIG. 3 is a diagram to help explain a manufacturing apparatus for optical recording mediums (or phase-change optical disks) according to the embodiment;

FIG. 4 is a flowchart to help explain the manufacturing processes of optical recording mediums (or phase-change optical disks) according to the embodiment;

FIGS. 5A, 58, and 5C are diagrams showing a state where the elements (including Ge and Te) constituting the recording film of the optical recording medium (or phase-change optical disk) according to the embodiment have a segregation or a concentration distribution;

FIG. 6 is a table showing an example of the materials of an interface layer (upper interface film and/or lower interface film) of the optical recording medium (or phase-change optical disk) according to the embodiment;

FIG. 7 is a table exemplifying the composition ratio of Ge and N when GeN is used as a material for the interface layer;

FIG. 8 is a table showing an example of the materials of a recording film (L0 and/or L1) of the optical recording medium (or phase-change optical disk) according to the embodiment;

FIG. 9 is a table to help explain comparative examples 1 to 3 when there is no interface layer and when Si02 and Y203 are used for an interface layer;

FIG. 10 is a table exemplifying the result of measuring the ratio of the density of state (DOS) for the crystalline state to the DOS of the amorphous state (the DOS of the crystalline state/the DOS of the amorphous state: for example, au11/au12 in FIG. 20) at an energy level 0.5 [eV] lower than the top of the DOS for the valence band of the recording film, for combinations of various interface layer materials;

FIG. 11 is a table exemplifying the result of measuring the ratio of the DOS of the crystalline state to the DOS of the amorphous state (the DOS of the crystalline state/the DOS of the amorphous state: for example, au01/au02 in FIG. 19) for combinations of interface layer materials (including a case where no interface layer is used) different from those of FIG. 10;

FIG. 12 is a table exemplifying the condition for evaluation when a recording film is evaluated in a land-groove recording method;

FIG. 13 is a table exemplifying a result (CNR, SbER, ER) of evaluating a recording film for a plurality of samples;

FIG. 14 is a table exemplifying another result (erase ratio ER when the linear velocity is changed) of evaluating a recording film for a plurality of samples;

FIG. 15 is a table exemplifying the result (CNR, SbER) of evaluating recording films with various compositions;

FIG. 16 is a table exemplifying the result (CNR, SbER) of evaluation when a small amount of N is added to recording films with various compositions;

FIG. 17 is a table exemplifying a result (CNR, SbER, ER) of evaluating comparative examples 1 to 3 when no interface layer is used and when SiO2 and Y2O3 are used for an interface layer;

FIG. 18 is a table exemplifying another result (ER when the linear velocity is changed) of evaluating comparative examples 2 and 3 when SiO2 and Y2O3 are used for an interface layer;

FIG. 19 is a diagram to help explain the ratio of the DOS of the crystalline state to the DOS of the amorphous state (the DOS of the crystalline state/the DOS of the amorphous state) at an energy level 0.5 [eV] lower than the top of the DOS for the valence band of the recording film, when there is no interface layer;

FIG. 20 is a diagram to help explain the ratio of the DOS of the crystalline state to the DOS of the amorphous state (the DOS of the crystalline state/the DOS of the amorphous state) at an energy level 0.5 [eV] lower than the top of the DOS of the valence band of the recording film, when there is an interface layer;

FIG. 21 is a GeSbTe ternary phase diagram to help explain a favorable composition range of the recording film of an optical recording medium according to an embodiment of the invention;

FIG. 22 is a GeBiTe ternary phase diagram to help explain a favorable composition range of the recording film of an optical recording medium according to an embodiment of the invention;

FIG. 23 is a Ge/Sn-Sb/Bi-Te ternary phase diagram to help explain a favorable composition range of the recording film of an optical recording medium according to an embodiment of the invention (when Ge and/or Sb is replaced with Sn, In (not show) and/or Bi in FIG. 21);

FIG. 24 is a diagram to help explain the configuration of an information recording and reproducing apparatus according to an embodiment of the invention;

FIG. 25 is a diagram to help explain an example of a signal processing circuit using a PRML detecting method;

FIG. 26 is a diagram to help explain the configuration of a Viterbi decoder according to an embodiment of the invention;

FIG. 27 is a diagram to help explain an example of state transition in PR (1, 2, 2, 2, 1) class;

FIG. 28 is a diagram to help explain an example of the structure and dimensions of an optical recording medium (or phase-change optical disk) according to an embodiment of the invention;

FIG. 29 is a diagram to help explain a method of setting physical sector numbers in a rewritable information storage medium or a reproduce-only information storage medium with a single-layer structure;

FIGS. 30A and 30B are diagrams to help explain a method of setting physical sector numbers in a reproduce-only information storage medium with a two-layer structure;

FIG. 31 is a diagram to help explain a method of setting physical sector numbers in a rewritable information storage medium;

FIG. 32 is a table to help explain an example of general parameter values in a rewritable information storage medium (20-GB-per-single-layer single-sided type);

FIGS. 33A, 33B, 33C, 33D, 33E, and 33F are diagrams to help explain comparative examples of the data structure of the data area DTA and data lead-out area DTLDO in each type of information storage medium;

FIGS. 34A and 34B are diagrams to help explain an example of the waveform (write strategy) of recording pulses used in doing trial writing on a drive test zone;

FIG. 35 is a diagram to help explain an example of defining the shape of recording pulses;

FIGS. 36A, 36B, 36C, and 36D are diagrams to help explain an example of the data structure of the control data zone CDZ and R physical information zone RIZ;

FIG. 37 is a diagram to help explain an example of the contents of physical format information and R physical format information;

FIG. 38 is a diagram to help explain the outline of the procedure for conversion in configuring a physical sector structure;

FIG. 39 is a diagram to help explain an example of the structure of a data frame;

FIG. 40 is a diagram to help explain an example of the structure of an ECC block;

FIG. 41 is a diagram to help explain a frame arrangement after scrambling;

FIG. 42 is a diagram to help explain a PO interleaving method;

FIGS. 43A and 43B are diagrams to help explain an example of the structure of a physical sector;

FIG. 44 is a diagram to help explain an example of the configuration of a modulation block;

FIGS. 45A, 45B, 45C, and 45D are diagrams to help explain comparative examples of the data recording formats of the individual information storage mediums;

FIGS. 46A and 46B are diagrams to help explain an example of the comparison of the data structure of each type of information storage medium with that of a conventional equivalent;

FIG. 47 is a diagram to help explain an example of the comparison of the data structure of each type of information storage medium with that of a conventional equivalent;

FIGS. 48A, 48B, 48C, 48D, 48E, and 48F are diagrams to help explain a method of recording rewritable data to be recorded on a rewritable information storage medium;

FIG. 49 is a diagram to help explain an example of a data random shift of rewritable data written on a rewritable information storage medium;

FIG. 50 is a diagram to help explain a method of additionally writing recordable data to be recorded on a recordable information storage medium;

FIG. 51 is a diagram to help explain a detailed structure of an ECC block after PO interleaving;

FIGS. 52A, 52B, and 52C are diagrams to help explain an example of recording condition parameters expressed as a function of a mark length and a preceding space length;

FIG. 53 is a diagram to help explain another method of additionally writing recordable data to be recorded on a recordable information storage medium;

FIG. 54 is a table to help explain an example of the values of general parameters in a reproduce-only information storage medium (of the 15-GB single-sided, single-layer type and of the 30-GB single-sided, dual-layer type);

FIG. 55 is a table to help explain an example of the values of general parameters in a recordable information storage medium (of the 15-GB single-sided, single-layer type);

FIG. 56 is a table to help explain an example of the values of general parameters in a recordable information storage medium (of the 30-GB single-sided, dual-layer type);

FIG. 57 is a table to help explain an example of the contents of physical format information, R physical format information, and updated physical format information; and

FIG. 58 is a flowchart to help explain the processing when digital video information (including TV broadcast programs) is recorded or reproduced using the optical recording medium of FIG. 1.

Various embodiments according to the invention will be described hereinafter with reference to the accompanying drawings.

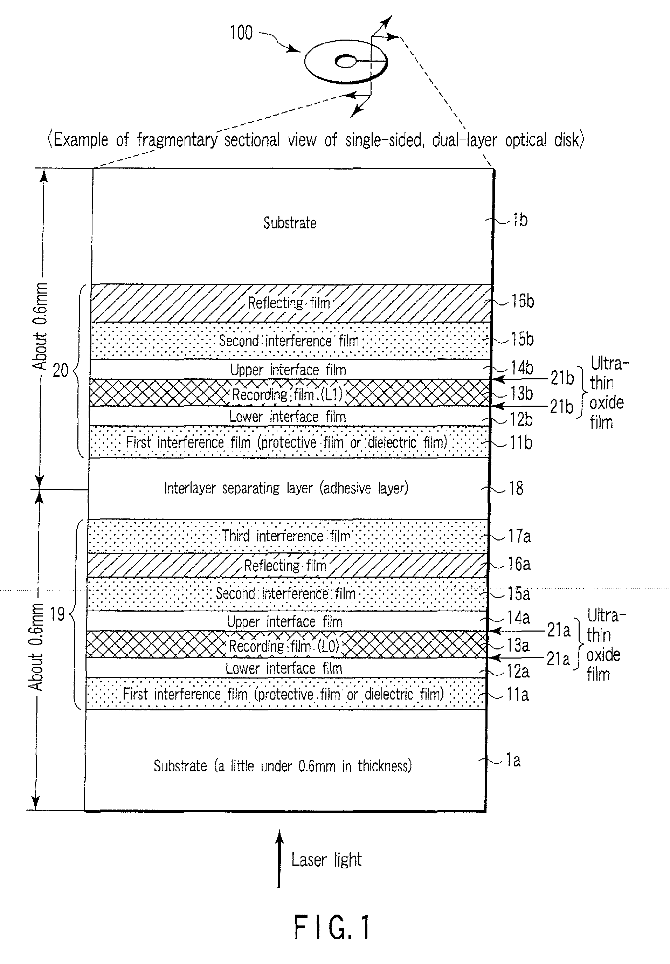

Hereinafter, referring to the accompanying drawings, embodiments of the invention will be explained. FIG. 1 shows an example of the configuration of the layers of an optical recording medium (RW- or RAM-type phase-change recording optical disk) 100 according to an embodiment of the invention. The optical recording medium 100, which is a multilayer optical disk with a plurality of information layers (here, two layers, L0 and L1), includes an L0 information layer 19, an interlayer separating layer (or adhesive layer) 18, an L1 information layer 20 when viewed from the laser light incident side. The L0 information layer 19 is composed of a first interference film (also called protective film or dielectric film -- the same holds hereinafter) 11a, a lower interface film 12a, an L0 recording film 13a, an upper interface film 14a, a second interference film 15a, a reflecting film 16a, and a third interference film 17a stacked one on top of another in that order on a substrate 1a transparent to laser light to be used (or a short-wavelength laser beam whose wavelength is 405 nm or less). The L1 information layer 20 is composed of a reflecting film 16b, a second interference film 15b, an upper interface film 14b, an L1 recording film 13b, a lower interface film 12b, and a first interference film 11b stacked one on top of another in that order in the opposite direction on a transparent substrate 1b. The optical recording medium (RW- or RAM-type phase-change recording optical disk) 100 of the embodiment has a structure that has a first interference film of the L1 information layer 20 and a third interference film 17 of the L0 information layer 19 bonded together with the interlayer separating layer 18 as an adhesive.

The stacked structure (19) of the L0 information layer also assumes the role of a dielectric film (ZnS-SiO2 or the like: 17a) where the third interference layer contributes to optical enhancement and/or thermal diffusion.

An ultrathin oxide film 21a is formed to a specific thickness (an average thickness of about 0.1 nm to 1.0 nm) on at least one (preferably both) of the upper and lower surfaces of the L0 recording film 13a. An ultrathin oxide film 21b is formed to a specific thickness (an average thickness of about 0.1 nm to 1.0 nm) on at least one (preferably both) of the upper and lower surfaces of the L1 recording film 13b. These ultrathin oxide films 21a, 21b are made up of the same constituent elements (Ge, Te, and the like) as those of the recording films 13a, 13b.

In FIG. 1, the component parts shown by the same reference numerals except for suffixes a, b, in principle, indicate component parts with similar functions. For example, the L0 recording film 13a differs physically from the L1 recording film 13b in component parts, but they are similar to each other in the function of recording information. Although the first interference layers 11a and 11b are similar to each other in a dielectric film, they are not necessarily similar to each other in the function of a protective film (thus, expressed as "protective film or dielectric film"). That is, in a state where the L1 information layer 20 is formed on the substrate 1b (before being laminated with the adhesive layer 18), the first interference layer 11b can function as a protective layer (for the recording film). However, in a state where the L0 information layer 19 is formed on the substrate 1a, the first interference layer 11a need not function as a protective layer (because the substrate 1a covers the first interference layer 11a). In this case, before being bonded with the adhesive layer 18, it is more likely that the third interference layer 17a will function as a protective layer. Although the term "film" in interference film, interface film, and others may be called "layer" as needed, there is basically no difference between them. Moreover, the reference numerals without suffixes a, b indicate equivalency to those with the suffixes a, b (for example, in the case of the interference layer 11, it indicates equivalency to 11a or 11b).

The configuration of the phase-change recording medium of the embodiment is not limited to what is shown in FIG. 1. For example, another dielectric film (not shown) may be provided between the second interference layer 15a (or 15b) and the reflecting film 16a (or 16b). All of the interference layers (11a, 11b, 15a, 15b, 17a, 17b) may be replaced with the material of the interface films (12a, 12b or 14a, 14b) and the interference layers may be eliminated. The reflecting film (16a or 16b) may be composed of a plurality of metal films stacked one on top of another. On the reflecting film (16a or 16b), an additional dielectric film (not shown) may be provided.

In the case of a two-layer medium as shown in FIG. 1, the first information layer (L0 information layer) 19 side close to the light incident face configured as described above and the second information layer (L1 information layer) 20 side far away from the light incident face are formed. These are bonded together with the adhesive layer 18, thereby separating the layers. The same holds true for a multilayer medium with three layers or more (although not shown, when an information layer includes three layers, a second interlayer separating layer and an L2 information layer are further stacked between the substrates 1a and 1b of FIG. 1; and when an information layer includes four layers, a second and a third interlayer separating layer and an L2 and an L3 information layer are further stacked between the substrates 1a and 1b of FIG. 1).

Furthermore, the medium may be such that various films are formed on the substrate 1a and/or 1b and, to the resulting film, a thin transparent sheet (not shown) of about 0.1 mm thick is laminated, and light is caused to enter via the transparent sheet (this type of medium is based on the assumption that an objective lens with a high NA of about 0.85 is used). The reason is that, even if a thin transparent cover layer of about 0.1 mm thick is used on the light incident side, this doesn't make much difference to the characteristics required for the recording film, interface layer material, protective film material, and reflecting film material used in the embodiment of FIG. 1 (when a 0.6-mm-thick transparent substrate is used).

In the embodiment, a preferred optical recording medium (or phase-change optical disk) has the following configuration and/or characteristics.

<1> A recording medium (100) which has a substrate (1a, 1b) and a stacked structure (19, 20) that includes an interference layer (protective film or dielectric film: 11a, 11b), a recording film (13a, 13b) capable of changing an atomic arrangement reversibly, a crystallization enhancing film (12a, 12b/14a, 14b) in contact with the recording film, and a reflecting film (16a, 16b) and which enables the recording film (13a, 13b) to be recorded into or erased from reversibly with light, the recording medium being so configured that the elements (including Ge and Te) constituting the recording film (13a, 13b) have a segregation or a concentration distribution in the direction of the thickness of the recording film (or in the vertical direction of FIG. 1) from a region (place 21a, 21b) in contact with the recording film (13a, 13b), or in the in-plane direction of the recording film (or in the lateral direction or in the direction of normal line in FIG. 1: in the direction perpendicular to the thickness direction).

<2> In the region (place 21a, 21b) in contact with the recording film (13a, 13b), there is provided an ultrathin oxide film (21a, 21b) with an average thickness of 0.1 nm or more and 1 nm or less made up of the constituent elements (including Ge and Te) of the recording film (13a, 13b).

<3> The stacked structure (19) includes a dielectric film (ZnS-SiO2 or the like: 11a, 15a, 17a) which contributes to optical enhancement and/or thermal diffusion.

<4> The inteference film (protective film or dielectric film: for example, 11b of FIG. 1) functions as a protective film for the recording film (e.g., 13b of FIG. 1).

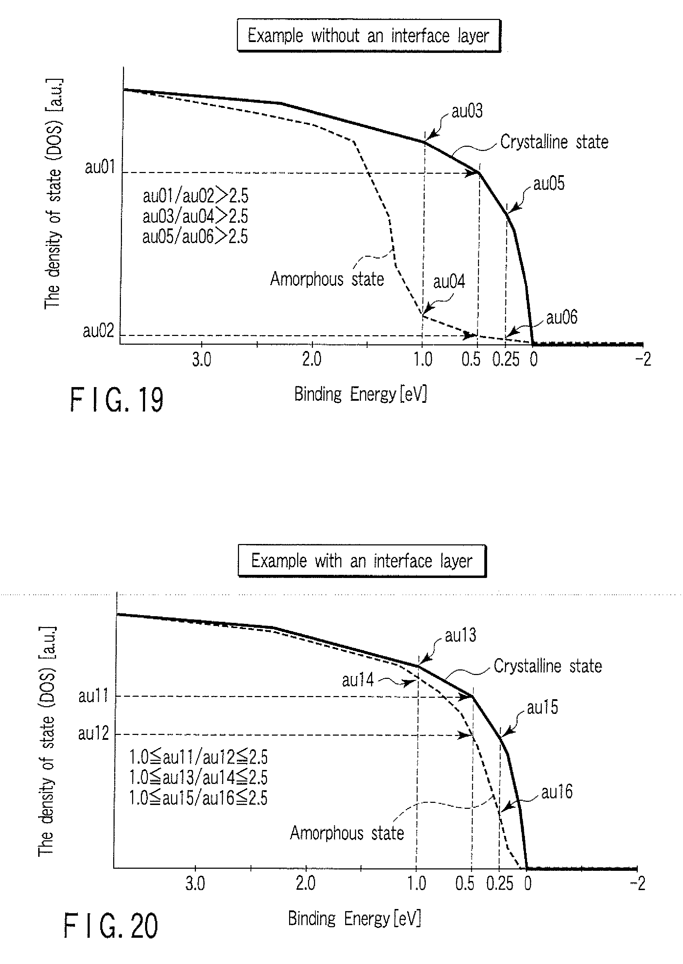

<5> The optical recording medium is so configured that the ratio of the DOS of the crystalline state to the DOS of the amorphous state (the DOS of the crystalline state/the DOS of the amorphous state: for example, au11/au12 in FIG. 20) at an energy level 0.5 [eV] lower than the top (where Binding Energy is 0 [eV] in FIG. 20) of the DOS for the valence band of the recording film (13a, 13b) is 1.0 or more and 2.5 or less.

<6> The optical recording medium is so configured that the ratio of the DOS of the crystalline state to the DOS of the amorphous state (the DOS of the crystalline state/the DOS of the amorphous state: for example, au13/au14, au15/au16 in FIG. 20) at an energy level 0.25 to 1.0 [eV] lower than the top (where Binding Energy is 0 [eV]) of the DOS for the valence band of the recording film (13a, 13b) fits in the range of 1.0 to 2.5. The energy of the top of the valence band is expressed as Binding Energy = 0 [eV] by convention in making a measurement using XPS or the like. This does not mean that Binding Energy between atoms, or the binding energy, is zero. The energy level of the valence band using XPS or the like can be corrected using a known standard peak as a reference.

<7> The optical recording medium is so configured that the crystallization enhancing film (12a, 12b/14a, 14b) is composed of an upper interface film (14a, 14b) in contact with one face of the recording film (13a, 13b) and a lower interface film (12a, 12b) in contact with the other face of the recording film (13a, 13b) and the upper interface film (14a, 14b) and lower interface film (12a, 12b) are so controlled that the crystallization speed over the recording film (13a, 13b) differs from that under the recording film (13a, 13b).

<8> The optical recording medium is so configured that the crystallization enhancing film (12a, 12b/14a, 14b) is composed of an upper interface film (14a, 14b) in contact with one face of the recording film (13a, 13b) or a lower interface film (12a, 12b) in contact with the other face of the recording film (13a, 13b) and the upper interface film (14a, 14b) and lower interface film (12a, 12b) are so controlled that the crystallization speed over the recording film (13a, 13b) differs from that under the recording film (13a, 13b).

<9> The crystallization enhancing film (12a, 12b/14a, 14b) may be configured to include germanium nitride (GeN), germanium-chrome nitride (GeCrN), zirconium oxide (ZrO2), stabilized zirconia + chrome oxide (ZrO2+Cr2O3), stabilized zirconia + silicon oxide + chrome oxide (ZrO2+SiO2+Cr2O3), zircon + chrome oxide (ZrSiO4 + Cr2O3), or hafnium oxide (HfO2). Alternatively, the crystallization enhancing film may be composed of a compound ($HfO_{2-x}N_x$) containing hafnium (Hf), oxygen (O), and nitrogen (N). Alternatively, the crystallization enhancing film may be composed of a film $((ZrO_{2-x}N_x)_{1-y}((Y_2O_3)_{1-z}(Nb_2O_5)_z)_y$ where z = 0) containing zirconium (Zr), oxygen (O), nitrogen (N), and yttria (Y). Alternatively, the crystallization enhancing film may be composed of a film $((ZrO_{2-x}N_x)_{1-y}((Y_2O_3)_{1-z}(Nb_2O_5)_z)_y$ where z = 1) containing zirconium (Zr), oxygen (O), nitrogen (N), and niobium (Nb). Alternatively, the crystallization enhancing film may be composed of a film $((ZrO_{2-x}N_x)_{1-y}((Y_2O_3)_{1-z}(Nb_2O_5)_z)_y$ where $0 \leq z \leq 1$) containing zirconium (Zr), oxygen (O), nitrogen (N), yttria (Y), and niobium (Nb). Alternatively, the crystallization enhancing film may be configured to include chrome oxide (Cr2O3), zinc oxide (ZnO), zinc oxide + tantalum oxide (ZnO+Ta2O5), zinc oxide + tantalum oxide + indium oxide (ZnO+Ta2O5+In2O3), tin oxide (SnO2), tin oxide + antimony oxide (SnO2+Sb2O3), tin oxide + tantalum oxide (SnO2+Ta2O5), or tin oxide + niobium oxide (SnO2+Nb2O5).

Here, zirconium oxide (ZrO2) in the embodiment is referred to as stabilized zirconium, usually expressed as ZrO2+Y2O3. The concentration of Y2O3 may be about 3 to 5 mol.%. The stabilized zirconium is not limited to ZrO2+Y2O3. For instance, ZrO2+Nb2O5 or ZrO2+MgO may be used as the stabilized zirconium. Use of only Zr02 permits a rapid change in the thermal expansion coefficient due to phase transition of the crystal structure caused by temperature change, which causes various problems. Here, zirconium oxide (ZrO2) improved variously to alleviate the problems or virtually avoid them is referred to as stabilized zirconium.

<10> One of the upper interface film (14a, 14b) and lower interface film (12a, 12b) between which the recording film (13a, 13b) is sandwiched may be configured to include germanium nitride (GeN), germanium-chrome nitride (GeCrN), zirconium oxide (ZrO2), stabilized zirconia + chrome oxide (ZrO2+Cr2O3), stabilized zirconia + silicon oxide + chrome oxide (ZrO2+SiO2+Cr2O3), zircon + chrome oxide (ZrSiO4+Cr2O3), or hafnium oxide (HfO2). Alternatively, the upper or lower crystallization enhancing film may be composed of a compound ($HfO_{2-x}N_x$:$0.1 \leq x \leq 0.2$) containing hafnium (Hf), oxygen (O), and nitrogen (N). Alternatively, the upper or lower crystallization enhancing film may be composed of a film $((ZrO_{2-x}N_x)_{1-y}((Y_2O_3)_{1-z}(Nb_2O_5)_z)_y)$ where z = 0) containing zirconium (Zr), oxygen (O), nitrogen (N), and yttria (Y). Alternatively, the upper or lower crystallization enhancing film may be composed of a film $((ZrC_{2-x}N_x)_{1-y}((Y_2O_3)_{1-z}(Nb_2O_5)_z)_y)$ where z = 1) containing zirconium (Zr), oxygen (O), nitrogen (N), and niobium (Nb). Alternatively, the upper or lower crystallization enhancing film may be composed of a film $((ZrO_{2-x}N_x)_{1-y}((Y_2O_3)_{1-z}(Nb_2O_5)_z)_y)$ where $0 \leq z \leq 1$) containing zirconium (Zr), oxygen (O), nitrogen (N), yttria (Y), and niobium (Nb). The other of the upper interface film (14a, 14b) and lower information film (12a, 12b) may be configured to include chrome oxide (Cr2O3), zinc oxide (ZnO), zinc oxide + tantalum oxide (ZnO+Ta2O5), zinc oxide + tantalum oxide + indium oxide (ZnO+Ta2O5+In2O3), tin oxide (SnO2), tin oxide + antimony oxide (SnO2+Sb2O3), tin oxide + tantalum oxide (SnO2+Ta2O5), or tin oxide + niobium oxide (SnO2+Nb2O5).

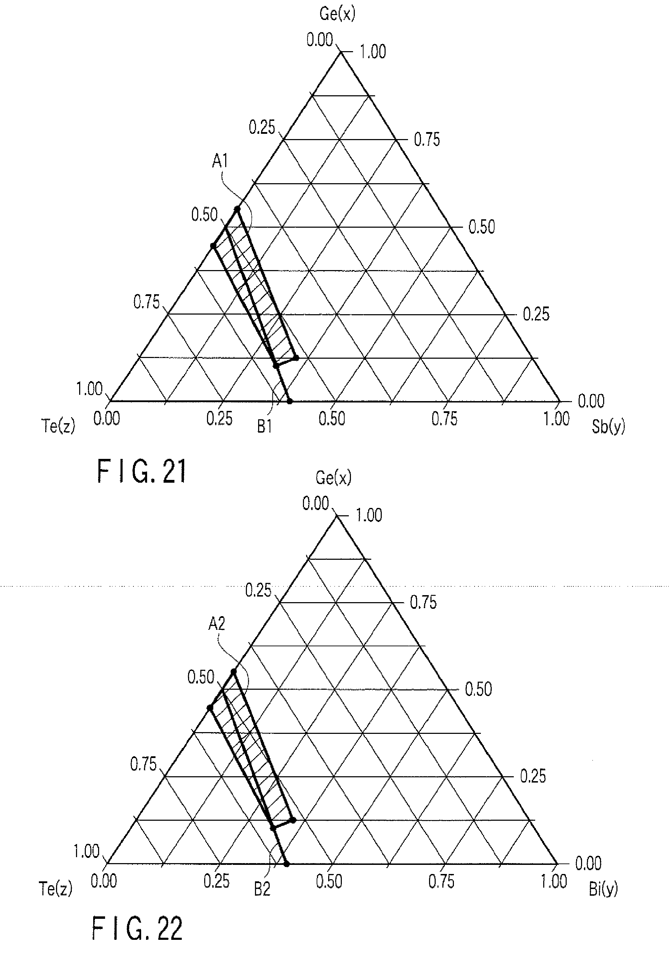

<11> The recording film (13a, 13b) may be configured to include germanium (Ge), antimony (Sb), and tellurium (Te) and, when its composition is expressed as $Ge_xSb_yTe_z$ where x + y + z = 100, to have a composition in (A1 of FIG. 21) or on (B1 of FIG. 21) the area defined by x = 55, z = 45 and x = 45, z = 55 and x = 10, y = 28, z = 42 and x = 10, y = 36, z = 54 in a GeSbTe ternary phase diagram (FIG. 21).

<12> 1 to 5 at.% of nitrogen (N) may be added to a GeSbTe-series compound with the above composition.

<13> The recording film (13a, 13b) may be configured to include at least germanium (Ge), bismuth (Bi), and tellurium (Te) and, when its composition is expressed as $Ge_xBi_yTe_z$ where x + y + z = 100, to have a composition in (A2 of FIG. 22) or on (B2 of FIG. 22) the area defined by x = 55, z = 45 and x = 45, z = 55 and x = 10, y = 28, z = 42 and x = 10, y = 36, z = 54 in a GeBiTe ternary phase diagram (FIG. 22).

<14> 1 to 5 at.% of nitrogen (N) may be added to a GeBiTe-series compound with the above composition.

<15> When a part of the composition of the recording film (13a, 13b) is replaced with bismuth (Bi) and/or indium (In) and/or tin (Sn) and the composition after the replacement is expressed as (Ge(1-w) Snw)x(Sb(1-v)(Bi(1-u) Inu) v)yTez where x + y + z = 100, the recording film may be so configured that w, v, and u in the composition satisfy the following: $0 \leq w \leq 0.5$ and $0 \leq v \leq 0.7$ and $0 \leq u \leq 1$.

<16> 1 to 5 at.% of nitrogen (N) may be added to a GeSnSbTe, a GeSnSbTeIn, a GeSbTeIn, a GeSbTeBiIn, a GeSbSnTeBiIn, a GeSbTeBi, a GeSbTeIn, a GeSnSbTeBi, and a GeSnSbTeBiIn series compound with the above composition.

Hereinafter, embodiments of a single-sided, dual-layer medium will be explained. In the measured data on a trial optical disk, the worst experimental values are shown as representative values in each of the lands (L) and grooves (G) of L0 and L1. The transmittance, reflectivity, and others of the trial optical recording medium were measured using a spectrophotometer. The concentration of each element in the thin film was measured using an analytical method, such as ICP (Induced Coupled Plasma), RBS (Rutherford back scattering), SIMS (Secondary Ion Mass Spectroscopy), TOF-SIMS, or XPS (X-ray photoelectron spectroscopy analysis). The atomic binding form in the film was clarified by XPS, IR (infrared spectroscopy) measurement, or the like. The thermal conductivity and thermal diffusivity of the thin film and the interface thermal resistance between stacked thin films were evaluated using a thermoreflectance method. The DOS for the valance band of the recording film can be measured using XPS, UPS, or HX-PES (Hard X-ray Photo Electron Spectroscopy) techniques. Information on the state density can be obtained by measuring the electronic specific heat.

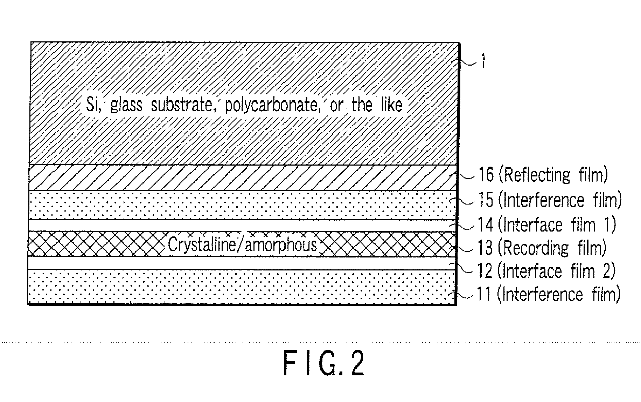

FIG. 2 shows an example of the configuration of a sample used in measuring the DOS for the valance band of a recording film. Polycarbonate (PC) or the like is used for a substrate 1 of FIG. 2. On the surface of the substrate 1 in which grooves are to be made, the following films are formed using a sputtering apparatus. In an L0 information layer (19 in FIG. 1) provided close to the laser light incident side, an interference film (ZnS-SiO2) 15, an interface layer 14, a recording film layer 13, an interface layer 12, an interference film (ZnS-SiO2) 11, and others are formed in that order. In an L1 information layer (20 in FIG. 1) provided far away from the laser light incident side, a reflecting film (Ag alloy) 16, an interference film (ZnS-SiO2) 15, an interface layer 14, a recording film layer 13, an interface layer 12b, an interference film (ZnS-SiO2) 11, and others are formed on the substrate in that order.

In the embodiment, the DOS for the valance band of the recording film is measured mostly by the HX-PES (Hard X-ray PhotoElectron Spectroscopy) method or XPS method. In measuring the DOS for the valance band of the recording film using the HX-PES method, a sample shown in FIG. 2 is used which is composed of a substrate 1, a recording film 13 capable of changing the atomic arrangement reversibly, films 11 and 14 which are in contact with the recording film 13 and have a crystallization enhancing function, a protective film 11, and a reflecting film 16. The recording film 13 is amorphous in an as depo. state. When a polycarbonate (PC) substrate is used, the recording film is crystallized (or laser-annealed) using an initializing apparatus. When a Si or glass substrate is used, the recording film can be crystallized by heating the film to a temperature higher than a crystallization temperature for a specific time with an electric furnace or the like.

The energy of the top of the DOS for the valance band corresponds to Fermi energy in a conductor. In the case of a semiconductor, the Fermi energy lies almost in the middle of the band gap between the valance band and the conduction band. Depending on whether impurities acting as acceptors are doped or impurities acting as donors are doped, a semiconductor may form a localized level, with the result that the Fermi potential goes up and down slightly.

A method of controlling the ratio of the DOS of the crystalline state to the DOS of the amorphous state (the DOS of the crystalline state/the DOS of the amorphous state) at an energy level lower than the top of the DOS for the valence band of the recording film in the crystalline state and amorphous state includes (i) changing slightly the composition of the recording film in the direction of its thickness, (ii) selecting suitably interface layer materials provided over and under the recording film and changing elements doped in minute amounts from the interface layer to the recording film (micro reaction), and (iii) providing an ultrathin oxide film whose average thickness is 0.1 nm or more and 1 nm or less and which is made up of the elements constituting the recording film in a region in contact with the recording film.

Furthermore, the crystallization speed over the recording film can be made different from that under the recording film by (i) changing slightly the composition of the recording film in the direction of its thickness and/or (ii) selecting suitably interface layer materials provided over and under the recording film and changing elements doped in minute amounts from the interface layer to the recording film.

For example, in a micro segregation model, when there is a segregation in the element Ge in a GeSbTe-series film, it is presumed that a part having much Ge and a part having less Ge, or a part having few of the other elements (including Sb and Te) and a part having many of the other elements are at the nucleus of crystallization and the recording film with a segregation has more nuclears than a recording film with no segregation, which contributes to high-speed crystallization. Since as large a segregation as phase separation has no effect, it must be as minute as a size barely found by accurate analysis. Since which of the elements has a minute segregation depends on a recording film and an interface layer to be used and their processes, control can be performed by selecting these suitably.

On the other hand, in the case of a micro reaction model or micro dope model, for example, Te is less liable to be oxidized than Ge and Bi in the GeBiTe series. That is, Ge and Bi are more liable to be oxidized than Te. For example, when a trace of Ge or Bi is oxidized, it is presumed that the unoxidized Te forms the nuclear of crystallization, or a trace of GeOx or BiOx forms the nuclear of crystallization, and therefore the recording film has more nuclears than a conventional recording film, which contributes to high-speed crystallization. Since which of the elements shows a micro reaction or is doped depends on a recording film and an interface layer to be used and their processes, control can be performed by selecting these suitably. By doing this, it is possible to make the crystallization speed over the recording film differ from that under the recording film, which is seemingly difficult to control.

(i) There are several methods of changing the composition of the recording film in the direction of its thickness. One of them is to change the amount of discharge gas and/or the magnitude of discharge power during the time from the beginning to end of sputtering. When the amount of discharge gas is changed, a method of mixing another gas during discharge is possible.

(iii) A method of providing an ultrathin oxide film (21a/21b) whose average thickness is 0.1 nm or more and 1 nm or less and which is made up of the elements (including Ge and Te) constituting the recording film in a region in contact with the recording film (13a/13b) includes a method of using very oxidative materials as materials for the interface layers (12a, 12b/14a, 14b) and a method of oxidizing the surface of the recording film (13a/13b) slightly.

The above-described reaction models from a complicated and microscopic viewpoint hardly considered in the prior art have been realized as a result of combining various analysis methods and accumulating examinations of the mechanism.

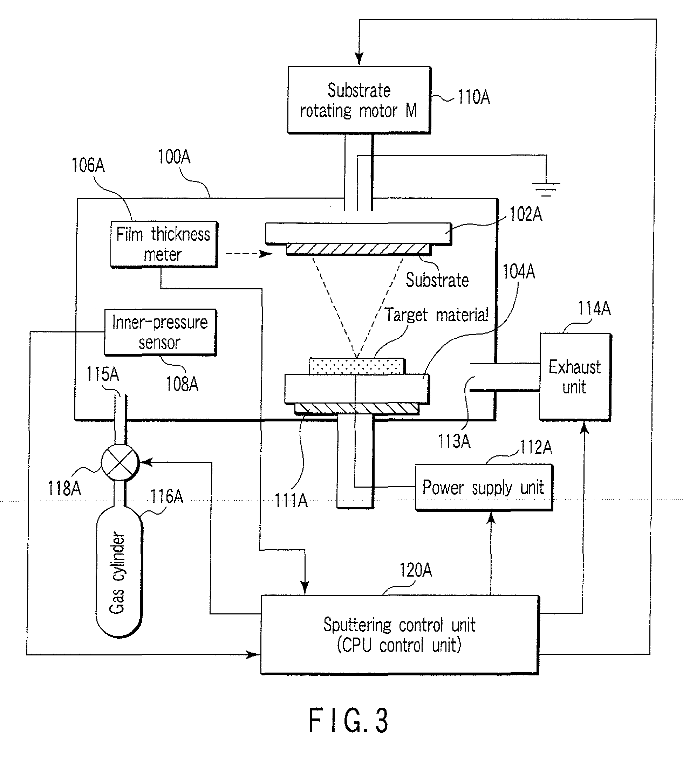

FIG. 3 is a diagram to help explain a manufacturing apparatus for optical recording mediums (or phase-change optical disks) according to an embodiment of the invention. Near the upper part of a vacuum container 100A, a PC substrate supporting disk-like rotating base 102A is provided in such a manner that the rotating surface is horizontal in the figure (or perpendicular to the sheet of paper). A PC substrate is supported on the underside of the rotating base 102A in such a manner that the substrate is rotated by a motor 110A (or the substrate may not be rotated in another embodiment).

Near the lower part of the vacuum container 100A in the figure, an anode plate 104A on which a sputtering source (or target material) is provided so as to face the rotating base 102A. On the underpart of the anode plate 104A, a magnet 111A configured to be rotatable is provided. The rotating base (or cathode plate) 102A is grounded. To the anode plate 104A, a RFpower supply unit 112A is connected in the case of RF sputtering (or a DCpower supply unit 112A is connected in the case of DC sputtering). When sputtering is done, the output voltage of the power supply unit 112A is applied between the grounded cathode plate 102A and the anode plate 104A.

The vacuum container 100A is connected via a gas exhaust port 113A to an exhaust unit 114A. When sputtering is done, a trace of sputtering gas (inert gas, such as argon, and others) is injected from a gas cylinder 116 via a gas introduction port 115A and a control valve 118A into the vacuum container 100A sufficiently evacuated by the exhaust unit 114A. The amount of sputtering gas injected is checked by an inner-pressure sensor (or vacuum gauge) 108A provided on the vacuum container 100A. The substrate rotating motor 110R, magnet 111A, sputtering power supply unit 112A, exhaust unit 114A, and control valve 118 are computer-controlled by a sputtering control unit 120A.

Above the sputtering source provided on the anode plate 104A, there is provided a monitor unit 106A having a film thickness measuring function. The CPU of the control unit 120A causes the monitor unit 106A to monitor the amount of sputtering from the sputtering source to the substrate. Specifically, while monitoring the thin film sputtered on the substrate, the CPU of the control unit 120A is programmed so as to adjust the RF power from the power supply unit 112A to the anode plate 104A so that the thin film layer may have a specific composition (or a specific film thickness). Although not shown, the vacuum container 100A of FIG. 3 has a load lock chamber and a process chamber, which are designed to function independently in sputtering.

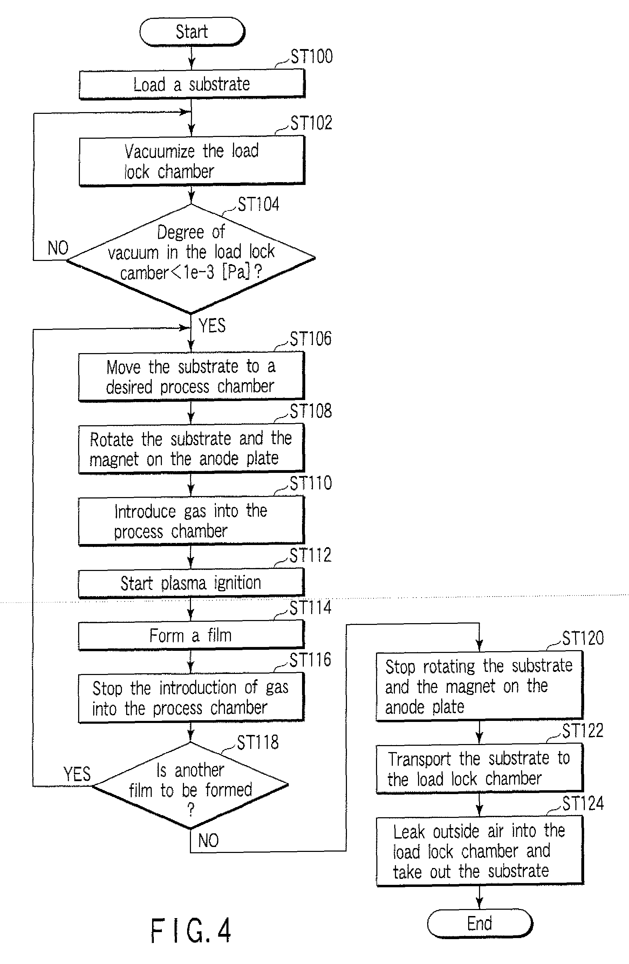

FIG. 4 is a flowchart to help explain the manufacturing processes of optical recording mediums (or phase-change optical disks) according to an embodiment of the invention. First, a substrate 1a/1b is placed on a specific part of the sputtering apparatus (manually or with a robot arm) (ST100) and the load lock chamber in the vacuum container 100A is vacuumized (ST102). When the inner-pressure sensor 108A has sensed that the degree of vacuum in the load lock chamber is equal to or below, for example, $1 \times 10^{-3}$ (Pa) (Yes in ST104), the substrate is moved to the process chamber in the vacuum container 100A (ST106). When the substrate has moved to the position facing a specific target material, the substrate on the cathode plate 102A side is rotated and at the same time, the magnet 111A on the anode plate 104A side is rotated (ST108).

Thereafter, sputtering gas is introduced from the gas cylinder 116A into the process chamber (ST110) and the power supply unit 112A is started, thereby starting plasma ignition (ST112). As a result, a thin film corresponding to the composition of the target material is formed uniformly on the substrate (ST114). When the monitor of the film thickness meter 106A has shown that a thin film of a desired thickness has been formed, the introduction of gas into the process gas chamber is stopped (ST116) and the formation of one thin film is completed.

To form another thin film on the substrate (Yes in ST118), the processes in step ST106 to step ST116 are executed again. In that case, when the composition of a thin film to be formed is changed, the target material is changed to the corresponding target material and, if necessary, the components of the gas introduced into the chamber are changed. For instance, depending on the type of a film to be formed, only argon may be used as the gas or a mixed gas of argon and nitrogen may be used.

After all of the films have been formed on the substrate (No in ST118), the rotation of the substrate on the cathode plate 102A side and the rotation of the magnet on the anode plate 104A side are stopped (ST120). Thereafter, the substrate on which the films have been formed is transported to the load lock chamber (ST122), outside nitrogen or air is leaked into the load lock chamber to release the vacuum state, and the substrate 1a/1b after the formation of the films is taken out (manually or with the robot arm) (ST124). Thereafter, the substrates 1a and 1b after the formation of the films are bonded together as shown in FIG. 1, thereby completing a single-sided multilayer optical disk (such as a high-density recording DVD-RN/RAM).

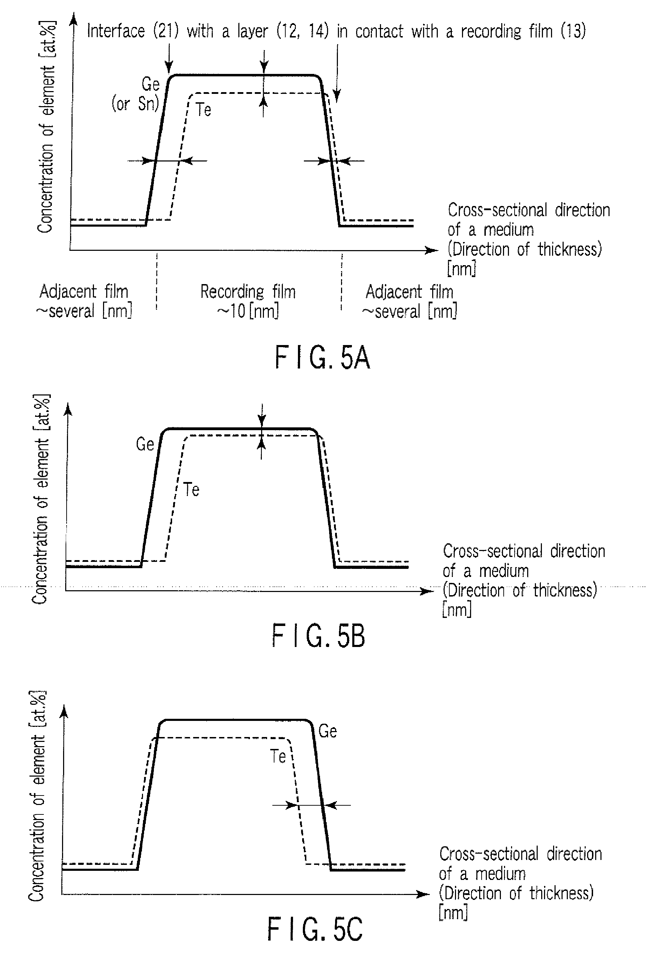

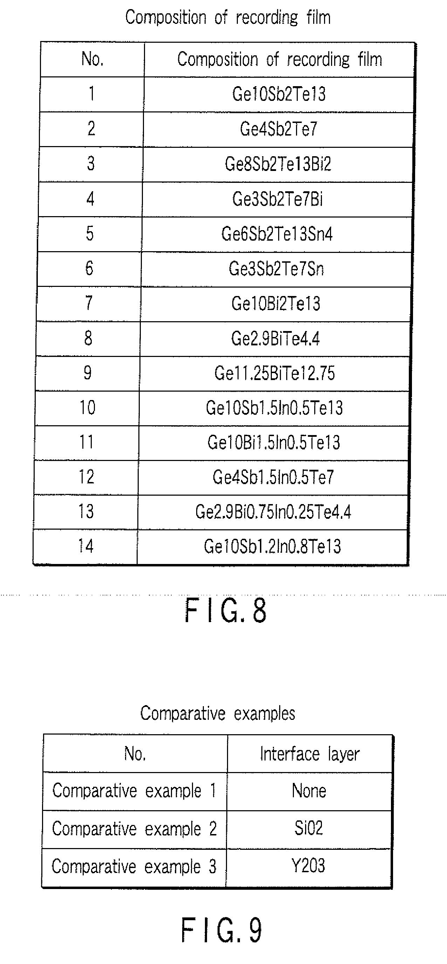

FIGS. 5A, 5B, and 5C are diagrams showing a state where the elements (including Ge and Te) constituting the recording film of the optical recording medium (or phase-change optical disk) according to the embodiment have a segregation or a concentration distribution. In addition to Ge and Te, there are various elements constituting the recording film (see FIG. 8). To make it easy to understand a segregation or a concentration distribution of constituent elements, only Ge and Te are shown as a representative elements.

FIG. 5A schematically shows a concentration [at.%] of an element in the range of a distance of several nanometers from the interface between the recording film (13a or 13b) and the lower interface film (12a or 12b) toward the lower interface film, in the range of a distance of several nanometers from the interface between the recording film (13a or 13b) and the upper interface film (14a or 14b) toward the upper interface film, and in the range of a distance of about 10 nanometers from the interface of the recording film (13a or 13b) in these ranges. That is, a part (e.g., Ge) of the constituent elements of the recording film segregates in a pattern toward the high concentration side in the range of the recording film and the other part (e.g., Te) of the constituent elements of the recording film segregates in another pattern toward the high concentration side in the range of the recording film.

FIGS. 5B and 5C schematically show different examples of a segregation pattern. In FIG. 5B, the difference in element concentration between Ge and Te is smaller than in FIG. 5A. Moreover, in FIG. 5B, the positions (in the horizontal direction in the figure) where the element concentration of Ge and that of Te change appear on the side opposite to that in FIG. 5A. When the recording film is relatively thick, although not shown, the concentration of the constituent element may be lower near the middle position in the direction of the thickness of the recording film than its shoulder portion.

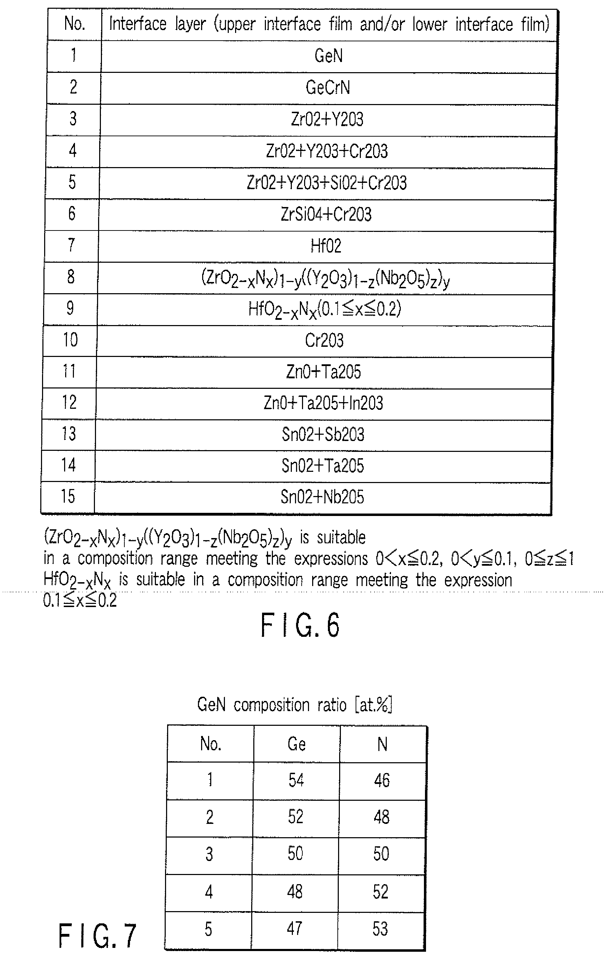

FIG. 6 is a table showing an example of the materials of an interface layer (upper interface film and/or lower interface film) of the optical recording medium (or phase-change optical disk) according to the embodiment. FIG. 7 is a table exemplifying the composition ratio of Ge and N when GeN is used as a material for the interface layer. FIG. 8 is a table showing an example of the materials of a recording film (L0 and/or L1) of the optical recording medium (or phase-change optical disk) according to the embodiment. FIG. 9 is a table to help explain comparative examples 1 to 3 when there is no interface layer and when SiO2 and Y2O3 are used for an interface layer.

The materials in FIGS. 6 and 8 were applied to a sample with the configuration of FIG. 2 and experiments were conducted. Any one of the interface layer materials shown in FIG. 6 was provided on the light incident side (or on the 12 side) and any one of the remaining interface materials was selected and arranged on the reflecting film side (or on the 16 side). As for the compounds whose composition can be changed, such as GeN or GeCrN, some of the combinations differing in composition are suitable for the interface layer material. FIG. 7 shows a case where the composition of GeN was changed. As for a comparative example, experiments were done on interface layer materials shown in FIG. 9.

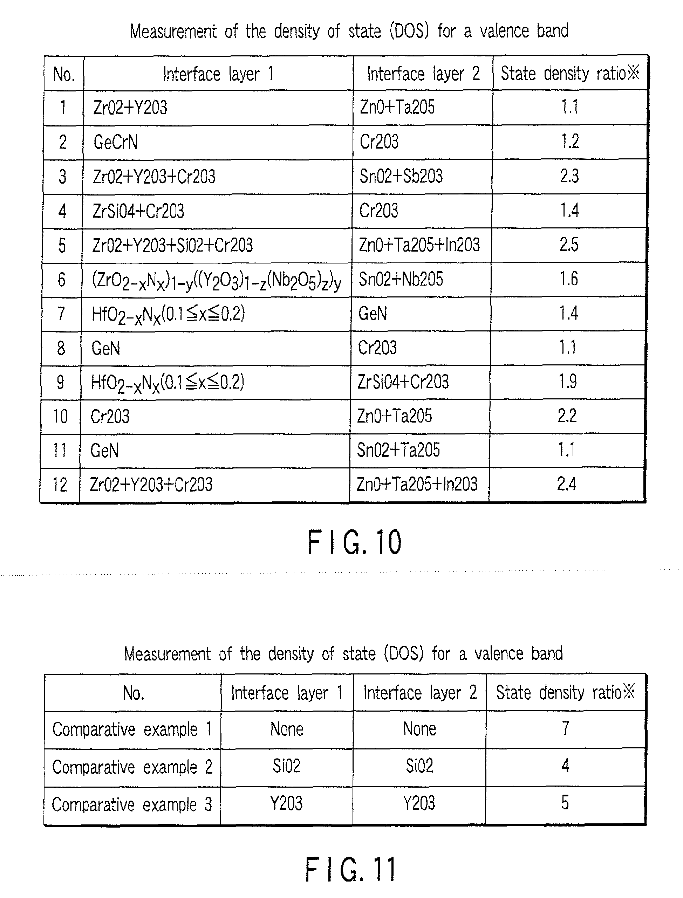

FIG. 10 is a table exemplifying the result of measuring the ratio of the DOS of the crystalline state to the DOS of the amorphous state (the DOS of the crystalline state/the DOS of the amorphous state: for example, au11/au12 in FIG. 20) at an energy level 0.5 [eV] lower than the top of the DOS for the valence band of the recording film, for combinations of various interface layer materials. FIG. 11 is a table exemplifying the result of measuring the ratio of the DOS of the crystalline state to the DOS of the amorphous state (the DOS of the crystalline state/the DOS of the amorphous state: for example, au01/au02 in FIG. 19) for combinations of interface layer materials (including a case where no interface layer is used) different from those of FIG. 10.

Each of FIGS. 10 and 11 shows the result of measuring the ratio of the DOS of the crystalline state to the DOS of the amorphous state (the DOS of the crystalline state/the DOS of the amorphous state) at an energy level 0.5 [eV] lower than the top of the DOS for the valence band of the recording film, for combinations of various interface layer materials. In the combinations of the embodiment of FIG. 10, the ratio of the DOS of the crystalline state to the DOS of the amorphous state (the DOS of the crystalline state/the DOS of the amorphous state) at an energy level 0.5 [eV] lower than the top of the DOS for the valence band of the recording film was 1.0 or more and 2.5 or less. On the other hand, in the comparative example of FIG. 11, the ratio for any combination was 4 or more.

FIG. 19 is a diagram to help explain the ratio of the DOS of the crystalline state to the DOS of the amorphous state (the DOS of the crystalline state/the DOS of the amorphous state) at an energy level 0.5 [eV] lower than the top of the DOS for the valance band of the recording film, when there is no interface layer.

FIG. 20 is a diagram to help explain the ratio of the DOS of the crystalline state to the DOS of the amorphous state (the DOS of the crystalline state/the DOS of the amorphous state) at an energy level 0.5 [eV] lower than the top of the DOS for the valance band of the recording film, when there is an interface layer.

An optical recording medium that has a favorable characteristic (see FIG. 10 and FIGS. 13 to 16) is recorded into and erased from reversibly with light. It comprises a substrate, a recording film capable of changing an atomic arrangement reversibly, a film which is in contact with the recording film and has a crystallization enhancing function, a protective film, a reflecting film, and a dielectric film contributing to optical enhancement and/or thermal diffusion, with the ratio of the DOS of the crystalline state to the DOS of the amorphous state (the DOS of the crystalline state/the DOS of the amorphous state) at an energy level 0.5 [eV] lower than the top of the DOS for the valance band of the recording film being 1.0 or more and 2.5 or less. This corresponds to the fact that au11/au12 (or au13/au14 or au15/au16) in the presence of an interface layer of FIG. 20 falls in the DOS ratio range of 1.0 to 2.5. On the other hand, in the absence of an interface layer of FIG. 19, the DOS ratio (au01/au02 or au03/au04 or au05/au06) exceeds 2.5, which is an unfavorable result (see FIGS. 9, 11, 17, and 18).

Hereinafter, for the sake of convenience, explanation will be given, referring to the energy of the top of the DOS for the valance band as Fermi energy (Fermilevel). The Fermi energy has a fluctuation of about 25 [meV] at room temperature. The inventors of this application used an energy level 0.5 [eV] lower than the top of the DOS for the valance band as a reference. A similar tendency appears from the top of the DOS for the valance band to an energy level about 1.0 [eV] lower than the top (further from the top of the DOS for the valance band to an energy level about 0.25 [eV] lower than the top). However, after having hunted for the condition for a high S/N ratio, the inventors have selected the aforementioned reference (or an energy level 0.5 [eV] lower than the top of the DOS for the valance band) as the most favorable one.

When the ratio of the DOS of the crystalline state to the DOS of the amorphous state (the DOS of the crystalline state/the DOS of the amorphous state) at an energy level 0.5 [eV] lower than the top of the DOS for the valance band of the recording film becomes 2.5 or less, this suggests that the crystalline state and amorphous state are close to each other in terms of electronic state, and that the amorphous state has a higher short-range regularity. As a result, the phase transition from the crystalline state to the amorphous state or vice versa becomes easy, which enables a high-speed phase transition from crystalline to amorphous or vice versa.

When the ratio of the DOS of the crystalline state to the DOS of the amorphous state (the DOS of the crystalline state/the DOS of the amorphous state) at an energy level 0.5 [eV] lower than the top of the DOS for the valance band of the recording film is 1.0, the crystalline state is identical with the amorphous state in terms of electronic state, and therefore the amorphous state has a much higher short-range regularity. As a result, a higher-speed phase transition from crystalline to amorphous or vice versa becomes possible.

On the other hand, when the ratio of the DOS of the crystalline state to the DOS of the amorphous state (the DOS of the crystalline state/the DOS of the amorphous state) at an energy level 0.5 [eV] lower than the top of the DOS for the valance band of the recording film is 2.5 or more, this suggests that the crystalline state and amorphous state differ from each other in terms of both of crystalline state and electronic state and the short-range regularity in the amorphous state decreased greatly. Since there is almost no long-range regularity in the amorphous state, the phase transition from the crystalline state to the amorphous state or vice versa requires considerable energy, which makes it impossible to perform phase transition at high speed.

Accordingly, an optical recording medium is suitable where the ratio of the DOS of the crystalline state to the DOS of the amorphous state (the DOS of the crystalline state/the DOS of the amorphous state) at an energy level 0.5 [eV] lower than the top of the DOS for the valance band of the recording film is 1.0 or more and 2.5 or less. When a film with a crystallization enhancing function (or the interface films 12a, 12b/14a, 14b) is provided so as to be in contact with the recording film, this enables a higher-speed phase transition from crystalline to amorphous or vice versa.

(Interface film)

The interface film which is in contact with the recording film and has a crystallization enhancing function is configured to include germanium nitride (GeN), germanium-chrome nitride (GeCrN), zirconium oxide (ZrO2), stabilized zirconia + chrome oxide (ZrO2+Cr2O3), stabilized zirconia + silicon oxide + chrome oxide (ZrO2+SiO2+Cr2O3), zircon + chrome oxide (ZrSiO4 + Cr2O3), or hafnium oxide (HfO2). Alternatively, the interface film may be composed of a compound $(HfO_{2-x}N_x)$ containing hafnium (Hf), oxygen (0), and nitrogen (N). Alternatively, the interface film may be composed of a film $((ZrO_{2-x}N_x)_{1-y}((Y_2O_3)_{1-z}(Nb_2O_5)_z)_y$ where z = 0) containing zirconium (Zr), oxygen (0), nitrogen (N), and yttria (Y). Alternatively, the interface film may be composed of a film $((ZrO_{2-x}N_x)_{1-y}((Y_2O_3)_{1-z}(Nb_2O_5)_z)_y$ where z = 1) containing zirconium (Zr), oxygen (0), nitrogen (N), and niobium (Nb). Alternatively, the interface film may be composed of a film $((ZrO_{2-x}N_x)_{1-y}((Y_2O_3)_{1-z}(Nb_2O_5)_z)_y$ where $0 \leq z \leq 1$) containing zirconium (Zr), oxygen (0), nitrogen (N), yttria (Y), and niobium (Nb). Alternatively, the interface film may be configured to include chrome oxide (Cr2O3), zinc oxide (ZnO), zinc oxide + tantalum oxide (ZnO+Ta2O5), zinc oxide + tantalum oxide + indium oxide (ZnO+Ta2O5+In2O3), tin oxide (SnO2), tin oxide + antimony oxide (SnO2+Sb2O3), tin oxide + tantalum oxide (SnO2+Ta2O5), or tin oxide + niobium oxide (SnO2+Nb2O5). When such a configuration is used, the characteristic of the embodiment becomes more noticeable.

It is known that, in the process of refining Zr, the homologous elements Hf and Ti are difficult to separate from one another and therefore are inevitably present in the form of a mixture. The same holds true for the homologous elements Zr and Ti in the process of refining Hf. Even if such unavoidable elements are contained in minute amounts, the effect of the embodiment is not impaired significantly.

(Recording film)

When a recording film is made up of GeSbTe and a so-called pseudo-binary-series linear composition and its vicinity are used which enable a representation of (GeTe)-(Sb2Te3), the effect of the interface film of the invention is noticeable. Preferably, when an alloy recording film material with the (GeTe)-(Sb2Te3) composition and its vicinity, the Ge composition ratio being 30 at.% or more, is used, the effect of the invention is particularly noticeable. Although in the prior art only the composition of the recording film was considered to be important, what the electronic state of the recording film looks like is as important as its composition in the invention as described above. Hereinafter, the composition will be described.

When, on the basis of the composition of GeSbTe, a part of Ge is replaced with Sn, or a part of Sb is replaced with Bi and/or In, and the aforementioned interface film is used, the effect of the invention is more noticeable. In that case, it is desirable that the Ge-to-Sn replacement ratio should be Sn/Ge < 0.5 and the Sn-to-Bi replacement ratio should be Bi/(Bi+Sb) < 0.7. It is desirable that the ratio of In to Sb or Bi in amount should be 0.7 or less, preferably 0.5 or less, and more preferably 0.25 or less. Not only the amount of these replacement elements but also the crystallization enhancing function is closely related to the crystallization temperature, melting point, and the like. Therefore, although the optimum condition differs depending on the design of a medium, it is preferable to select the amount in the above range.

When a recording film is composed of GeBiTe and a so-called pseudo-binary-series linear composition and its vicinity are used which enable a representation of (GeTe)-(Bi2Te3), the effect of the interface film of the invention is noticeable. Preferably, when an alloy recording film material with the (GeTe)-(Bi2Te3) composition and its vicinity, the Ge composition ratio being 30 at.% or more, is used as the interface film of the invention, the effect of the invention is particularly noticeable.


(Nitriding each recording film)

When the recording film includes nitrogen (N), it can be represented as a composition where nitrogen (N) is added to (GeTe)-(Sb2Te3), or (GeTe)-(Sb2Te3)-N. That is, the composition is such that nitrogen (N) is added to a pseudo-binary series of (GeTe)-(Sb2Te3). It can be represented more simply as GeSbTe-N. When a recording film nitrided this way is used, the effect of the interface film of the invention is remarkable. Preferably, when an alloy recording film material with the (GeTe)-(Sb2Te3) composition and its vicinity, the Ge composition ratio being 30 at.% or more, is used as the interface film of the invention, the effect of the invention is particularly noticeable.

When, on the basis of the composition of GeSbTe-N, a part of Ge is replaced with Sn, or a part of Sb is replaced with Bi and/or In, and the aforementioned interface film is used, the effect of the invention is more noticeable. In that case, it is desirable that the Ge-to-Sn replacement ratio should be Sn/Ge < 0.5 and the Sn-to-Bi replacement ratio should be Bi/(Bi+Sb) < 0.7. It is desirable that the ratio of In to the amount of Bi should be 0.7 or less, preferably 0.5 or less, and more preferably 0.25 or less. Not only the amount of these replacement elements and the amount of nitrogen but also the crystallization enhancing function is closely related to the crystallization temperature, melting point, and the like. Therefore, although the optimum condition differs depending on the design of a medium, it is preferable to select the amount in the above range.

When the recording film is configured to have a composition where nitrogen (N) is added to (GeTe)-(Bi2Te3), or a so-called pseudo-binary-series linear composition and its vicinity represented as (GeTe)-(Bi2Te3)-N (more simply represented as GeBiTe-N), the effect of the interface film of the invention is remarkable. Preferably, when an alloy recording film material with the (GeTe)-(Bi2Te3) composition and its vicinity, the Ge composition ratio being 30 at.% or more, is used as the interface film of the invention, the effect of the invention is particularly remarkable.

Furthermore, the effect of the invention is produced, regardless of the thickness of the recording film. When the thickness of the recording film is made 20 nm or less, more preferably 10 nm, the effect is more noticeable.

In a recording medium of the type that allows light to enter one side of the medium and enables two different information layers to be accessed (the single-sided, dual-layer type), when the invention is applied to the recording layer closer to the light incident side, the effect of the invention is noticeable. The advantage in that case is that the film thickness of the recording layer can be made 10 nm or less. Use of an interface layer related to the embodiment makes the following advantages noticeable: the transmittance to short-wavelength laser light can be made higher and the contrast can be increased.

The inventors of this application conducted experiments using germanium nitride (GeN), silicon carbide (Si-C), silicon nitride (Si-N), Ta2O5+SiC, and the like which are well known as interface film materials having an effect on the enhancement of crystallization of the recording film. As a result, the following tradeoff was found: using a material with a high crystallization enhancing effect without controlling the state of the recording film resulted in a decrease in CNR and a material with high CNR had a poor crystallization enhancing effect. These materials excluding Si-N present relatively high absorption at a wavelength of $\lambda$ = 405 nm of the blue-violet laser diode used in the next-generation DVD (that is, have a large optical attenuation coefficient), leading to the cause of optical losses. The optical losses require the power of laser light irradiated to be increased that much more. Moreover, the optical losses prevent the transmittance of the L0 recording film from being increased and decrease the sensitivity and contrast of the L1 recording film, causing various problems with the two-layer medium.

However, it has become clear that, when a conventional uniform recording layer and an interface layer material with a crystallization enhancing function, such as GeN, were used, recrystallization was violent particularly at a low linear velocity, preventing a good amorphous mark from being formed. Therefore, the bit pitch couldn't be reduced, which was an obstacle to density growth.

[Embodiment 1]

Before the description of embodiments of an experimentally produced optical recording medium, a sample whose recording film was in the crystalline state and a sample whose recording film was in the amorphous state were produced and the DOS for the valance band of each of the recording films was measured using the HX-PES method. Experiments were done on the recording films and interface layers for the following series.

The recording film series on which experiments were conducted:

GeSbTe, GeSnSbTe, GeSnSbTeIn, GeSbTeIn, GeSbTeBiIn, GeSbSnTeSiIn, GeSbTeBi, GeSnSbTeBi, GeSnSbTeBiIn, GeBiTeIn, GeBiTe, GeSbTe-N, GeSbTeBi-N, GeBiTe-N, GeSbInTe-N, GeSbTeBiIn-N, GeBiInTe-N

The interface film series on which experiments were conducted:

germanium nitride (GeN), germanium-chrome nitride (GeCrN), zirconium oxide (ZrO2), stabilized zirconia + chrome oxide (ZrO2+Cr2O3), stabilized zirconia + silicon oxide + chrome oxide (ZrO2+SiO2+Cr2O3), zircon + chrome oxide (ZrSiO4 + Cr2O3), hafnium oxide (HfO2), a compound ($HfO_{2-x}N_x$ where $0.1 \leq x \leq 0.2$) containing hafnium (Hf), oxygen (O), and nitrogen (N), a film ($(ZrO_{2-x}N_x)_{1-y}((Y_2O_3)_{1-z}(Nb_2O_5)_z)_y$ where $0 < x \leq 0.2$, $0 < y \leq 0.1$, $0 \leq z \leq 1$) containing zirconium (Zr), oxygen (O), nitrogen (N), yttria (Y), and niobium (Nb), chrome oxide (Cr2O3), zinc oxide (ZnO), zinc oxide + tantalum oxide (ZnO+Ta2O5), zinc oxide + tantalum oxide + indium oxide (ZnO+Ta2O5+In2O3), tin oxide (SnO2), tin oxide + antimony oxide (SnO2+Sb2O3), tin oxide + tantalum oxide (SnO2+Ta2O5), or tin oxide + niobium oxide (SnO2+Nb2O5)

[Embodiment 2]

A substrate compatible with both of the land-groove recording method (a) and groove recording method (b) was used as the substrate of FIG. 1. In the land-groove recording method (a), a 0.59-mm-thick polycarbonate (PC) substrate formed by injection molding was used. Since grooves were formed with a groove pitch of 0.68 $\mu$m, when data was recorded to both lands (L) and grooves (G), the pitch corresponded to a track pitch of 0.34 $\mu$m. In the groove recording method (b), a 0.59-mm-thick PC substrate formed by injection molding was also used. The groove pitch was set at 0.4 $\mu$m.

On the surface of each of the PC substrates in which grooves have been formed, for example, the following films are formed using a sputtering apparatus. In an L0 information layer 19 provided close to the light incident side, an interference film (ZnS-SiO2) 15a, an interface layer 14a, a recording film layer 13a, an interface layer 12a, and an interference film (ZnS-SiO2) 11a are formed in that order. In an L1 information layer 20 provided far away from the light incident side, a reflecting film (Ag alloy) 16b, an interference film (ZnS-SiO2) 15b, an interface layer 14b, a recording film layer 13b, an interface layer 12b, and an interference film (ZnS-SiO2) 11b are formed on the PC substrate in that order.

The sputtering apparatus used is a so-called Cluster sputter film-forming apparatus which forms each layer by sputtering in a different film-forming chamber. The Cluster sputter film-forming apparatus comprises a load-lock chamber in which a substrate is installed, a transport chamber, and a process chamber which forms each film. FIG. 3 shows an example of the configuration of one process chamber. The process chamber is composed of a unit which evacuates the chamber, a vacuum gauge, a pressure sensor, a film thickness meter, a sputtering target serving as a material on which a film is to be formed, and a substrate installed. Such rare gas as Ar is mainly used as sputter gas. Oxygen or nitrogen gas may be used as needed. As for the form of discharge in sputtering, an RF power supply or a DC power supply is used according to the material of which a film is made and to the quality of a desired film. FIG. 4 is a flowchart to help explain the process of forming a film.

FIG. 21 is a GeSbTe ternary phase diagram to help explain a favorable composition range of the recording film of an optical recording medium according to an embodiment of the invention. The recording film layer (13a, 13b) was made up of Ge, Sb, and Te and was selected from the composition enclosed by $x = 55 \cdot z = 45$, $x = 45 \cdot z = 55$, $x = 10 \cdot y = 28 \cdot z = 42$, and $x = 10 \cdot y = 36 \cdot z = 54$ in the GeSbTe ternary phase diagram, if its composition was expressed as $Ge_xSb_yTe_z$ where $x + y + z = 100$.

FIG. 22 is a GeBiTe ternary phase diagram to help explain a favorable composition range of the recording film of an optical recording medium according to an embodiment of the invention. The recording film layer (13a, 13b) was made up of Ge, Bi, and Te and was selected from the composition enclosed by x = 55·z= 45, x = 45·z = 55, x = 10·y = 28·z = 42, and x = 10·y = 36·z = 54 in the GeBiTe ternary phase diagram, if its composition was expressed as $Ge_xBi_yTe_z$ where x + y + z = 100. Many compositions were examined. One of them was shown as an example.

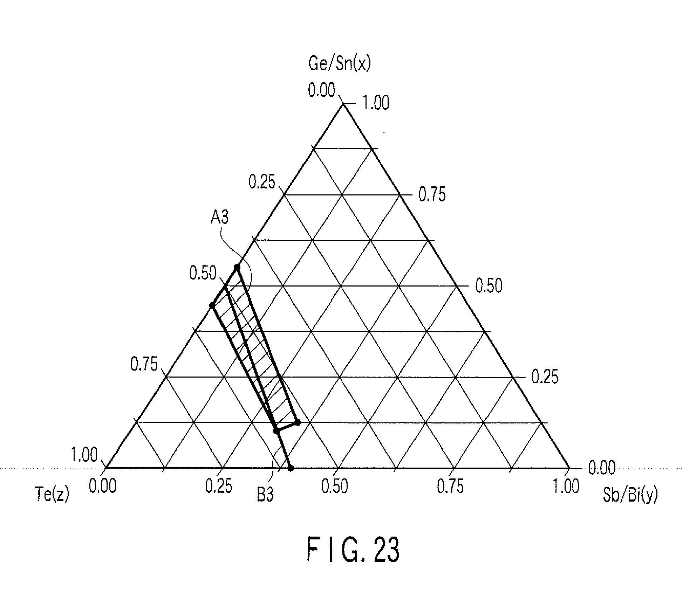

FIG. 23 is a Ge/Sn-Sb/Bi-Te ternary phase diagram to help explain a favorable composition range of the recording film of an optical recording medium according to an embodiment of the invention (when Ge and/or Sb is replaced with Sn and/or Bi in FIG. 21). This embodiment shows a case where a GeSbTeBi-series recording film was used. The film thickness of the recording film was set to 10 nm or less.

In the interface layer, $ZrO_2$ was used on the light incident side and $Cr_2O_3$ was used on the reflecting film side. The $ZnS$-$SiO_2$ film (or interference film) was formed using a target obtained by mixing $SiO_2$ with $ZnS$. The sputtering apparatus used is a so-called Cluster sputter film-forming apparatus which forms each layer by sputtering in a different film-forming chamber. After each medium is formed, the reflectivity and transmittance of the medium are measured with a spectrophotometer.

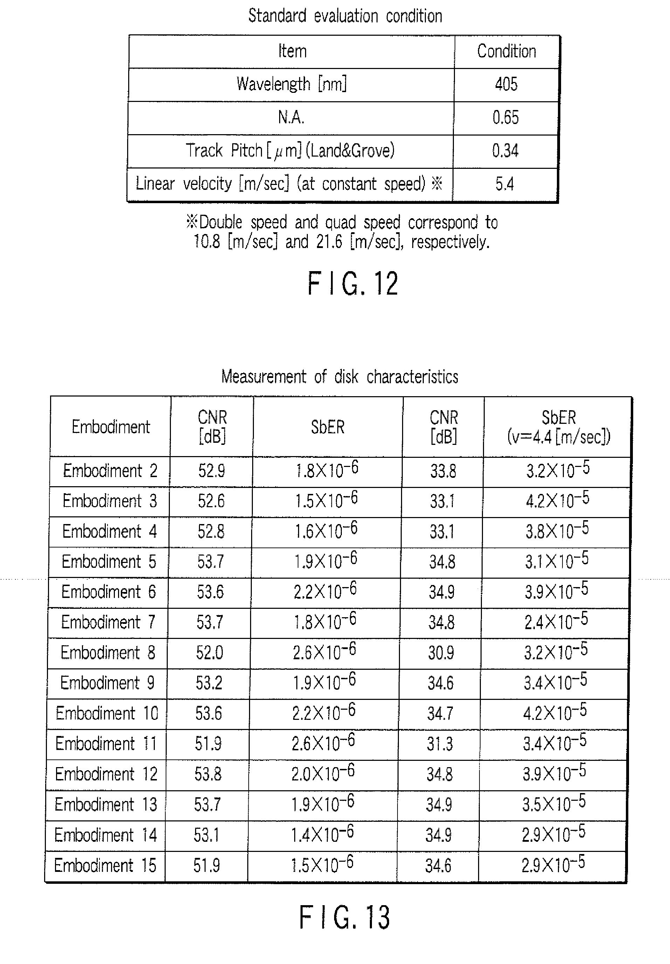

FIG. 12 is a table exemplifying the condition for evaluation when a recording film is evaluated by a land-groove recording method. The recording film on the entire surface of the medium of each layer was crystallized with an initialization unit (not shown). After the initialization, the mediums were bonded together with UV resin, with the film-formed surfaces inside, thereby forming an interlayer separating layer. The thickness of the interlayer separating layer was 25 μm. Evaluations were made using a Pulstec disk evaluation unit ODU-1000. The unit is provided with a blue-violet semiconductor laser with a wavelength of 405 nm and an objective lens with NA = 0.65. Recording experiments were conducted by the land-groove recording method. The condition used as a standard was shown in FIG. 12.

Experiments done to evaluate the characteristics of a disk are roughly divided into the following three types:

(1) Bit error rate (SbER: Simulated bit Error Rate) measurement

One measurement is to measure the bit error rate (SbER: Simulated bit Error Rate) to determine a data error rate. The other is analog measurement to determine the quality of a read-out signal. In SbER measurement, a mark string in which 2T to 13T patterns were included at random was overwritten 10 times. Next, the same random patterns were overwritten 10 times in the adjacent tracks on both sides of the track. Thereafter, the middle track was reached and sbEr was measured.

(2) Analog measurement

Analog measurements were made as follows. First, a mark string in which 2T to 13 patterns were included at random was overwritten 10 times. Next, in the mark string, a 9T single pattern was overwritten once.

Then, the signal-to-noise ratio (hereinafter, CNR) of the signal frequency of the 9T mark was measured with a spectrum analyzer. Next, a laser beam of an erase power level was irradiated as many times as the disk rotation, thereby erasing the recording mark. At that time, the decrease in the magnitude of the signal of the 9T mark was measured. The measured value was defined as an erase ratio (ER). Then, the head was moved to a sufficiently distant track and cross erase was measured.

(3) Overwrite (OW) test

As a third measurement, experiments were done with overwrite (OW) characteristics. In the experiment, CNR was measured, while a random signal was being overwritten in the same track. A determination was made, depending on whether the number of times CNR became smaller than the initial value by 2 dB or more was 2000 or more. Experiments were not done from a viewpoint of how many times OW was possible. Uses in video recording require about 1000 times and uses in dealing with PC data require 10000 times or more. Since video recording is the main use in the market, evaluations were made giving importance to uses in video recording.

In addition to the measurement of FIG. 12, the following experiment was carried out: the linear velocity was decreased (to v = 4.4 m/s, which further increased the capacity by ten percent or more), the bit pitch was decreased further, and evaluations were made under much higher-density conditions, thereby proving much higher density to be possible. This experiment has shown that the characteristic has been improved remarkably as compared with that in the prior art. These results are also shown. Moreover, environmental testing was also done and no problem arose.

The optimum power in measuring the SbER was set as the sensitivity of the medium. Here, to measure the sensitivity and transmittance of L0, L0 with the configuration of the embodiment was bonded to a blank disk on which no film had been formed and L1 was bonded to a blank disk on which no film had been formed. Unless otherwise stated, each evaluation was made at a linear velocity of 5.4 m/s (constant velocity) in the land-groove recording method (a) and at a linear velocity of 6.61 m/s (constant velocity) in the groove recording method (b).

All of the embodiments below shared the above conditions. In the examples shown as representative examples, the worst evaluations among the results of the evaluations made as described above are shown. For instance, since the land-groove recording method (a) can increase the recoding density more than the groove recording method (b), the method (b), on the whole, tends to have a better characteristic than the method (a). The tendency is more noticeable in SbER than in CNR or ER. In a certain embodiment, it has been found that SbER in the method (b) was better than in the method (a) by about 1/10 to 1/100, or the former had almost no error.

FIG. 13 is a table showing an example of the result (CNR, SbER, ER) of evaluating a recording film for a plurality of samples. FIG. 13 shows the results of evaluations excluding the result of the number of OWs. SbER was $1.8 \times 10^{-6}$ or less in both lands and grooves and the number of OWs was 2000 or more, assuring practical characteristics. In only this example, just for reference, when the evaluation of the OW characteristic was made 10000 times or more, it was found that about 10000 OWs were possible. Next, the comparison of analog data was made. In the medium, CNR was 52.9 dB or more in both lands and grooves, the erase ratio was -33.8 dB or less, and cross erase was -0.1 dB or less, which were excellent results.

A disk was made by forming a film configuration of the embodiment on a 1.1-mm-thick polycarbonate (PC) substrate formed by injection molding and providing a 75-$\mu$m-thick transparent cover layer on the film. The recording and erasing characteristics of the medium were evaluated with an evaluation unit provided with a biue-violet semiconductor laser with a wavelength of 405 nm and an objective lens with NA = 0.85. A substrate with a groove pitch of 0.32 $\mu$m was evaluated in groove recording, that is, by the groove recording method (b). CNR was 52 dB or more, the erase ratio was -30 dB or less, and OW characteristic showed 2000 times or more, which were very good results. Accordingly, it is conceivable that the interface layer material of the embodiment is favorable because it is not affected by the thickness of the substrate or the thickness of the cover layer on the light incident side.

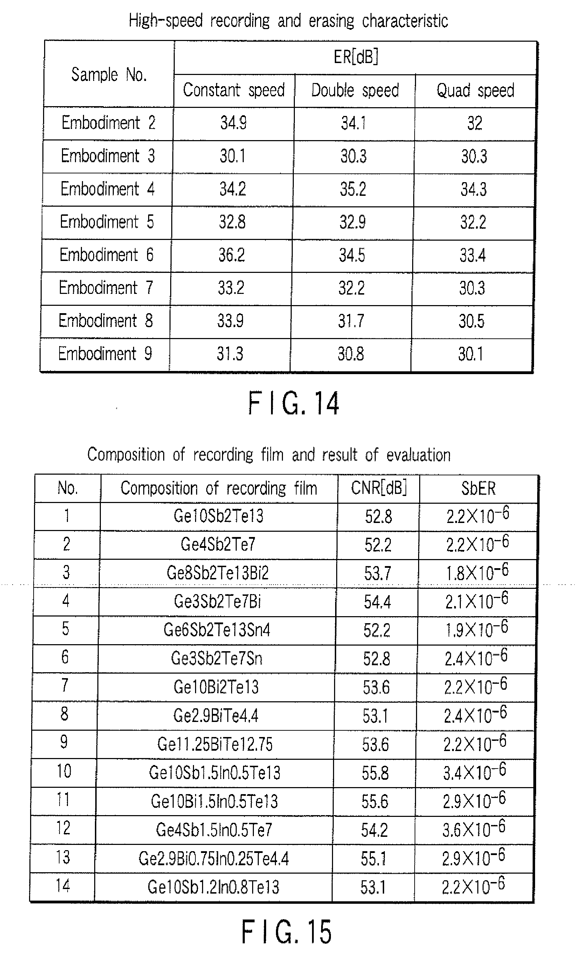

FIG. 14 is a table showing another example of the result (ER when the linear velocity is changed) of evaluating the recording film for a plurality of samples. In embodiment 2 to embodiment 9, the erase ratio was measured, while the linear velocity was being changed. FIG. 14 shows the result. All measured values show a good erasing characteristic.

The result of analyzing a disk produced in the same manner as the evaluated medium has shown that the recording film had a segregation or concentration distribution as shown in FIGS. 5A, 5B, and 5C. Specifically, Ge, Sb, and Bi were rich and Te was poor in the vicinity of one interface (on the left side in FIG. 5) (only the elements Ge and Te are shown in FIGS. 5A, 5B, and 5C for clarity).

[Embodiment 3]

With the same configuration as that in embodiment 2, a disk was made by using GeCrN on the light incident side of the interface layer and Cr2O3 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 52 dB or more in both lands and grooves for any sample, producing an excellent result. The number of OWs was 2000 times or more in any medium, assuring practical characteristics.

The result of analyzing a disk produced in the same manner as the evaluated medium has shown that Ge, Sb, and Bi were rich and Te was poor in the vicinity of the interface of the recording film.

[Embodiment 4]

With the same configuration as that in embodiment 2, a disk was made by using ZrO2+Y2O3+CrO3 on the light incident side of the interface layer and SnO2+Sb2O3 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 52 dB or more in both lands and grooves for any sample, producing an excellent result. The number of OWs was 2000 times or more in any medium, assuring practical characteristics.

The result of analyzing a disk produced in the same manner as the evaluated medium has shown that Ge, Sb, and Bi were rich and Te was poor in the vicinity of the interface of the recording film.

[Embodiment 5]

With the same configuration as that in embodiment 2, a disk was made by using ZrSiO4+Cr2O3 on the light incident side of the interface layer and Cr2O3 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 53 dB or more in both lands and grooves for any sample, producing an excellent result. The number of OWs was 2000 times or more in any medium, assuring practical characteristics.

The result of analyzing a disk produced in the same manner as the evaluated medium has shown that Ge, Sb, and Bi were rich and Te was poor in the vicinity of the interface of the recording film.

[Embodiment 6]

With the same configuration as that in embodiment 2, a disk was made by using ZrO2+Y2O3+SiO2+Cr2O3 on the light incident side of the interface layer and ZnO+Ta2O5+In2O3 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 53 dB or more in both lands and grooves for any sample, producing an excellent result. The number of OWs was 2000 times or more in any medium, assuring practical characteristics.
The result of analyzing a disk produced in the same manner as the evaluated medium has shown that Ge, Sb, and Bi were rich and Te was poor in the vicinity of the interface of the recording film.

[Embodiment 7]

With the same configuration as that in embodiment 2, a disk was made by using $(ZrO_{2-x}N_x)_{1-y}((Y_2O_3)_{1-z}(Nb_2O_5)_z)_y$ (where (x, y, z) = (0.05, 0.05, 0)) on the light incident side of the interface layer and SnO2+Nb2O5 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 53 dB or more in both lands and grooves for any sample, producing an excellent result. The number of OWs was 2000 times or more in any medium, assuring practical characteristics.
The result of analyzing a disk produced in the same manner as the evaluated medium has shown that Ge, Sb, and Bi were rich and Te was poor in the vicinity of the interface of the recording film.

[Embodiment 8]

With the same configuration as that in embodiment 2, a disk was made by using $HfO_{2-x}N_x$ (where x = 0.1) on the light incident side of the interface layer and GeN on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 52 dB or more in both lands and grooves for any sample, producing an excellent result. The number of OWs was 2000 times or more in any medium, assuring practical characteristics.
The result of analyzing a disk produced in the same manner as the evaluated medium has shown that Ge, Sb, and Bi were rich and Te was poor in the vicinity of the interface of the recording film.

[Embodiment 9]

With the same configuration as that in embodiment 2, a disk was made by using GeN on the light incident side of the interface layer and Cr2O3 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 53 dB or more in both lands and grooves for any sample, producing an excellent result. The number of OWs was 2000 times or more in any medium, assuring practical characteristics.
The result of analyzing a disk produced in the same manner as the evaluated medium has shown that Ge, Sb, and Bi were rich and Te was poor in the vicinity of the interface of the recording film.

[Embodiment 10]

With the same configuration as that in embodiment 2, a disk was made by using $HfO_{2-x}N_x$ (where x = 0.1) on the light incident side of the interface layer and ZrSiO4+Cr2O3 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 53 dB or more in both lands and grooves for any sample, producing an excellent result. The number of OWs was 2000 times or more in any medium, assuring practical characteristics.
The result of analyzing a disk produced in the same manner as the evaluated medium has shown that Ge, Sb, and Bi were rich and Te was poor in the vicinity of the interface of the recording film.

[Embodiment 11]

With the same configuration as that in embodiment 2, a disk was made by using Cr2O3 on the light incident side of the interface layer and ZnO+Ta2O5 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 51 dB or more in both lands and grooves for any sample, producing an excellent result. The number of OWs was 2000 times or more in any medium, assuring practical characteristics.

The result of analyzing a disk produced in the same manner as the evaluated medium has shown that Ge, Sb, and Bi were rich and Te was poor in the vicinity of the interface of the recording film.

[Embodiment 12]

With the same configuration as that in embodiment 2, a disk was made by using GeN on the light incident side of the interface layer and SnO2+Ta2O5 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 53 dB or more in both lands and grooves for any sample, producing an excellent result. The number of OWs was 2000 times or more in any medium, assuring practical characteristics.

The result of analyzing a disk produced in the same manner as the evaluated medium has shown that Ge, Sb, and Bi were rich and Te was poor in the vicinity of the interface of the recording film.

[Embodiment 13]

With the same configuration as that in embodiment 2, a disk was made by using ZrO2+Y2O3+Cr2O3 on the light incident side of the interface layer and ZnO+Ta2O5+In2O3 on its reflecting film side. The same experiment as that in embodiment 2 was conducted. As a result, SbER was on the order of $10^{-6}$ in both lands and grooves for any sample as shown in FIG. 13, achieving a good error rate. As for analog data, CNR was 53 dB or more in both lands and grooves for any sample, producing an excellent result. The number of OWs was 2000 times or more in any medium, assuring practical characteristics.

The result of analyzing a disk produced in the same manner as the evaluated medium has shown that Ge, Sb, and Bi were rich and Te was poor in the vicinity of the interface of the recording film.

[Embodiment 14]

A substrate compatible with both the methods (a) and (b), that is, both of the land-groove recording method (a) and groove recording method (b), was used. In the land-groove recording method (a), a 0.6-mm-thick polycarbonate (PC) substrate formed by injection molding was used. Since grooves were formed with a groove pitch of 0.68 $\mu$m, when data was recorded to both lands (L) and grooves (G), the pitch corresponded to a track pitch of 0.34 $\mu$m. In the groove recording method (b), a 0.59-mm-thick PC substrate formed by injection molding was used. The groove pitch was set at 0.4 $\mu$m.

On the surface of each of the PC substrates in which grooves had been formed, the following films were formed using a sputtering apparatus: ZnS-SiO2, SiO2, ZnS-SiO2, an interface layer, a recording film layer, an interface layer, ZnS-SiO2, and Ag alloy in that order, starting from the light incident side. Then, the resulting disk was bonded to a blank disk with no film by UV cured resin. The sputtering apparatus used in the same manner as in embodiment 2 is a so-called Cluster sputter film-forming apparatus which forms each layer by sputtering in a different film-forming chamber.

The recording film layer was made up of Ge, Sb, and Te and was selected from the composition enclosed by $x = 55 \cdot z = 45$, $x = 45 \cdot z = 55$, $x = 10 \cdot y = 28 \cdot z = 42$, and $x = 10 \cdot y = 36 \cdot z = 54$ in the GeSbTe ternary phase diagram, if its composition was expressed as $Ge_x Sb_y Te_z$ where $x + y + z = 100$. When the recording film layer was made up of Ge, Sb, Te, and Bi or Sn, a part of the composition of GeSbTe was replaced with Bi and/or In and/or Sn, and the composition after the replacement was expressed as $(Ge(1-w) Snw)x(Sb(1-v)(Bi(1-u) Inu)v)yTez$ where $x + y + z = 100$, GeSnSbTe, GeSnSbTeIn, GeSbTeIn, GeSbTeBiIn, GeSbSnTeBiIn, GeSbTeBi, GeBiTeIn, GeSnSbTeBi, and GeSnSbTeBiIn were used where w, v, and u satisfied the expression $0 \leq w \leq 0.5$ and $0 \leq v \leq 0.7$ and $0 \leq u \leq 1.0$. Moreover, the recording film layer was made up of Ge, Bi, and Te and was selected from the composition enclosed by $x = 55 \cdot z = 45$, $x = 45 \cdot z = 55$, $x = 10 \cdot y = 28 \cdot z = 42$, and $x = 10 \cdot y = 36 \cdot z = 54$ in the GeBiTe ternary phase diagram, if its composition was expressed as $Ge_x Bi_y Te_z$ where $x + y + z = 100$.

Many compositions were examined. In this embodiment, a case where a GeSbTeBi-series recording film was used is shown. The thickness of the recording film was set to around 10 nm or less.

In the interface layer, GeN was used on the light incident side and Cr2O3 was used on the reflecting film side. A ZnS-SiO2 film was formed using a target obtained by mixing SiO2 with ZnS. The sputtering apparatus used is a so-called Cluster sputter film-forming apparatus which forms each layer by sputtering in a different film-forming chamber. After each medium was formed, the reflectivity and transmittance of the medium were measured with a spectrophotometer.

The recording film on the entire surface of the medium of each layer was crystallized with an initialization unit (not shown). After the initialization, the mediums were bonded together with UV resin, with the film-formed surfaces inside, thereby forming an interlayer separating layer. The thickness of the interlayer separating layer was 20 $\mu$m. Evaluations were made using the aformentioned disk evaluation unit ODU-1000. The unit is provided with a blue-violet semiconductor laser with a wavelength of 405 nm and an objective lens with NA = 0.65. A recording experiment was conducted by the land-groove recording method. The experiment was the same as that in embodiment 2. As a result, SbER was on the order of $10^{-6}$ in both lands and grooves for any sample as shown in FIG. 13, achieving a good error rate. As for analog data, CNR was 53 dB or more in both lands and grooves for any sample, producing an excellent result. The number of OWs was 2000 times or more in any medium, assuring practical characteristics.

The result of analyzing a disk produced in the same manner as the evaluated medium has shown that Ge, Sb, and Bi were rich and Te was poor in the vicinity of the interface of the recording film. It was found that germanium oxide and antimony oxide as thin as 0.6 nm to 0.1 nm were present at the interface of the layer in contact with the recording film.

[Embodiment 15]

A substrate compatible with both the methods (a) and (b), that is, both of the land-groove recording method (a) and groove recording method (b), was used. In the land-groove recording method (a), a 0.6-mm-thick polycarbonate (PC) substrate formed by injection molding was used. Since grooves were formed with a groove pitch of 0.68 $\mu$m, when data was recorded to both lands (L) and grooves (G), the pitch corresponded to a track pitch of 0.34 $\mu$m. In the groove recording method (b), a 0.59-mm-thick PC substrate formed by injection molding was used. The groove pitch was set at 0.4 $\mu$m. On the surface of each of the PC substrates in which grooves had been formed, the following films were formed using a sputtering apparatus: ZnS-SiO2, SiOC, ZnS-SiO2, an interface layer, a recording film layer, an interface layer, ZnS-SiO2, and Ag alloy in that order, starting from the light incident side. Then, the resulting disk was bonded to a blank disk with no film by UV cured resin. The SiOC film was formed by subjecting a SiC-system target to reactive sputtering using a mixed gas of Ar/02. The SiOC film has almost the same low refractive index as that of SiO2. The same experiment as that in embodiment 2 was conducted. As a result, SbER was on the order of $10^{-6}$ in both lands and grooves for any sample as shown in FIG. 13, achieving a good error rate. As for analog data, CNR was 51 dB or more in both lands and grooves for any sample, producing an excellent result. The number of OWs was 2000 times or more in any medium, assuring practical characteristics.

The result of analyzing a disk produced in the same manner as the evaluated medium has shown that Ge, Sb, and Bi were rich and Te was poor in the vicinity of the interface of the recording film.

[Embodiment 16] (Selecting the best composition range of recording films)

With the same configuration as that in embodiment 2, a disk was made by using GeN on the light incident side of the interface layer and Cr2O3 on its reflecting film side, or by using GeN on both the sides. The recording film layer was made up of Ge, Sb, and Te and was selected from the composition enclosed by x = 55·z= 45, x = 45·z = 55, x = 10·y = 28·z = 42, and x = 10·y = 36·z = 54 in the GeSbTe ternary phase diagram, if its composition was expressed as $Ge_xSb_yTe_z$ where x + y + z = 100. When the recording film layer was made up of Ge, Sb, Te, and Bi or Sn, a part of the composition of GeSbTe was replaced with Bi and/or In and/or Sn, and the composition after the replacement was expressed as (Ge(1-w) Snw)x(Sb(1-v)(Bi(1-u) Inu)v)yTez where x + y + z = 100, GeSbTeBi, GeSbTeSn, GeSbTeBiSn, GeSnSbTeIn, GeSbTeIn, GeSbTeBiIn, GeSbSnTeBiIn, GeBiTeIn, and GeSnSbTeBiIn were used where w, v, and u satisfied the expression $0 \leq w \leq 0.5$ and $0 \leq v \leq 0.7$ and $0 \leq u \leq 1.0$. Moreover, the recording film layer was made up of Ge, Bi, and Te and satisfied the condition for the composition enclosed by x = 55·z= 45, x = 45·z = 55, x = 10·y = 28·z = 42, and x = 10·y = 36·z = 54 in the GeBiTe ternary phase diagram, if its composition was expressed as $Ge_xBi_yTe_z$ where x + y + z = 100. Many compositions were examined. This embodiment shows examples of disks using a GeSbTe-series, a GeSbTeSn-series, and a GeGiTe-series recording film layer whose representative examples are shown in FIG. 8. The same experiment as that in embodiment 2 was conducted on each disk. The results of the experiments are shown in FIG. 15.

FIG. 15 is a table showing an example of the result (CNR, SbER) of evaluating recording films with various compositions.

As shown in FIG. 15, both CNR and each SbER presented good characteristics. The number of OWs was 2000 times or more, assuring practical characteristics.

The result of analyzing a disk produced in the same manner as the evaluated medium has shown that Ge, Sb, and Bi were rich and Te was poor in the vicinity of the interface of the recording film. Moreover, it was found that germanium oxide, antimony oxide, and bismuth oxide as thin as 0.4 nm to 0.1 nm were present at the interface of the layer in contact with the recording film.

[Embodiment 17] (Selecting the best composition range of recording films) with the addition of N2

With the same configuration as that in embodiment 2, a disk was made by using GeCrN on the light incident side of the interface layer and Cr2O3 on its reflecting film side. The recording film layer was made up of Ge, Sb, Te, and N (nitrogen) and was selected from the compounds obtained by adding 1 to 5 at.% of nitrogen (N) to the GeSbTe-series compounds in the composition region enclosed by $x = 55 \cdot z = 45$, $x = 45 \cdot z = 55$, $x = 10 \cdot y = 28 \cdot z = 42$, and $x = 10 \cdot y = 36 \cdot z = 54$ in the GeSbTe ternary phase diagram, if the composition of a compound composed of Ge, Sb, and Te was expressed as $Ge_x Sb_y Te_z$ where $x + y + z = 100$. When the recording film layer was made up of Ge, Sb, Te, Bi and/or In and/or Sn, and N (nitrogen), and a part of the composition of GeSbTe was replaced with Bi and/or Sn, and the composition after the replacement was expressed as $(Ge(1-w)\ Snw)x(Sb(1-v)(Bi(1-u)\ Inu)v)yTez$ where $x + y + z = 100$, GeSbTeBi, GeSbTeSn, GeSbTeBiSn, GeSnSbTeIn, GeSbTeIn, GeSbTeBiIn, GeSbSnTeBiIn, GeBiTeIn, and GeSnSbTeBiIn each with the addition of 0.1 to 10 at.% of nitrogen (N) were used where w, v, and u satisfied the expression $0 \leq w \leq 0.5$ and $0 \leq v \leq 0.7$ and $0 \leq u \leq 1$. Moreover, the recording film layer was made up of Ge, Bi, and Te and was selected from the compounds obtained by adding 0.1 to 10 at.% of nitrogen (N) to the GeSbTe-series compounds in the composition region enclosed by $x = 55 \cdot z = 45$, $x = 45 \cdot z = 55$, $x = 10 \cdot y = 28 \cdot z = 42$, and $x = 10 \cdot y = 36 \cdot z = 54$ in the GeSbTe ternary phase diagram, if the composition of a compound composed of Ge, Sb, Te was expressed as $Ge_x Bi_y Te_z$ where $x + y + z = 100$ and the composition of a compound composed of Ge, Sb, Te, and nitrogen (N) enclosed by $x = 55 \cdot z = 45$, $x = 45 \cdot z = 55$, $x = 10 \cdot y = 28 \cdot z = 42$, and $x = 10 \cdot y = 36 \cdot z = 54$ in the GeBiTe ternary phase diagram, if its composition was expressed as $Ge_x Bi_y Te_z$ where $x + y + z = 100$.

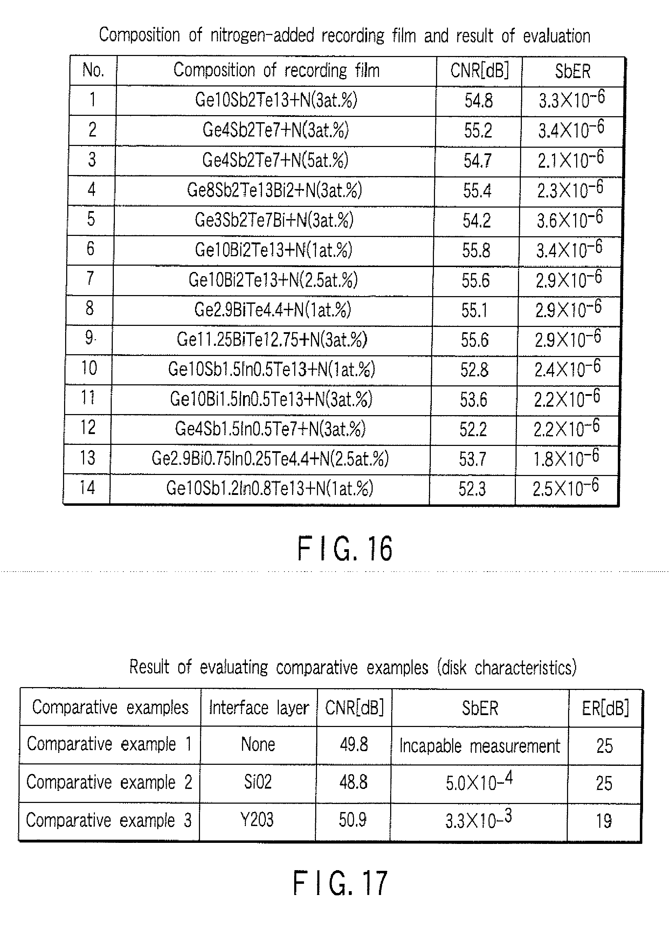

Many compositions were examined. In this embodiment, 1 to 5 at.% of nitrogen (N) was added to the compounds of FIG. 9 and the resulting compounds were used as representative examples. This embodiment shows examples of disks using recording films obtained by adding nitrogen (N) to a GeSbTe-series, a GeSbTeSn-series, and a GeBiTe-series recording film. The same experiment as that in embodiment 2 was conducted on each disk at double the linear velocity, that is, at a linear velocity of 10.8 [m/sec]. The results of the experiments are shown in FIG. 16.

FIG. 16 is a table showing an example of the result (CNR, SbER) of evaluation when a small amount of N is added to recording films with various compositions. As shown in FIG. 16, both CNR and each SbER presented good characteristics. The number of OWs was 2000 times or more, assuring practical characteristics. After an environmental test, no peeling was found in the film. Nitrogen (N) was suitable in the range of 1 to 5 at.%, preferably in the vicinity of 3 at.%.

The result of analyzing a disk produced in the same manner as the evaluated medium has shown that germanium oxide, antimony oxide, and bismuth oxide as thin as 0.9 nm to 0.1 nm were present at the interface of the layer in contact with the recording film.

[Comparative examples 1 to 3]

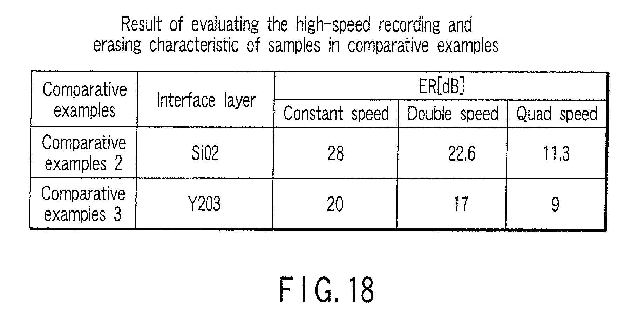

Next, comparative examples will be explained. With the same configuration as that of embodiment 2, a disk using Si02 or Y2O3 for an interface layer and a disk with no interface layer were formed. FIGS. 17 and 18 list the characteristics of the disks. The same experiment as in embodiment 2 was conducted on each disk. The results are shown in FIGS. 17 and 18.

FIG. 17 is a table showing an example of the result (CNR, SbER, ER) of evaluating comparative examples 1 to 3 when no interface layer was used and when SiO2 and Y203 were used for an interface layer. FIG. 18 is a table showing another example of the result (ER when the linear velocity was changed) of evaluating comparative examples 2 and 3 when SiO2 and Y203 were used for an interface layer. As seen from the figures, any one of CNR, SbER, and erase ratio presented an insufficient characteristic. Accordingly, the OW characteristic was not evaluated.

One of the essential structural requirements in one embodiment of the invention is to set to 1.0 or more and 2.5 or less the ratio of the DOS of the crystalline state to the DOS of the amorphous state (the DOS of the crystalline state/the DOS of the amorphous state) at an energy level 0.5 [eV] lower than the top of the DOS for the valance band of the recording film in a phase-change optical recording medium which records data using a recording film that changes an atomic arrangement reversibly. The other films and others are not limited to the materials explained in the embodiment. Moreover, as for recording film materials, minute amounts of, for example, Co, V, or Ag may be added to GeSbTe in the range that does not ruin the effect of the embodiment. Alternatively, minute amounts of, for example, Co, V, or Ag may be added to GeBiTe.

Furthermore, the embodiment limits neither the thickness of the substrate nor the order in which films are formed. The embodiment may be applied to not only a medium which allows light to enter via a substrate on which films are to be formed but also a medium which allows light to enter via a transparent sheet laminated to a film-formed substrate. For example, it is seen from the above explanation that the effect of the invention is useful for a recording medium whose transparent sheet on the light incident side is designed to be as thin as about 0.1 mm by using an objective lens with a high NA of about 0.85. The wavelength of the laser beam used is not limited to the vicinity of 405 nm. Regarding the optical characteristic of the interface layer materials, it can be said that the interface layer is practically transparent up to a short wavelength range of about 350 nm to 250 nm and therefore the effect of the embodiment is useful.

As described above, in a phase-change optical recording medium which records using a recording film that changes an atomic arrangement reversibly, the phase-change optical recording medium comprises a substrate, a recording film capable of changing an atomic arrangement reversibly, a film which is in contact with the recording film and has a crystallization enhancing function, a protective film or a dielectric film, and a reflecting film. The optical recording film causes the elements constituting the recording film to have a segregation or a concentration distribution in the direction of the thickness of the recording film from a region in contact with the recording film, or in the in-plane direction of the recording film. With this configuration, a high-density, high-speed recording medium achieves a desired mark width without recrystallization in recording. Consequently, it is possible to realize a phase-change recording medium which secures a high CNR and a low bit error rate, assures an excellent erasing ratio, achieves a good cross erase characteristic, and therefore is capable of recording and rewriting at higher speed in higher density than a conventional equivalent.

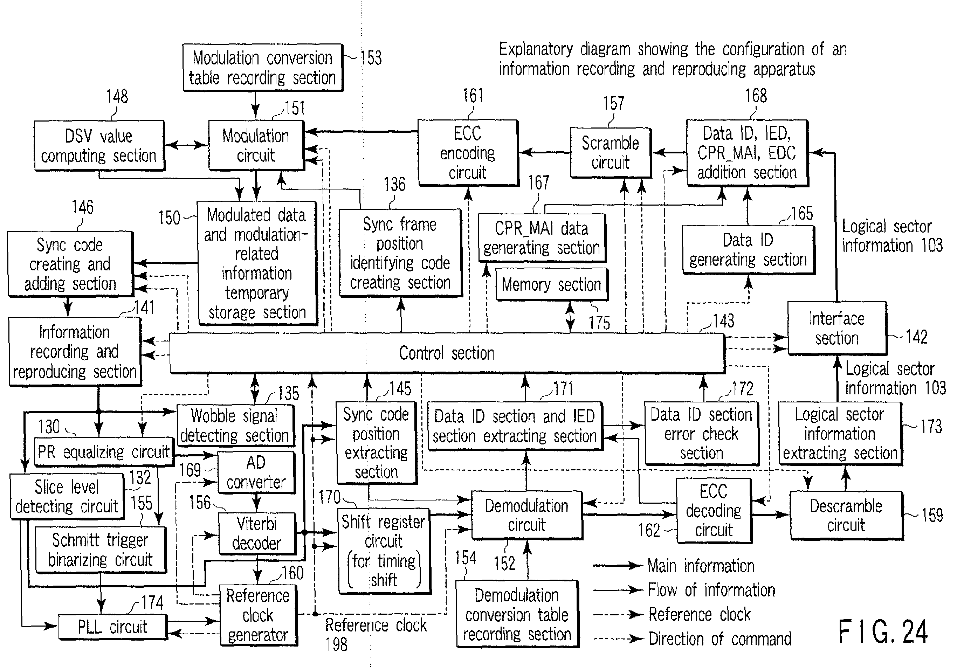

FIG. 24 is a diagram to help explain the configuration of an information recording and reproducing apparatus according to an embodiment of the invention. A phase-change optical disk 100 according to the embodiment explained with reference to FIG. 1 and the like can be recorded into or reproduced from with the apparatus having the configuration as shown in FIG. 24. In FIG. 24, the part above a control section 143 represents mainly an information recording control system for an information storage medium. An embodiment of the information reproducing apparatus corresponds to the part excluding the information recording control system of FIG. 1. In FIG. 24, a thick solid-line arrow represents the flow of main information, i.e., a reproduced signal or a recording signal, a thin sold-line arrow the flow of information, a single-dot-dash line arrow a reference clock line, a thin broken line arrow the direction of the command destination.

In FIG. 24, an optical head (not shown) is provided in an information recording and reproducing section 141. In the embodiment, information is reproduced using PRML (Partial Response Maximum Likelihood) techniques, thereby achieving a higher recording density of an information storage medium. Since the results of various experiments have shown that use of PR (1, 2, 2, 2, 1) as a PR class enables not only the linear density to be increased but also the reliability of the reproduced signal (e.g., the reliability of demodulation when a servo correction error, such as blurring or track shift, occurs) to be improved, PR (1, 2, 2, 2, 1) is used in this embodiment. In the embodiment, the modulated channel bit train is recorded onto an information storage medium according to the (d, k; m, n) modulation rule (meaning RLL (d, k) in the m/n modulation in the above-described writing method). Specifically, ETM (Eight to Twelve Modulation) that converts 8-bit data into 12-channel bits (where m = 8 and n = 12) is used as a modulation method. As run length limited (RLL) restrictions placed on the length of consecutive "0s" in the modulated channel bit train, RLL (1, 10) conditions with the minimum value of the number of consecutive "0s" being d = 1 and the maximum value being k = 10 are applied. In the embodiment, the channel bit interval is shortened close to its limit, aiming at making the recording density of the information storage medium higher. As a result, for example, when the pattern "101010101010101010101010", the repetition of a pattern with d = 1, is recorded onto an information storage medium and the data is reproduced at the information recording and reproducing section 141, the amplitude of the reproduced raw signal is almost buried in noise, since the cut-off frequency of the MTF characteristic of the reproducing optical system is being approached. Therefore, PRML (Partial Response Maximum Likelihood) techniques are used as a method of reproducing recording marks or pits whose density has been squeezed close to the limit (cut-off frequency) of the MTF characteristic.

Specifically, the signal reproduced at the information recording and reproducing section 141 is subjected to reproduced waveform correction at a PR equalizing circuit 130. With the timing of a reference clock 198 sent from a reference clock generator 160, an AD converter 169 samples the signal passed through the PR equalizing circuit 130 and converts the signal into a digital amount. The digital amount is then subjected to a Viterbi decoding process at a Viterbi decoder 156. The data after the Viterbi decoding process is treated as data identical with that binarized at a conventional slice level. When PRML techniques are used, a shift in the sampling timing at the AD converter 169 increases the error rate of data after Viterbi decoding. Thus, to increase the accuracy of sampling timing, the information reproducing apparatus or the information recording and reproducing apparatus particularly has a separate sampling timing extracting circuit (a combination of a Schmitt trigger binarizing circuit 155 and a PLL circuit 174).

The Schmitt trigger binarizing circuit 155 has a specific range of slice reference level for binarization (actually the voltage value in the forward direction of the diode). Only when the specific range is exceeded does the binarizing circuit 155 binarize the signal. Therefore, for example, if the pattern "101010101010101010101010" has been input as described above, the signal amplitude is so small that binarization is not performed. If a rougher pattern, for example, "1001001001001001001001" has been input, since the amplitude of the reproduced raw signal becomes larger, the switching between the polarities of a binarized signal is performed with the "1" timing at the Schmitt trigger binarizing circuit 155. In this embodiment, NRZI (Non-Return to Zero Invert) techniques are used and the position of "1" in the pattern coincides with the recording mark or the edge part (boundary part) of the pit.

The PLL circuit 174 detects the difference in frequency and phase between the binarized signal output from the Schmitt trigger binarizing circuit 155 and the reference clock 198 signal sent from the reference clock generator 160 and changes the frequency and phase of the output clock of the PLL circuit 174. Using the output signal of the PLL circuit 174 and decoding characteristic information on the Viterbi decoder 156 (although not shown concretely, information on the convergence length (the distance to convergence) in the path metric memory in the Viterbi decoder 156), the reference clock generator 160 applies feedback to (the frequency and phase of) the reference clock 198 so that the error rate after Viterbi decoding may be decreased. The reference clock 198 generated at the reference clock generator 160 is used as reference timing in processing a reproduced signal.

A synchronizing code position extracting section 145 detects the positions of synchronizing codes (sync codes) mixed in the output data string of the Viterbi decoder 156 and extracts the starting position of the output data. With the starting position as a reference, a demodulation circuit 152 demodulates the data temporarily stored in a shift register circuit 170. In the embodiment, the original bit train is restored by referring to a conversion table recorded in a demodulation conversion table recording section 154 for every 12 channel bits. Thereafter, an ECC decoding circuit 162 carries out an error correction process. Then, a descramble circuit 159 performs descrambling. In a recording-type (rewritable or recordable) information storage medium of the embodiment, address information has been recorded beforehand by wobble modulation. A wobble signal detecting section 135 reproduces the address information (that is, determines the contents of the wobble signal) and supplies information necessary to access a desired location to the control section 143.

The information recording control system above the control section 143 will be explained. A data ID generating section 165 creates data ID information according to the recording location on the information storage medium. When a CPR_MAI data generating section 167 creates copy control information, a data ID, IED, CPR_MAI, EDC adding section 168 adds various pieces of information, including data ID, IED, CPR_MAI, and EDC to the information to be recorded. Thereafter, a descramble circuit 157 performs descrambling. Then, after an ECC encoding circuit 161 constructs an ECC block and a modulation circuit 151 converts the ECC block into a channel bit train, a synchronizing code creating and adding section 146 adds a synchronizing code to the bit train, and the information recording and reproducing section 141 records the data onto the information storage medium. In modulation, a DSV (Digital Sum Value) value computing section 148 calculates DSV values after modulation one after another. The values are fed back to code conversion in modulation.

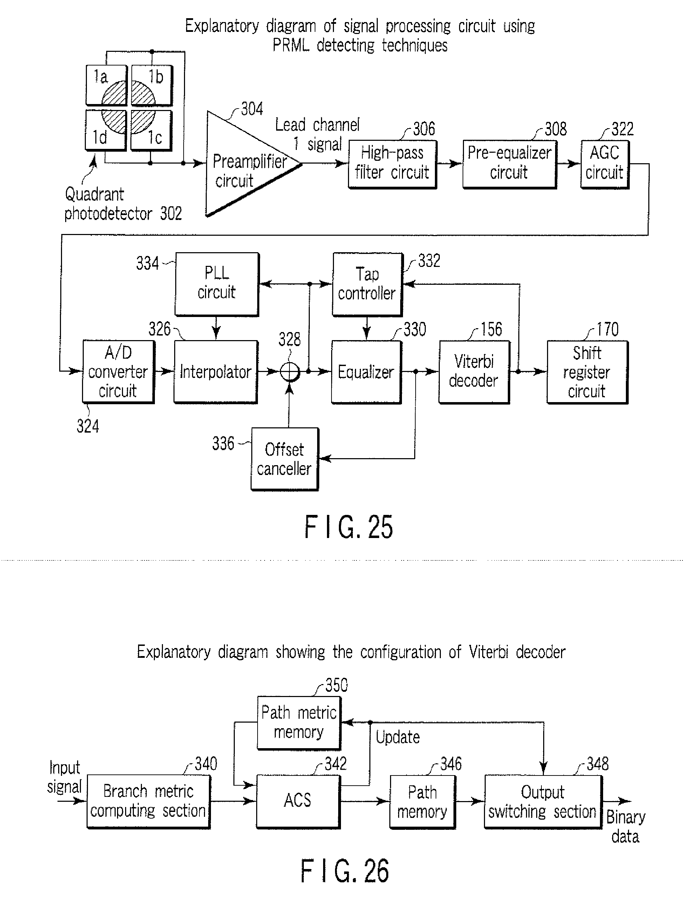

FIG. 25 is a diagram to help explain an example of the signal processing circuit using the PRML detecting method. FIG. 25 shows the signal processing circuit using the PRML method to reproduce a signal in the data are, data lead-in area, and data lead-out area. A quadrant photodetector 302 of FIG. 25 is fixed to the optical head existing in the information recording and reproducing section 141 of FIG. 24. A signal obtained by summing the sense signals from the respective light-detecting cells of the quadrant photodetector 302 is called a lead channel 1 signal. A detailed configuration of the PR equalizing circuit 130 of FIG. 24 is composed of the respective circuits ranging from a preamplifier circuit 304 to a tap controller 332, an equalizer 330, and an offset canceller 336 in FIG. 25. A PLL circuit 334 of FIG. 25 is a part of the PR equalizing circuit 130 of FIG. 24 and differs from the Schmitt trigger binarizing circuit 155 of FIG. 24. A primary cut-off frequency of the high-pass filter circuit 306 in FIG. 25 is set at 1 KHz. A 7-tap equalizer is used as the pre-equalizer circuit (because use of a 7-tap equalizer minimizes the circuit size and enables the reproduced signal to be detected with high accuracy). The sampling clock frequency of an A/D converter 324 is at 72 MHz and the digital output is an 8-bit one. When the PRML detecting method is affected by level fluctuations (DC offset) in the entire reproduced signal, an error is liable to occur in Viterbi demodulation. To eliminate this effect, the offset canceller 336 corrects the offset using the signal obtained from the output of the equalizer 330. In the embodiment of FIG. 25, an adaptive equalizing process is carried out at the PR equalizing circuit 130 of FIG. 24. To do this, a tap controller 332 is used which automatically modifies each tap coefficient in the equalizer using the output signal of the Viterbi decoder 156.

FIG. 26 is a diagram to help explain the configuration of the Viterbi decoder according to the embodiment.

FIG. 26 shows the configuration of the Viterbi decoder 156 of FIG. 24 or 25. A branch metric computing section 340 calculates the branch metric for all of the branches expected from the input signal and sends the calculated value to an ACS 342. The ACS 342, which stands for Add Compare Select, calculates the path metric by adding the branch metric for each of the expected paths and transfers the result of the calculation to a path metric memory 350. At this time, the ACS 342 does calculations also referring to the information in the path metric memory 350. A path memory 346 temporarily stores an expected situation of each path (transition) and the value of the path metric calculated at the ACS 342 according to the path. An output switching section 348 compares the path metric for each path with another and selects the path whose path metric value is the smallest.

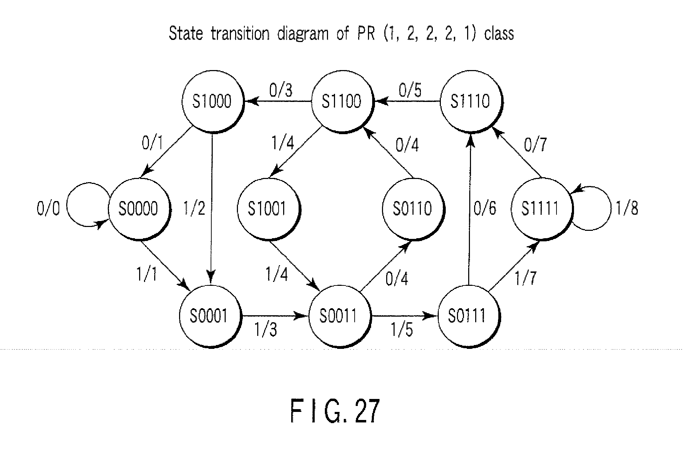

FIG. 27 is a diagram to help explain an example of state transition in PR (1, 2, 2, 2, 1) class. Since in the transitions of states expected in PR (1, 2, 2, 2, 1) class, only the one shown in FIG. 27 is possible, the Viterbi decoder 156 determines a path which can be present (or expected) in decoding, on the basis of the transition diagram of FIG. 27.

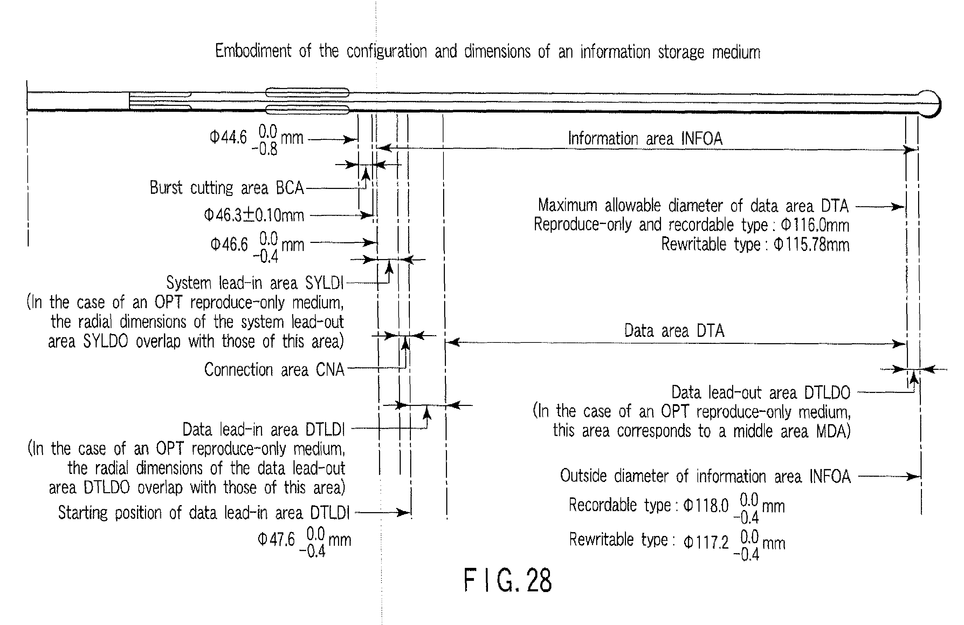

FIG. 28 is a diagram to help explain an example of the structure and dimensions of an optical recording medium (or phase-change optical disk) according to an embodiment of the invention. FIG. 28 shows the structure and dimensions of an information storage medium of the embodiment. In the embodiment, the following three types of information storage medium are described:

• "Reproduce-only information storage medium" which is for reproduction only and prevents recording

- "Recordable information storage medium" which enables additional recording only once
- "Rewritable information storage medium" which enables rewriting as many times as necessary

As shown in FIG. 28, the three types of information storage medium share most of the structure and dimensions. In each of the three types of information storage medium, a burst cutting area BCA, a system lead-in area SYLDI, a connection area CNA, a data lead-in area DTLDI, and a data area DTA are arranged from the inner edge in that order. In all of the information storage mediums, excluding OPT reproduce-only mediums, a data lead-out area DTLDO is provided on the outer edge part. As described later, in OPT reproduce-only mediums, a middle area MDA is provided on the outer edge part. In the system lead-in area SYLDI, information is recorded in an emboss (prepit) form. This area is for reproduction only (prevents additional recording) in each of the recordable information storage medium and the rewritable one.

In a reproduce-only information storage medium, information is recorded in an emboss (prepit) form in the data lead-in area DTLDI, whereas in a recordable and a rewritable information storage medium, the data lead-in area DTLDI enables new information to be recorded additionally (or rewriting in the rewritable type) by creating recording marks. As described later, in a recordable and a rewritable information storage medium, areas enabling new information to be recorded additionally (or rewriting in the rewritable type) and reproduce-only areas where information is recorded in emboss (prepit) form are mixed in the data lead-out area DTLDO. In the data area DTA, data lead-in area DTLDI, data lead-out area DTLDO, and middle area MDA of FIG. 28, the signals recorded there are reproduced by the PRML method, thereby achieving a higher recording density of the information storage medium (particularly an improvement in the linear density). At the same time, in the system lead-in area SYLDI and system lead-out area SYLDO, the signals recorded there are reproduced by the slice level detecting method, thereby securing the interchangeability with an existing DVD and the stabilization of reproduction.

Unlike the present DVD standards, the burst cutting area BCA and the system lead-in area SYLDI do not overlap with each other and are separated from each other spatially in the embodiment of FIG. 28. Separating the burst cutting area BCA and the system lead-in area SYLDI physically from each other prevents the information recorded in the system lead-in area SYLDI and the information recorded in the burst cutting area BCA from interfering with each other in reproducing information, which enables information to be reproduced with high accuracy.

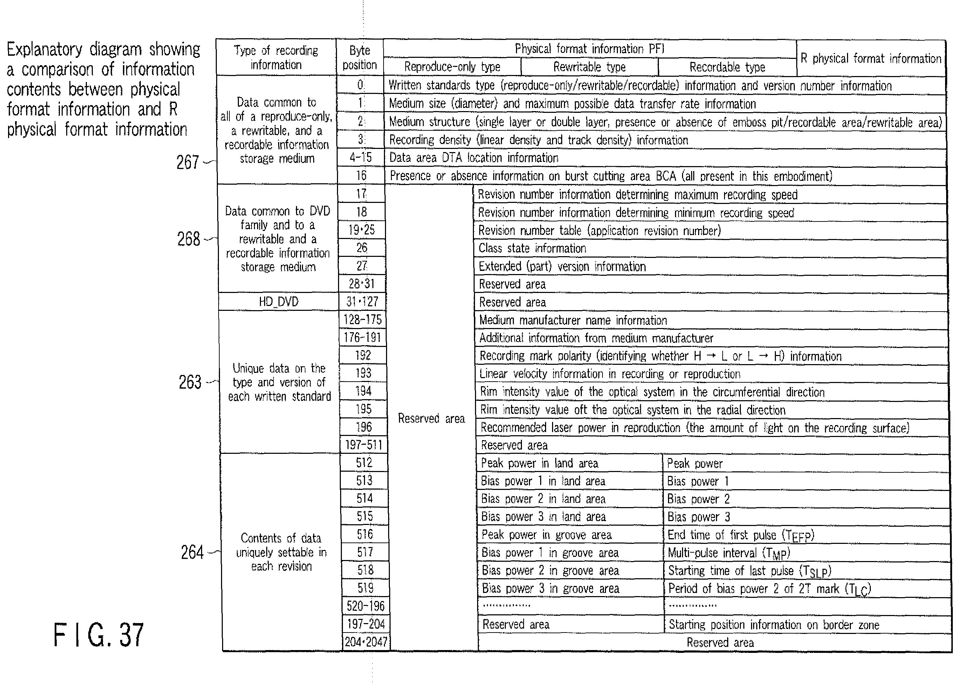

Another embodiment related to the embodiment is a method of forming a microscopic concavo-convex shape previously in a place where the burst cutting area BCA is provided, when a Low-to-High recording film is used. The polarity of the recording mark (determination of whether the recording film is High-to-Low or Low-to-High) existing at the $192^{nd}$ byte in FIG. 37 is explained in more detail later. The embodiment incorporates not only a conventional High-to-Low recording film but also a Low-to-High recording film into the standards, increasing the selection of recording film, which enables not only high-speed recording to be realized but also a low-cost medium to be supplied. As described later, the embodiment also takes into account a case where a Low-to-High recording film is used. Data (barcode data) recorded in the burst cutting area BCA is created by subjecting a recording film to local laser exposure.

Since the system lead-in area SYLDI is formed in the emboss pit area 211, the reproduced signal from the system lead-in area SYLDI appears in the direction in which the amount of light reflection decreases as compared with the level of light reflection from a mirror surface 210. If the burst cutting area BCA is brought into the state of the mirror surface 210 and a Low-to-High recording film is used, the reproduced signal from the data written in the burst cutting area BCA appears in the direction in which the amount of light reflection increases as compared with the level of light reflection from the mirror surface 210 (in an unrecorded state). This results in a great difference between the positions (amplitude levels) of the maximum and minimum levels of the reproduced signal from the data created in the burst cutting area BCA and the positions (amplitude levels) of the maximum and minimum levels of the reproduced signal from the system lead-in area SYLDI.

The information reproducing apparatus or information recording and reproducing apparatus carries out processes in this order:

    (1) Reproducing the information in the burst cutting area BCA
    (2) Reproducing the information in the control data zone CDZ in the system lead-in area SYLDI
    (3) Reproducing the information in the data lead-in area DTLDI (in the case of a recordable or a rewritable information storage medium)
    (4) Readjusting (optimizing) the reproducing circuit constant in the reference code recording zone RCZ
    (5) Reproducing the information recorded in the data area DTA or recording new information

Therefore, if there is a great difference between the reproduced signal amplitude level from the data created in the burst cutting area BCA and the reproduced signal amplitude level from the system lead-in area SYLDI, a problem arises: the reliability of information reproduction decreases. In this embodiment, to solve this problem, a microscopic concavo-convex shape is formed beforehand in the burst cutting area BCA when a Low-to-High recording film is used.

Forming a microscopic concavo-convex shape in advance makes the light reflection level lower than the light reflection level from the mirror surface 210 because of the effect of light interference, and decreases greatly the difference between the reproduced signal amplitude level (sense level) from the data formed in the burst cutting area BCA and the reproduced signal amplitude level (sense level) from the system lead-in area SYLDI before recording data (barcode data) by local laser exposure, which improves the reliability of information reproduction. Furthermore, the process in moving from (1) to (2) becomes easier.

When a Low-to-High recording film is used, there is a method of using an emboss pit area 211, as in the system lead-in area SYLDI, as a microscopic concavo-convex shape previously formed in the burst cutting area BCA. Another embodiment utilizes a method of using a groove area 214 or a land area and groove area 213, as in the data lead-in area DTLDI or the data area DTA. In the embodiment which arranges the system lead-in area SYLDI and the burst cutting area BCA separately, when the burst cutting area BCA overlaps with the emboss pit area 211, the noise components in the reproduced signal from the data created in the burst cutting area BCA increase because of unwanted interference. When the groove area 214 or land area and groove area 213 is used instead of the emboss pit area 211 as a microscopic concavo-convex shape in the burst cutting area BCA, the noise components in the reproduced signal from the data created in the burst cutting area BCA due to unwanted interference decrease, which improves the quality of the reproduced signal.

If the track pitch of the groove area 214 or the land area and groove area 213 formed in the burst cutting area BCA is caused to coincide with the track pitch of the system lead-in area SYLDI, the productivity of the information storage medium is improved. Specifically, when a matrix of an information storage medium is produced, the feed motor speed at the exposure section of a matrix recording apparatus is made constant, thereby forming emboss pits in the system lead-in area. At this time, the track pitch of the groove area 214 or the land area and groove area 213 formed in the burst cutting area BCA is caused to coincide with the track pitch of the emboss pits in the system lead-in area SYLDI, which enables the feed motor speed to be kept constant over the burst cutting area BCA and the system lead-in area SYLDI. Therefore, the feed motor speed need not be changed, which makes it difficult for pitch irregularity to occur and improves the productivity of the information storage medium.

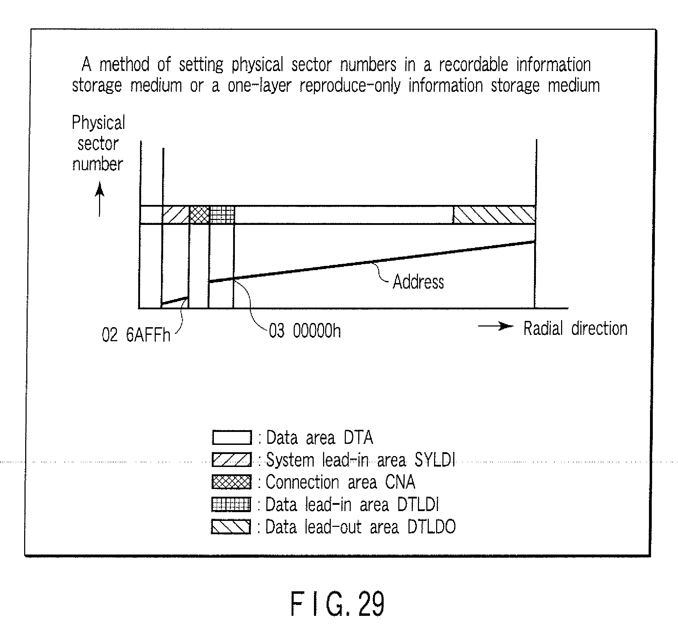

FIG. 29 is a diagram to help explain a method of setting physical sector numbers in a rewritable information storage medium or a reproduce-only information storage medium with a one-layer structure. In all three types of information storage medium, the minimum management unit of information recorded in an information storage medium is a 2048-byte sector unit. A physical address in 2048-byte sector units is defined as a physical sector number. FIG. 29 shows a method of setting a physical sector number in a recordable information storage medium and a reproduce-only information storage medium with a one-layer structure. No physical sector number is given to the burst cutting area BCA and connection area CNA. Physical sector numbers are set to the system lead-in area SYLDI, data area DTA, and data lead-out area DTLDO in ascending order from the inner edge. Setting is done so that the last physical sector number in the system lead-in area SYLDI may be "026AFFh" and the physical sector number at the starting position in the data area DTA may be "030000h".

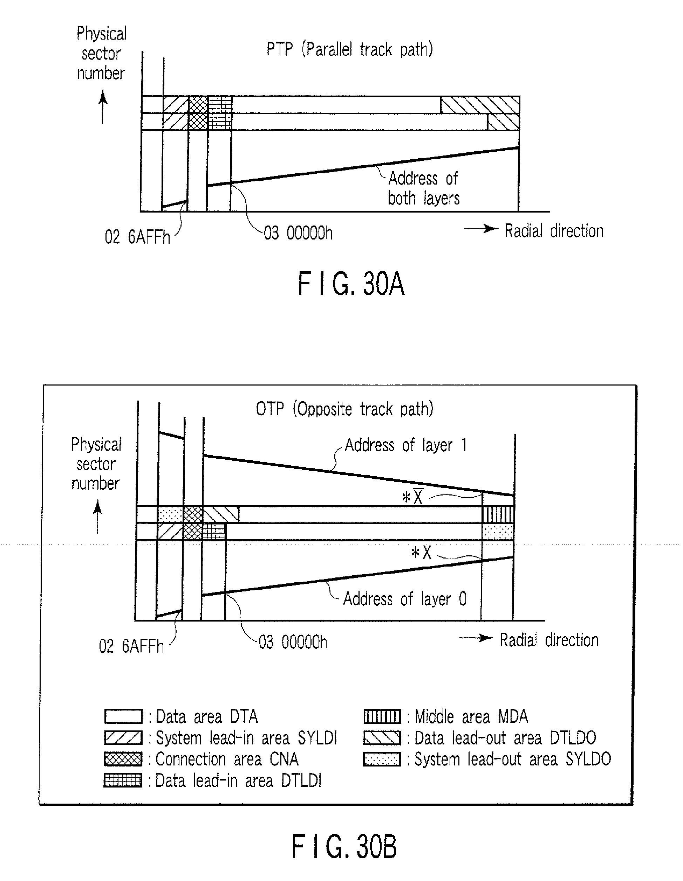

FIGS. 30A and 30B are diagrams to help explain a method of setting physical sector numbers in a reproduce-only information storage medium with a two-layer structure. There are two methods of setting physical sector numbers in a reproduce-only information storage medium with a two-layer structure. One is a parallel arrangement (Parallel Track Path) PTP shown in FIG. 30A in which the physical number setting method of FIG. 29 is applied to both of the two layers. The other method is an opposite arrangement (Opposite Track Path) OPT shown in FIG. 30B, in which physical sector numbers are set from the inner edge toward the outer edge in ascending order in the front layer (Layer 0) and from the outer edge toward the inner edge in ascending order in the back layer (Layer 1). In the OPT arrangement, a middle area MDA, a data lead-out area DTLDO, and a system lead-out area SYLDO are arranged.

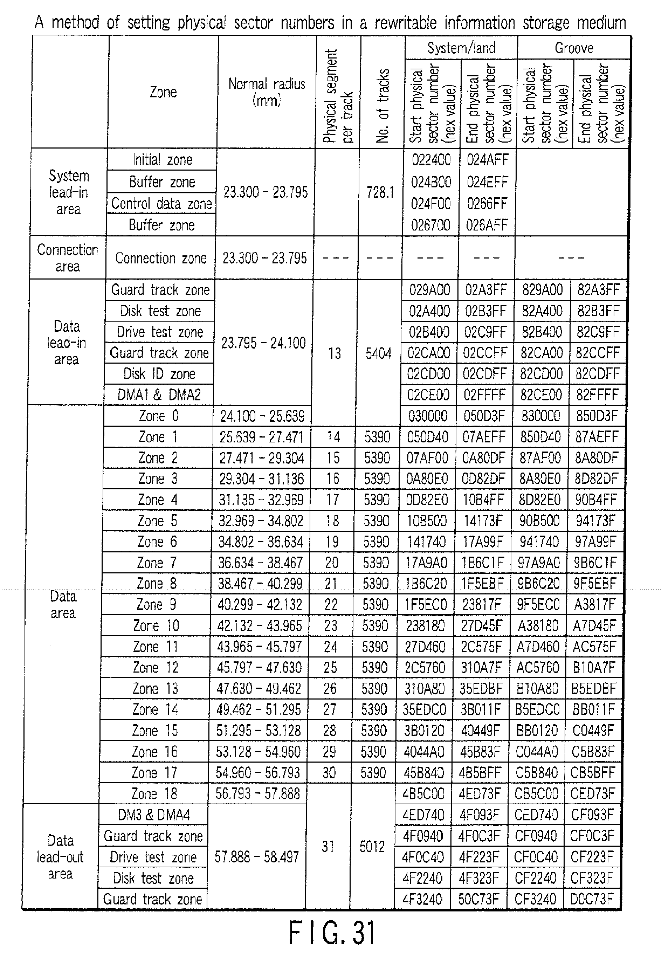

FIG. 31 is a diagram to help explain a method of setting physical sector numbers in a rewritable information storage medium. FIG. 31 shows a method of setting physical sector numbers in a rewritable information storage medium. In a rewritable information storage medium, physical sector numbers are set in each of the land area and groove area. The data area DTA is divided into 19 zones.

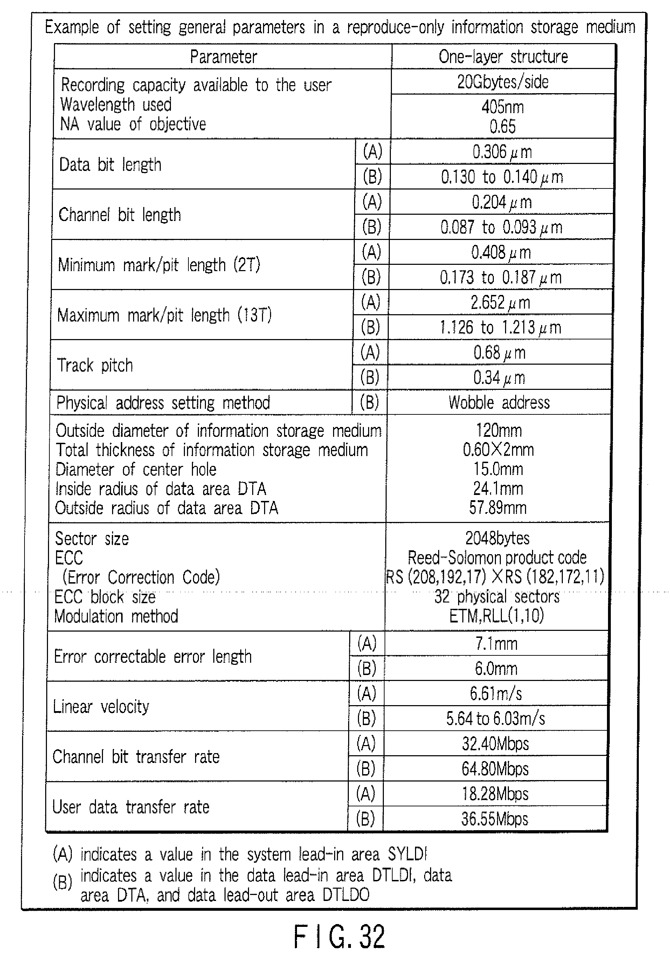

FIG. 32 is a table to help explain an example of general parameter values in a rewritable information storage medium (20-GB-per-single-layer single-sided type). FIG. 32 shows the values of various parameters in an embodiment of the rewrite-only information storage medium. The track pitch and linear density (data bit length) are squeezed in a rewrite-only information storage medium, thereby increasing the recoding capacity, as compared with a reproduce-only or a recordable information storage medium. As described later, land/groove recording is used in a rewrite-only information storage medium, thereby squeezing the track pitch while reducing the effect of crosstalk of adjacent tracks. In each of a reproduce-only information storage medium, a recordable information storage medium, and a rewritable information storage medium, the data bit length of the system lead-in/-out area SYLDI/SYLDO and the track pitch (corresponding to the recording density) are made greater (or the recording density is made lower) than the data lead-in/-out area DTLDI/DTLDO.

The data bit length and track pitch of the system lead-in/-out area SYLDI/SYLDO are brought close to the values of the lead-in area of an existing DVD, thereby securing the interchangeability with the existing DVD. In this embodiment, too, as with an existing DVD-R, the step of an emboss in the system lead-in/-out area SYLDI/SYLDO is set shallow. This makes the depth of a pre-groove in a recordable information storage medium shallower, producing the effect of increasing the modulation degree of the reproduced signal from the recording mark formed in additional writing on the pre-groove. Conversely, there arises another problem: the modulation degree of the reproduced signal from the system lead-in/-out area SYLDI/SYLDO becomes smaller. To overcome this problem, the data bit length (and track pitch) of the system lead-in/-out area SYLDI/SYLDO is made rougher, thereby separating (making much lower) the repeat frequency of pits and spaces in the densest position from the optical cut-off frequency of the reproduction objective MTF (Modulation Transfer Function), which makes it possible to increase the amplitude of the reproduced signal from the system lead-in/-out area SYLDI/SYLDO and stabilize reproduction.

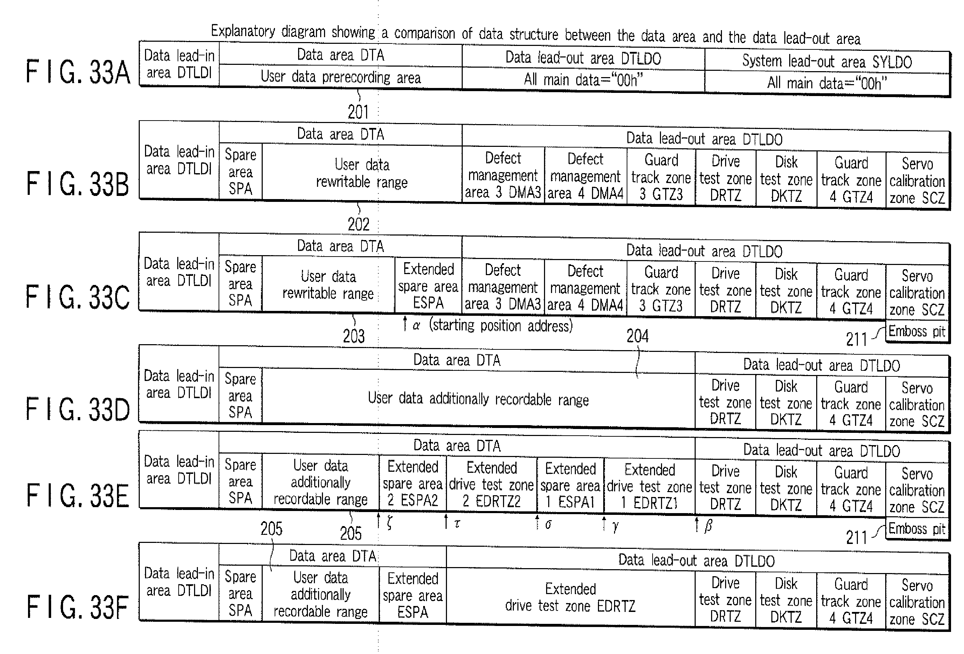

FIGS. 33A, 33B, 33C, 33D, 33E, and 33F are diagrams to help explain comparative examples of the data structure of the data area DTA and data lead-out area in each type of information storage medium. FIGS. 33A, 33B, 33C, 33D, 33E, and 33F show a comparison of the data structure of the data area DTA and data lead-out area DTLDO between the various types of information storage medium. FIG. 33A shows the data structure of a reproduce-only information storage medium. FIGS. 33B and 33C show the data structure of a rewritable information storage medium. FIGS. 33D, 33E, and 33F show the data structure of a recordable information storage medium. FIGS. 33B and 33D show a data structure in the initial state (before recording). FIGS. 33C, 33E, and 33F show a data structure in a state where recording (additional recording or rewriting) has progressed to some extent.

As shown in FIG. 33A, in a reproduce-only information storage medium, the data recorded in the data lead-out area DTLDO and system lead-out area SYLDO has a data frame structure. All of the values of the main data are set to "00h". In a reproduce-only information storage medium, all of the data area DTA can be used as a user data prerecording area 201. In each embodiment of a recordable and a rewritable information storage medium, each of the user data rewritable/additionally recordable ranges is made narrower than the data area DTA.

In a recordable information storage medium or a rewritable information storage medium, a spare area SPA is provided in the innermost part of the data area DTA. If a defective part has occurred in the data area DTA, a substituting process is carried out using the spare area SPA. In the case of a rewritable information storage medium, the substitute history information (defect management information) is recorded into the first and second defect management areas DMA1, DMA2 and into the third and fourth defect management areas DMA3, DMA4. The defect management information recorded in the third and fourth defect management areas DMA3, DMA4 is the same as that recorded in the first and second defect management areas DMA1, DMA2. In the case of a recordable information storage medium, substitute history information (defect management information) when a substituting process is carried out is recorded in the data lead-in area DTLDI and in copy information C_RMZ about the contents of recording into a recording management zone existing in a border zone explained later.

While defect management is not performed on an existing DVD-R disk, there have been strong demands that the reliability of information recorded on a recordable information storage medium should be increased, because an increase in the number of DVD-R disks manufactured has permitted partially defective DVD-R disks to appear on the market. In this embodiment, as shown in FIGS. 33D, 33E, and 33F, a spare area SPA is also provided in a recordable information storage medium, which enables defect management by a substituting process. Therefore, even if a recordable information storage medium is partially defective, the medium is subjected to a defect management process, which enables the reliability of the recorded information to be improved.

In a rewritable information storage medium or a recordable information storage medium, if many defects have occurred, the information recording and reproducing apparatus on the user side makes a determination and brings the medium into the state immediately after the user purchased the medium as shown in FIGS. 33B and 33D and automatically sets extended spare areas ESPA, ESPA1, ESPA2 to expand the spare place. In this way, the extended spare areas ESPA, ESPA1, ESPA2 are made settable, which makes it possible to sell mediums with many defects due to manufacturing conditions. As a result, the manufacturing yield of the medium increases, which enables the price of the medium to be reduced.

As shown in FIGS. 33C, 33E, and 33F, when extended spare areas ESPA, ESPA1, ESPA2 are further provided in the data area DTA, the user date rewriting or additionally recordable ranges 203, 205 decrease. Therefore, the position information must be managed. In a rewritable information storage medium, the information is recorded in the first to fourth defect management areas DMA1 to DMA4 and further in the control data zone CDZ. In the case of a recordable information storage medium, the information is recorded in the recording management zone RMZ existing in each of the data lead-in area DTLDI and the border-out BRDO. The information is further recorded in the recording management data RMD in the recording management zone RMZ. Since the recording management data RMD is additionally recorded in the recording management zone RMZ in a updating manner each time the contents of the management data are updated, the information can be updated and managed with good timing, even if how many times the extended spare area is set again (the embodiment in FIG. 33E shows a state where extended spare area 1 EAPA1 is set and where even after the extended spare area 1 EAPA1 is all used up, defects are so many that another spare area has to be set and therefore an extended spare area 2 ESPA2 is further set later).

A third guard track zone GTZ3 shown in FIGS. 33B and 33C is provided to separate a fourth defect management area DMA4 and a drive test zone DRTZ from each other. A guard track zone GTZ4 is provided to separate a disk test zone DKTZ and a servo calibration zone SCZ from each other. Like the first and second guard track zones GTZ1, GTZ2, the third and fourth guard track zones GTZ3, GTZ4 are set as areas where recording must not be done by forming recording marks. Since the third and fourth guard track zones GTZ3, GTZ4 exist in the data lead-out area DTLDO, a pre-groove area has been formed in these areas in a recordable information storage medium and a groove area and a land area have been formed in these areas in a rewritable information storage medium. Since a wobble address has been recorded in the pre-groove area or the groove area and land area as shown in FIG. 32, the present position on the information storage medium is determined using the wobble address.

A drive test zone DRTZ is secured as an area for the information recording and reproducing apparatus to do trial writing before recording information onto the information storage medium. After the information recording and reproducing apparatus does trial writing in this area beforehand and calculates the optimum recording condition (write strategy), it can record information in the data area DTA under the optimum recording condition.

A disk test zone DKTZ is an area for the information storage medium manufacturer to conduct a quality test (evaluation).

In a recordable information storage medium, a pre-groove area has been formed in the whole data lead-out area DTLDO, excluding the servo calibration zone SCZ. In a rewritable information storage medium, a groove area and a land area have been formed in the same area, thereby enabling recording marks to be recorded (or additionally recorded or rewritten). As shown in FIGS. 33C and 33E, the servo calibration zone SCZ is made up of an emboss pit area 211 in place of the pre-groove area 214 or land area and groove area 213 as in the system lead-in area SYLDI. This area forms a continuous track of emboss pits following the other area in the data lead-out area DTLDO. The track, which is spirally continuous, forms emboss pits along the circumference of the information storage medium through 360 degrees. The area is provided to detect the amount of tilt of the information storage medium using a DPD (Deferential Phase Detecting) method.

If the information storage medium inclines, an offset occurs in the track shift sense signal amplitude in the DPD method. It is possible to detect the amount of tilt from the magnitude of the offset and the direction of tilt from the offset direction with high accuracy. Using the principle, an emboss pit which enables DPD detection is formed in the outermost edge of the information storage medium (or the outer edge of the data lead-out area DTLDO) in advance, which enables the tilt to be detected inexpensively with high accuracy without adding a (tilt detecting) special part to the optical head existing in the information recording and reproducing section 141 of FIG. 24. Furthermore, by detecting the amount of tilt of the outer edge, the stabilization of servo can be realized even in the data area DTA (by tilt amount correction).

In this embodiment, the track pitch in the servo calibration area SCZ is caused to match with another area in the data lead-out area DTLDO, thereby improving the productivity of the information storage medium, which enables the medium to be produced at lower cost as a result of an improvement in the yield. Specifically, in a recordable information storage medium, a pre-groove is formed in the other area of the data lead-out area DTLDO. When a matrix of a recordable information storage medium is manufactured, the pre-groove is made by keeping constant the feed motor speed of the exposure section of the matrix recording apparatus. At this time, the track pitch in the servo calibration area SCS is caused to match with the other area of the data lead-out area DTLDO, thereby keeping constant the feed motor speed also in the servo calibration area SCZ, which makes pitch irregularities less liable to take place and therefore improves the productivity of the information storage medium.

Another embodiment is a method of causing at least one of the track pitch or data bit length in the servo calibration area SCZ to match with the track pitch or data bit length in the system lead-in area SYLDI. As described above, the amount of tilt and the direction of tilt in the servo calibration area SCZ have been measured using the DPD method. Using the result in the data area DTA too, the servo has been stabilized in the data area DTA. In this connection, a method of estimating the amount of tilt in the data area DTA is to measure the amount of tilt and its direction in the system lead-in area SYLDI in advance by the DPD method and estimate the amount of tilt using the relationship with the result of measurements in the servo calibration area SCZ.

When the DPD method is used, the amount of offset of the sense signal amplitude to the tilt of the information storage medium and the direction in which an offset appears change, depending on the track pitch of the emboss pit and the data bit length. Therefore, at least either the track pitch or data bit length in the servo calibration area SCZ is caused to match with the track pitch or data bit length in the system lead-in area SYLDI, thereby causing the amount of offset of the sense signal amplitude and the detection characteristic in the direction in which an offset occurs to coincide with those in the servo calibration area SCZ and system lead-in area SYLDI, which produces the effect of making it easier to correlate them and to estimate the amount of tilt and the direction of tilt in the data area DTA.

As shown in FIG. 33D, in a recordable information storage medium, a drive test zone DRTZ is provided on each of the inner edge side and the outer edge side. The larger the number of trial writings to the drive test zone DRTZ, the more minutely the optimum recording condition can be searched for by assigning detailed parameters. This improves the accuracy of recording in the data area DTA. In a rewritable information storage medium, the drive test zone DRTZ can be reused by overwriting. In a recordable information storage medium, when an attempt is made to raise the recording accuracy by increasing the number of trial writings, a problem arises: the drive test zone DRTZ is used up soon. To solve this problem, in this embodiment, an extended drive test zone EDRTZ can be set in a direction from the outer edge toward the inner edge as needed, thereby enabling the extension of a drive test zone.

In the embodiment, the method of setting an extended drive test zone and the method of doing trial writing in the set extended drive test zone are characterized in that:

(1) Extended drive test zones EDRTZ are set (or framed) collectively one after another from the outer edge (closer to the data lead-out area DTLDO) toward the inner edge.

As shown in FIG. 33E, extended drive test zone 1 EDRTZ1 is set as a collective area in the place closest to the outer edge in the data area (or the place closest to the data lead-out area DTLDO). After extended drive test zone 1 EDRTZ1 is used up, extended drive test zone 2 EDRTZ2 can be set as a collective area existing closer to the inner edge than extended drive test zone 1 EDRTZ1.

(2) Trial writing is done from the inner edge side in the extended drive test zone EDRTZ.

When trial writing is done in the extended drive test zone EDRTZ, it is done along the groove area 214 provided spirally from the inner edge toward the outer edge. Present trial writing is performed in an unrecorded place immediately behind the (recorded) place in which the preceding trial writing was done.

The data area is so configured that additional recording is done along the groove area 214 provided spirally from the inner edge toward the outer edge. Trial writing in the extended drive test zone is done behind the place where the preceding trial writing was done, making it possible to carry out the process of "checking the place where the preceding trial writing was done" → the process of "doing the present trial writing" serially in that order, which not only facilitates the trial writing process but also makes it easier to manage the places where trial writing was done in the extended drive test zone EDRTZ.

(3) Data lead-out area DTLDO including the extended drive test zone EDRTZ can be set again.

FIG. 33E shows an example of setting two extended spare areas ESPA1, ESPA2 and two extended drive test zones EDRTZ1, EDRTZ2 in the data area DTA. In this case, in this embodiment, data lead-out area DTLDO can be set again in the area including the extended drive test zone EDRTZ2 as shown in FIG. 33F. In parallel with this, the range of the data area DTA is set again in such a manner that the range is made narrower, which makes it easier to manage the additionally recordable range 205 of user data existing in the data area DTA. If resetting is done as shown in FIG. 33F, the setting place of extended spare area ESPA1 shown in FIG. 33E is regarded as "already used-up extended spare area" and it is determined that an unrecorded area (additional trial writing allowable area) exists only in the extended spare area ESPA2 in the extended drive test zone EDRTZ. In this case, nondefective information recorded in the extended spare area ESPA1 and used for substitution is moved to an unsubstituted area in the extended spare area ESPA2 and the defect management information is rewritten. At this time, the starting position information on the reset data lead-out area DTLDO is recorded in the arrangement location information of the latest (updated) data area DTA in RMD field 0 of the recording management data RMD.

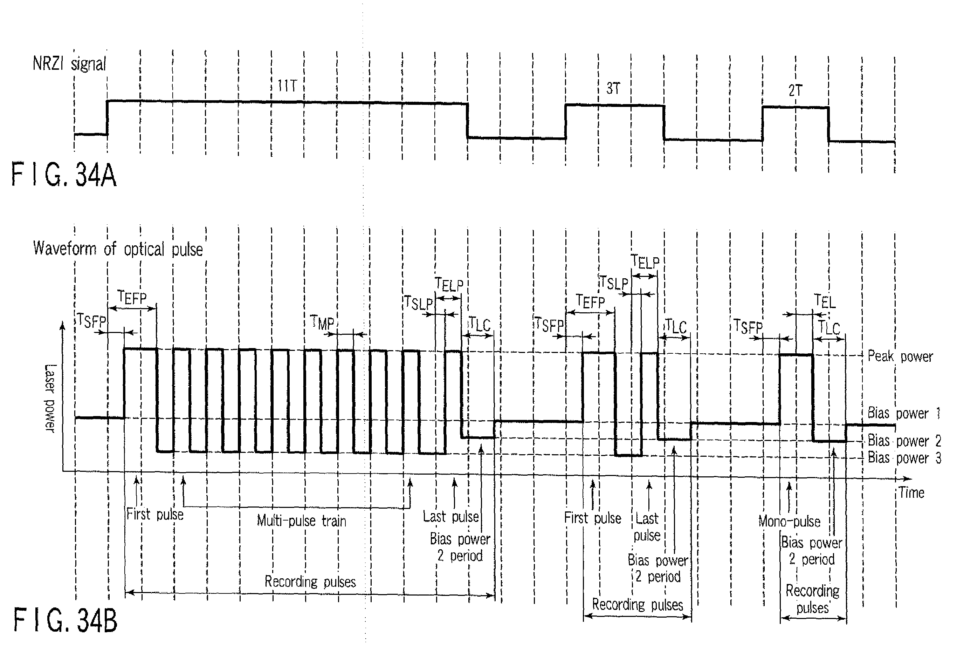

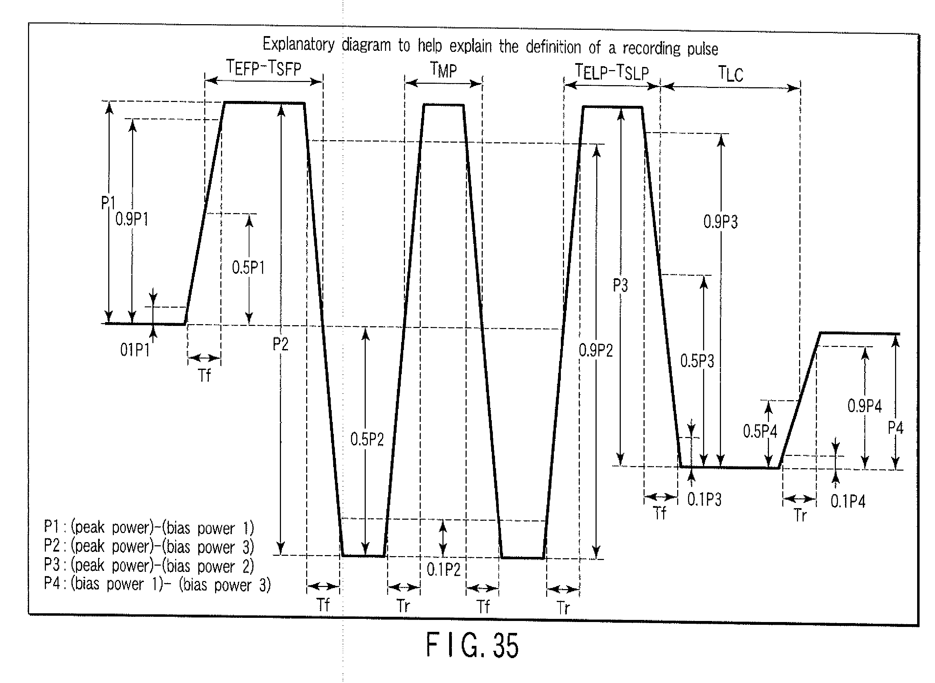

FIGS. 34A and 34B show a waveform (write strategy) of recording pulses used for trial writing to the drive test zone. FIG. 35 shows a definition of a recording pulse form. Marks and spaces are written over a disk by irradiating pulses of peak power, first bias power, second bias power, and third bias power. Marks are written over a disk by irradiating pulses modulated between the peak power and the third bias power. Spaces are written over a disk by irradiating pulses of the first bias power. SbER, which is means for evaluating random errors, corresponds to a bit error rate caused by random errors. Before measuring PRSNR and SbER, the coefficient of the equalizer is calculated using a minimum square error (MSE) algorithm.

Recording pulses are made up of optical pulses as shown in FIGS. 34A and 34B. A 2T-mark recording pulse is composed of a mono pulse and a pulse of the second bias power following the mono pulse. A 3T-mark recording pulse is composed of a first pulse, a last pulse and a pulse of the second bias power following the last pulse. A recoding pulse for a 3T mark or more is composed of a first pulse, a multi-pulse train, a last pulse, and a pulse of the second bias power following the last pulse. T is a cannel clock period.

(Recording pulse structure for a 2T mark)

$T_{SFP}$ after the rising edge of an NRZI signal, the generation of a mono pulse is started. The generation is completed $1T - T_{ELP}$ before the falling edge of the NRZI signal. The period of the mono pulse is $1T - T_{ELP} + T_{SFP}$. $T_{ELP}$ and $T_{SFP}$ are recorded in the control data zone. The period of the second bias power following the mono pulse is $T_{LC}$. $T_{LC}$ is recorded in the control data zone.

(Recording pulse structure for 2T or more mark)

$T_{SFP}$ after the rising edge of an NRZI signal, the generation of a first pulse is started. $T_{EFP}$ after the falling edge of the NRZI signal, the generation is completed. $T_{EFP}$ and $T_{SFP}$ are recorded in the control data zone. A recording pulse corresponding to 4T to 13T is a multi-pulse train. The multi-pulse train is a repetition of a pulse with a pulse width of $T_{MP}$ and a period of T. 2T after the rising edge of the NRZI signal, the generation of a multi-pulse is started. 2T before the falling edge of the NRZI signal, the generation of the last pulse in the multi-pulse train is completed. $T_{MP}$ is recorded in the control data zone.

1T - $T_{SLP}$ before the rising edge of the NRZI signal, the generation of the last pulse is started. 1T - $T_{ELP}$ before the falling edge of the NRZI signal, the generation of the last pulse is completed. $T_{ELP}$ and $T_{SLP}$ are recorded in the control data zone. The pulse width of the pulse of the second bias power following the last pulse is $T_{LC}$. $T_{LC}$ is recorded in the control data zone. $T_{EFP}$ - $T_{SFP}$, $T_{MP}$, $T_{ELP}$ - $T_{SLP}$, and $T_{LC}$ are the maximum periods of a full width and a half width. The maximum periods of the full width and half width of each optical pulse are defined in FIG. 35. The rising period Tr and the falling period Tf are 1.5 ns or less. The difference between the rising period Tr and the falling period Tf is 0.5 ns or less.

$T_{SFP}$, $T_{EFP}$, $T_{SLP}$, $T_{ELP}$, $T_{MP}$, and $T_{LC}$ are recorded in the control data zone in units of (1/32)T. They take the following values:

$T_{SFP}$ is 0.25T or more and 1.50T or less.
$T_{ELP}$ is 0.00T or more and 1.00T or less.
$T_{EFP}$ is 1.00T or more and 1.75T or less.
$T_{SLP}$ is -0.10 or more and 1.00T or less.
$T_{LC}$ is 0.00T or more and 1.00T or less.
$T_{MP}$ is 0.15T or more and 0.75T or less.

The following restrictions are imposed on adaptive control parameters $T_{SFP}$, $T_{ELP}$, and $T_{LC}$:

The difference between the maximum value and minimum value of $T_{SFP}$ is 0.50T or less.
The difference between the maximum value and minimum value of $T_{ELP}$ is 0.50T or less.
The difference between the maximum value and minimum value of $T_{LC}$ is 1.00T or less.
The width of mono pulse 1T - $T_{SFP}$ + $T_{ELP}$ is 0.25T or more and 1.50T or less.

These parameters are controlled with a precision of $\pm$0.2 ns. If the peak power period of the first pulse and that of the multi-pulse train overlap with each other, a composite peak power period is the sum total of these consecutive peak power periods. If the peak power period of the first pulse and that of the last pulse overlap with each other, a composite peak power period is the sum total of these consecutive peak power periods. If the peak power period of the end pulse in the multi-pulse train and that of the last pulse overlap with each other, a composite peak power period is the sum total of these consecutive peak power periods.

The recording power has the following four levels: peak power, first bias power, second bias power, and third bias power. These are optical power which are projected onto the reading surface of a disk and used to record marks and spaces.

The peak power, first bias power, second bias power, and third bias power are recorded in the control data zone. The maximum value of the peak power does not exceed, for example, 10.0 mW. The maximum value of each of the first bias power, second bias power, and third bias power does not exceed, for example, 4.0 mW.

The average peak power of each of the mono pulse, first pulse, and last pulse fulfills the following requirement:

$$|(average\ peak\ power) - (peak\ power)| \le 5\%\ of\ peak\ power$$

The average first bias power and average second bias power fulfill the following requirements:

$$|(average\ first\ bias\ power) - (first\ bias\ power)| \le 5\%\ of\ first\ bias\ power$$

$$|(\text{average second bias power}) - (\text{second bias power})| \leq 5\% \text{ of second bias power}$$

The average power of the multi-pulse train is the average power of an instantaneous value of the power in the measuring period.

The measuring period includes all of the multi-pulse train and is a multiple of T. The average power of the multi-pulse train fulfills the following requirement:

$$|(\text{average power of multi-pulse train}) - (\text{peak power} + \text{third bias power})/2| \leq 5\% \text{ of (peak power} + \text{second bias power})/2$$

An instantaneous value of power is an instantaneous value of actual power.

The average power is the average value of an instantaneous value of power in a specific power range.

The power range of the average value of power satisfies the following requirements:

$$\text{the average value of peak power: } |(\text{actual power}) - (\text{peak power})| \leq 10\% \text{ of peak power}$$

$$\text{the average value of first bias power: } |(\text{actual power}) - (\text{first bias power})| \leq 10\% \text{ of first bias power}$$

$$\text{the average value of second bias power: } |(\text{actual power}) - (\text{second bias power})| \leq 10\% \text{ of second bias power}$$

$$\text{the average value of third bias power: } |(\text{actual power}) - (\text{third bias power})| \leq 10\% \text{ of third bias power}$$

The period required to measure the average power does not exceed the pulse width period of each pulse.

Instantaneous-value power satisfies the following requirements:

$$|(\text{instantaneous-value peak power}) - (\text{peak power})| \leq 10\% \text{ of peak power}$$

$$|(\text{instantaneous-value first bias power}) - (\text{first bias power})| \leq 10\% \text{ of first bias power}$$

$$|(\text{instantaneous-value second bias power}) - (\text{second bias power})| \leq 10\% \text{ of second bias power}$$

$$|\text{(instantaneous-value third bias power)} - \text{(third}$$
$$\text{bias power)}| \leq 10\% \text{ of third bias power}$$

To control the mark edge position accurately, the timing of the first pulse, last pulse, and mono pulse is modulated.

The mark lengths of NRZI are classified into M2, M3, and M4. The mark lengths M2, M3, and M4 indicate 2T, 3T, and 3T or more, respectively. The space lengths immediately in front of a mark are classified into LS2, LS3, and LS4. The space lengths LS2, LS3, and LS4 indicate 2T, 3T, and 3T or more, respectively. The space lengths immediately behind a mark are classified into TS2, TS3, and TS4. The space lengths TS2, TS3, and TS4 indicate 2T, 3T, and 3T or more, respectively.

$T_{LC}$ is modulated as a function of the category of the mark length of NRZI. Therefore, $T_{LC}$ has the following three values:

$T_{LC}(M2), T_{LC}(M3), T_{LC}(M4)$

$T_{LC}(M)$ represents the value of $T_{LC}$ when the category of the mark length of the NRZI is M.

The values of these three $T_{LC}$ are recorded in the control data zone.

$T_{SFP}$ is modulated as a function of the category of the mark length of NRZI and the category of the space length of NRZI immediately in front of the mark. Therefore, $T_{SFP}$ has the following nine values:

$T_{SFP}(M2, LS2), T_{SFP}(M3, LS2), T_{SFP}(M4, LS2)$
$T_{SFP}(M2, LS3), T_{SFP}(M3, LS3), T_{SFP}(M4, LS3)$
$T_{SFP}(M2, LS4), T_{SFP}(M3, LS4), T_{SFP}(M4, LS4)$

$T_{SFP}(M, LS)$ indicates the value when the category of the mark length of the NRZI signal is M and the category of the space length of NRZI immediately in front of the mark is LS. These nine values of $T_{SFP}$ are recorded in the control data zone.

$T_{ELP}$ is modulated as a function of the category of the mark length of NRZI and the category of the space length of NRZI immediately behind the mark. Therefore, $T_{ELP}$ has the following nine values:

$T_{ELP}(M2, TS2), T_{ELP}(M3, TS2), T_{ELP}(M4, TS2)$
$T_{ELP}(M2, TS3), T_{ELP}(M3, TS3), T_{ELP}(M4, TS3)$
$T_{ELP}(M2, TS4), T_{ELP}(M3, TS4), T_{ELP}(M4, TS4)$

$T_{ELP}(M, TS)$ indicates the value when the category of the mark length of the NRZI signal is M and the category of the space length of NRZI immediately in front of the mark is TS. These nine values of $T_{ELP}$ are recorded in the control data zone.

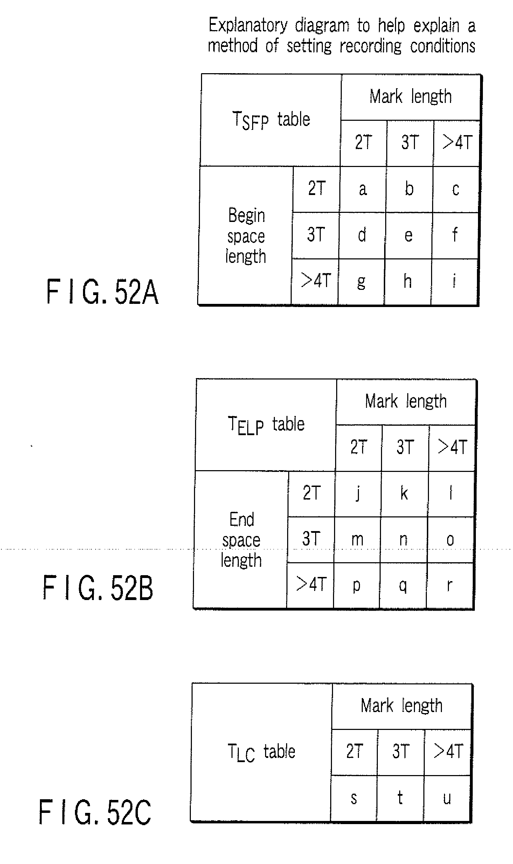

FIGS. 52A, 52B, and 52C are diagrams to help explain an example of recording condition parameters expressed as a function of a mark length and a preceding space length. The value of $T_{SFP}$ is expressed as a function of the mark length and the preceding space length using a to i. The value of $T_{ELP}$ is expressed as a function of the mark length and the succeeding space length using j to r. The value of $T_{LC}$ is expressed as a function of the mark length using s to u.

While in the above example, a multi-pulse train has been used as a write strategy in all of the cases, a so-called block strategy or a write strategy obtained by modifying the block strategy may be used. Under high transfer rate/high linear speed conditions, the block strategy may be easier to control than a multi-pulse train. When data has to be written in less than the limiting value (about one nanosecond) of the rising time of the laser, a multi-pulse train is particularly difficult to use. Therefore, it is necessary to use the block strategy, or a pulse-train whose period is extended (e.g., doubled).

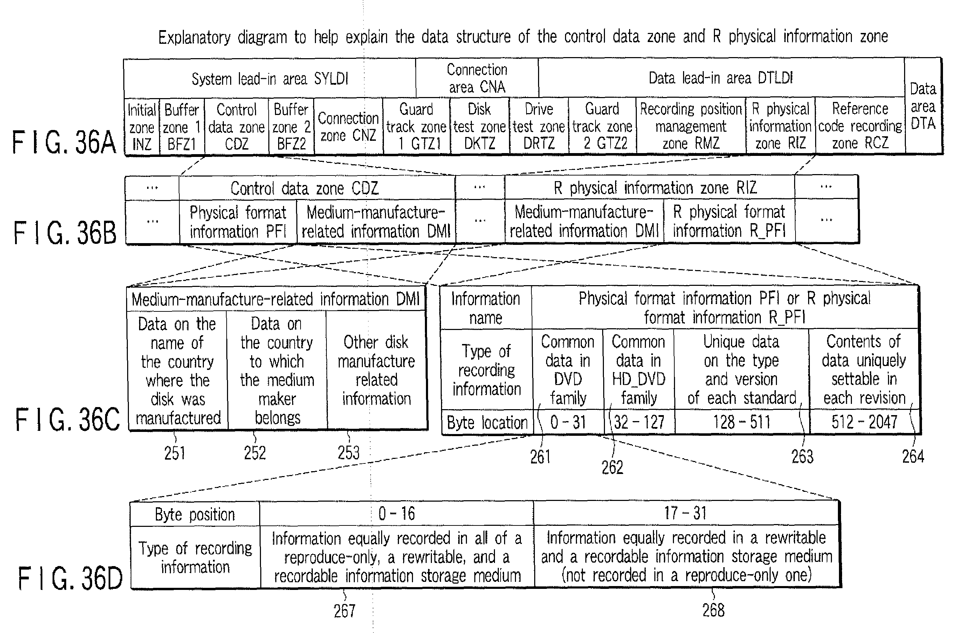

FIGS. 36A, 36B, 36C, and 36D are diagrams to help explain an example of the data structure of the control data zone CDZ and P physical information zone RIZ. FIGS. 36A, 36B, 36C, and 36D show a data structure of a control data zone CDZ and that of an R physical information zone RIZ. As shown in FIG. 36B, in the control data zone CDZ, there are Physical Format Information PFI and Disk Manufacturing Information DMI. In the R physical information zone RIZ, there are Disk Manufacturing Information DMI and R Physical Format Information R_PFI. Here, "R Physical Format" means a recordable-media physical format. Hereinafter, this format is abbreviated as "R-physical format".

Of the recordable mediums (including the RAM type and RW type), the RW type does additional recording in the same manner as the R type (or the type that prevents rewriting and allows only additional recording to be done in an unrecorded area). Therefore, in an explanation of the RN type, "rewriting" is read as "additional recording" in a similar recording operation to additional reading in the R type (the R type can do only additional recording, whereas the RAM/RW type can do both of additional recording and rewriting). In the disk manufacturing information DMI, information 251 on the name of the country where the medium was manufactured and information 252 on the country to which the medium manufacturer belongs have been recorded. A warning of infringement is often given in a country that has a location of manufacture when a sold information storage medium has committed a patent violation or in a country information storage mediums have been consumed (or used). The recording of the above information is required to be done in the information storage medium, making the location of manufacture (country name) clear and facilitating a warning of patent violation, which guarantees intellectual property and promotes technological advances. Moreover, in the disk manufacturing information DMI, other disk manufacturing information 253 is also recorded.

In physical format information PFI or R physical format information R_PFI, the type of information to be recorded is determined by the recording place (or the byte positions relative to the starting position). Specifically, as the recording place in physical format information PFI or R physical format information R_PFI, common information 261 in the DVD family is recorded in a 32-byte area ranging from the $0^{th}$ byte to $31^{st}$ byte, common information 262 in the HD_DVD family to be handled in the embodiment is recorded in a 96-byte area ranging from the $32^{nd}$ byte to $127^{th}$ byte, unique information 263 about the types of written standards and part versions is written in a 384-byte area ranging from the $128^{th}$ byte to $511^{th}$ byte, and information corresponding to each revision is recorded in a 1536-type area ranging from the $512^{th}$ byte to $2047^{th}$ byte. As described above, the information arrangement positions in the physical format information are standardized according to the contents of information, thereby standardizing the places of recorded information, regardless of the type of medium, which enables the reproducing processes in the information reproducing apparatus or information recording and reproducing apparatus to be standardized and simplified.

As shown in FIG. 36D, the common information in the DVD family recorded in the $0^{th}$ byte to $31^{st}$ byte is divided into information 267 that is recorded in the $0^{th}$ byte to the $16^{th}$ bytes in each of a reproduce-only, a rewritable, and a recordable information storage medium and information 268 that is recorded in the $17^{th}$ byte to $31^{st}$ byte in each of a rewritable and a recordable information storage medium and is not recorded in a reproduce-only information storage medium.

FIG. 37 is a diagram to help explain an example of the contents of physical format information and R physical format information. FIG. 37 shows a comparison between the concrete contents of information in physical format information PFI or R physical format information R_PFI shown in FIGS. 36A, 36B, 36C, and 36D and the types of mediums (a reproduce-only, a rewritable, or a recordable) in physical format information PFI. As information 267 in the common information 261 in the DVD family recorded in each of a reproduce-only, a rewritable, and a recordable information storage medium, information on the type of written standards (reproduce-only/rewritable/recordable), version number information, medium size (diameter), maximum possible data transfer rate information, medium structure (a single layer of a double layer, the presence or absence of an emboss pit/recordable area/rewritable area), recording density (linear density and track density), location information on the data area DTZ, and information on the presence or absence of a burst cutting area BCA (this area is present in each of a reproduce-only, a rewritable, and a recordable information storage medium) are recorded in that order in byte position 0 to byte position 16.

Revision number information that determines the maximum recording speed, revision number table (application revision number), cluster state information, and expanded (part) version are recorded in the $28^{th}$ byte to $31^{st}$ byte in that order as common information 261 in the DVD family and information 268 similarly recorded in each of a rewritable and a recordable information storage medium. Revision information corresponding to the recording speed is recorded in the $28^{th}$ byte to $31^{st}$ byte of the recording area of physical format information PFI or R physical format information R_PFI.

With the development of a medium with an increased recording speed, such as double speed or quad speed, this has involved an immense amount of time and effort to remake written standards accordingly. In contrast, in this embodiment, written standards are divided into a version book whose version is changed when the contents are changed greatly and a revision book which is revised according to a small change in the recording speed or the like and is issued. Each time the recording speed is improved, only a revision book where only the revision has been updated is issued. This produces the effect of guaranteeing the function of expanding a medium to a future high-speed-recording-compatible medium. In addition, since standards can be dealt with by a simple method of revision, when a new high-speed-recording-compatible medium is developed, this can be coped with at high speed.

Providing separately a field for revision number information that determines the maximum recording speed in the $17^{th}$ byte and a field for revision number information that determines the minimum recording speed in the $18^{th}$ byte enables different revision numbers to be assigned to the maximum and minimum values of the recording speed. For instance, when a recording film which enables very high speed recording has been developed, the recording film makes it possible to record data at very high speed, but makes it impossible suddenly to record data when the recording speed is lowered. In addition, such a recording film as enables the minimum possible recording speed to be lowered may be very expensive. In contrast, as in the embodiment, revision numbers are made settable separately using the maximum value and minimum value of the recording speed, making the selection range of the developable recording film wider, which produces the effect of enabling a higher-speed-recordable medium and a lower-price medium to be supplied. In the information recording and reproducing apparatus of the embodiment, information on the maximum possible recording speed and the minimum possible recording speed for each revision are known in advance. When an information storage medium is installed in the information recording and reproducing apparatus, the information recording and reproducing section 141 of FIG. 24 first reads the information in physical format information PFI or R physical format information R_PFI. On the basis of the acquired revision number information, the control section 143 calculates the maximum possible recording speed and minimum possible recording speed of the installed information storage medium, referring to the maximum possible recording speed and minimum possible recording speed for each revision previously recorded in the memory section 175. On the basis of the result, recording is done at the optimum recording speed.

Next, explanation will be given about unique information 263 on the types and versions of written standards in the 128th byte to 511th byte and the contents 264 of information uniquely settable in the 512th type to 2047th byte on a revision basis shown in FIG. 36C. Specifically, in the unique information 263 on the types and versions of written standards in the 128th byte to 511th byte, the meaning of the contents of recording information in each byte position coincides with each other, regardless of whether the information storage medium is a rewritable one or a recordable one. In information content 264 uniquely set on a revision basis in the 512th byte to 2047th byte, the meaning of the contents of information at each byte position is allowed to be different if the revision is different, in not only a rewritable and a recordable information storage medium differing from each other in type but also the same type of mediums.

As shown in FIG. 37, in the unique information 263 on the types and versions of written standards where the meaning of the contents of information in each byte position in each of a rewritable and a recordable information storage medium are recorded, information on the name of the medium manufacturer, additional information from the medium manufacturer, information on the polarity (identifying whether it is High-to-Low or Low-to-High) of a recording mark, information on linear velocity in recording or reproducing, the rim intensity value of the optical system in the circumferential direction, the rim intensity value of the optical system in the radial direction, and recommended laser power (the amount of light on the recording surface) in reproduction are recorded in that order sequentially.

This embodiment is particularly characterized in that information on the polarity of a recording mark (identifying whether it is High-to-Low or Low-to-High) MPD (Mark Polarity Descriptor) is recorded in the 192th byte. In a conventional rewritable or recordable DVD disk, only a High-to-Low recording film where the amount of reflected light in a recording mark was lowered as compared with that in the unrecorded state (the reflection level was relatively high) was allowed. If a request was made for "high-speed recording" and "lower price" or the physical performance, including "the decrease of cross erase" and "an increase in the upper limit of the number of rewritings", this could not be dealt with only by a conventional High-to-Low recording film. In contrast, since the present embodiment permits the use of not only a High-to-Low recording film but also a Low-to-High recording film where the amount of reflected light increases in a recording mark, this produces the effect of incorporating not only a conventional High-to-Low recording film but also a Low-to-High recording film into standards to widen the recording film selection range and therefore enabling higher-speed recording and the supply of lower-cost mediums.

A method of implementing an information recording and reproducing apparatus will be explained concretely below. In a version book or a revision book, both of the reproduced signal characteristic of a High-to-Low recording film and that of a Low-to-High recording film are written. According to the description, two types of handling circuits are prepared in the PR equalizing circuit 130 and Viterbi decoder 156 of FIG. 24. When an information storage medium is installed in the information reproducing section 141, the slice level detecting circuit 132 to read the information in the system lead-in area SYLDI is first activated. After the slice level detecting circuit 132 reads information on the polarity of the recording mark recorded in the 192nd byte (identifying whether it is High-to-Low or Low-to-High), it is determined whether it is a High-to-Low recording film or a Low-to-High recording film. After the circuits in the PR equalizing circuit 130 and Viterbi decoder 156 are switched according to the result of the determination, the information recorded in the data lead-in area DTLDI or data area DTA is reproduced. This method makes it possible to read the information in the data lead-in area DTLDI or data area DTA relatively fast with high accuracy. Revision number information that determines the maximum recording speed is recorded in the 17th byte and revision number information that determines the minimum recording speed is recorded in the 18th byte, giving only information on the range determining the maximum and minimum values. Since information on the optimum linear velocity is needed in recording to record data most stably, this information is recorded in the 193rd byte.

The embodiment is characterized in that the rim intensity value of the optical system in the radial direction in the 194th byte and the rim intensity value of the optical system in the radial direction in the 195th byte are arranged as optical system condition information in the position that precedes various types of recording condition (write strategy) information included in information content 264 uniquely settable on a revision basis. These pieces of information are condition information on the optical system of the optical head used in determining the recording condition placed behind them. Rim intensity means the distribution of incident light which enters the objective before converging on the recording surface of the information storage medium and is defined as the value of intensity at the periphery of the objective (or at the periphery of the pupil surface) if the central intensity of the intensity distribution of incident light is "1". The intensity distribution of incident light to the objective is not symmetric with respect to a point, but is an elliptic distribution. Since the value of the rim intensity in the radial direction of the information storage medium differs from that in its circumferential direction, the two values are recorded. The larger the value of the rim intensity, the smaller the condensed spot size on the recording surface of the information storage medium becomes. As a result, depending on the value of the rim intensity, the optimum recording power condition changes greatly.

Since the information recording and reproducing apparatus has known information on the value of the rim intensity of its own optical head, it first reads the value of the rim intensity of the optical system along each of the circumference and the radius recorded on the information storage medium and compares these values with the values of its own optical head. If the result of the comparison has shown no great difference, the recording condition recorded behind can be applied. If the result of the comparison has shown a great difference, the information recording and reproducing apparatus has to ignore the recording condition recorded behind and begins determining the optimum recording condition, while doing trial writing using the drive test zones DRTZ written in FIGS. 33A, 33B, 33C, 33D, 33E, and 33F.

As described above, it is necessary to determine quickly whether to use the recording condition recorded behind or ignore the information and start to find the optimum recording condition while performing trial writing. As shown in FIG. 37, the condition information on the optical system from which the condition has been determined is placed in a position preceding the position in which recommended recording conditions have been recorded, which produces the effect of enabling the rim intensity information to be read and then making it possible to determine at high speed whether the recording condition placed behind can be applied.

As described above, with the embodiment, the written standards are divided into a version book where the version is changed if the contents have been change greatly and a revision book whose revision is changed according to a small change in the recording speed and then which is issued. Each time the recording speed is improved, only a revision book whose revision alone has been updated is issued. Therefore, since the revision number becomes different, the recording condition in the revision block changes. Information about the recording condition (write strategy) is recorded in information content 264 uniquely settable mainly in the 512$^{th}$ byte to 2047$^{th}$ byte on a revision basis. As seen from FIG. 37, information content 264 uniquely settable in the 512$^{th}$ byte to 2047$^{th}$ byte on a revision basis permits the meaning of the recorded information content at each byte position to differ if the revision is different, in not only a rewritable and a recordable information storage medium differing in type from each other but also mediums of the same type differing in revision.

The definitions of peak power, first bias power, second bias power, and third bias power coincide with the power values defined in FIGS. 34A and 34B. The end time of a first pulse in FIG. 37 is $T_{EFP}$ in FIG. 34B. The multi-pulse interval is $T_{MP}$ in FIG. 348. The starting time of a last pulse is $T_{SLP}$ in FIG. 34B. The period of the second bias power of 2T mark is $T_{LC}$ in FIG. 34B.

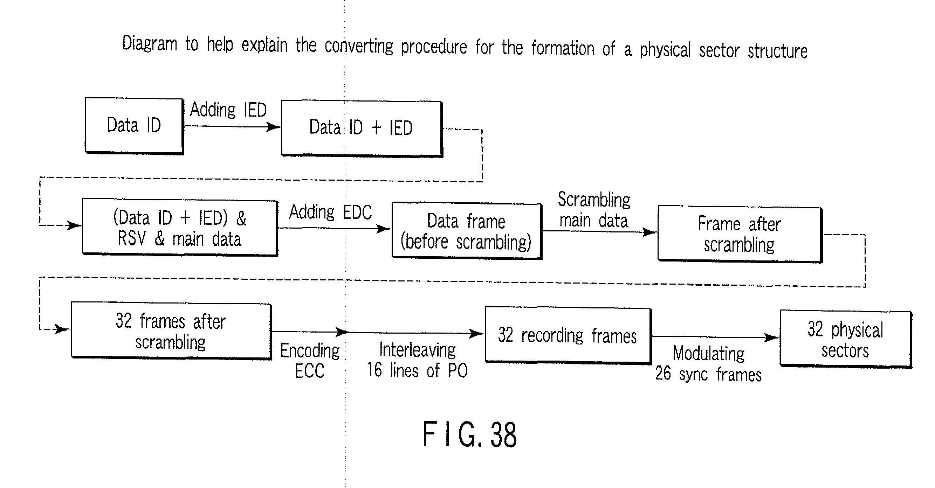

FIG. 38 is a diagram to help explain the procedure for conversion in configuring a physical sector structure. FIG. 38 schematically shows the conversion procedure for configuring an ECC block from a data frame structure in which user data has been recorded in units of 2048 bytes, adding a sync code, and then forming a physical sector structure to be recorded onto an information storage medium. This conversion procedure is used in each of a reproduce-only information storage medium, a recordable information storage medium, and a rewritable information storage medium. According to the respective conversion stages, the terms data frame, scrambled frame, recording frame, and recorded data field are used.

A data frame, which is a place in which user data is recorded, is made up of 2048 bytes of main data, a 4-byte data ID, a 2-byte ID error detection code (IED), 6-byte reserved bytes RSV, and a 4-byte error detection code (EDC). First, an IED (ID error detection code) is added to data ID, which is explained later. The 6-byte reserved bytes and data frame are places in which user data is to be recorded. After 2048 bytes of main data are added and an error detection code (EDC) is added, the main data is scrambled. Then, Cross Reed-Solomon Error Correction Code is applied to the scrambled 32 data frames (scrambled frames), thereby carrying out an ECC encoding process, which configures a recording frame.

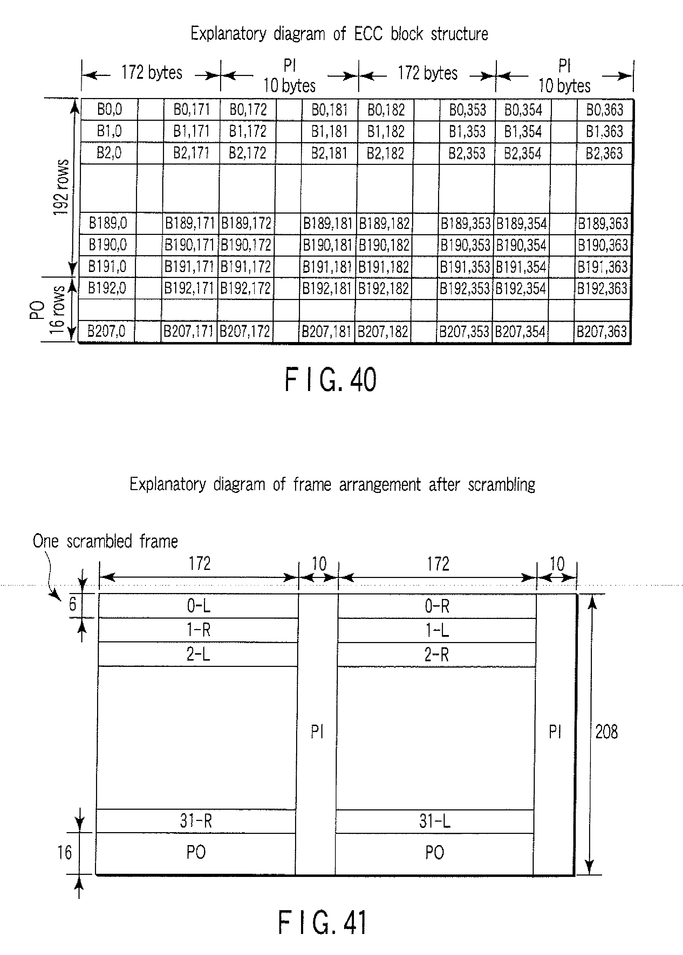

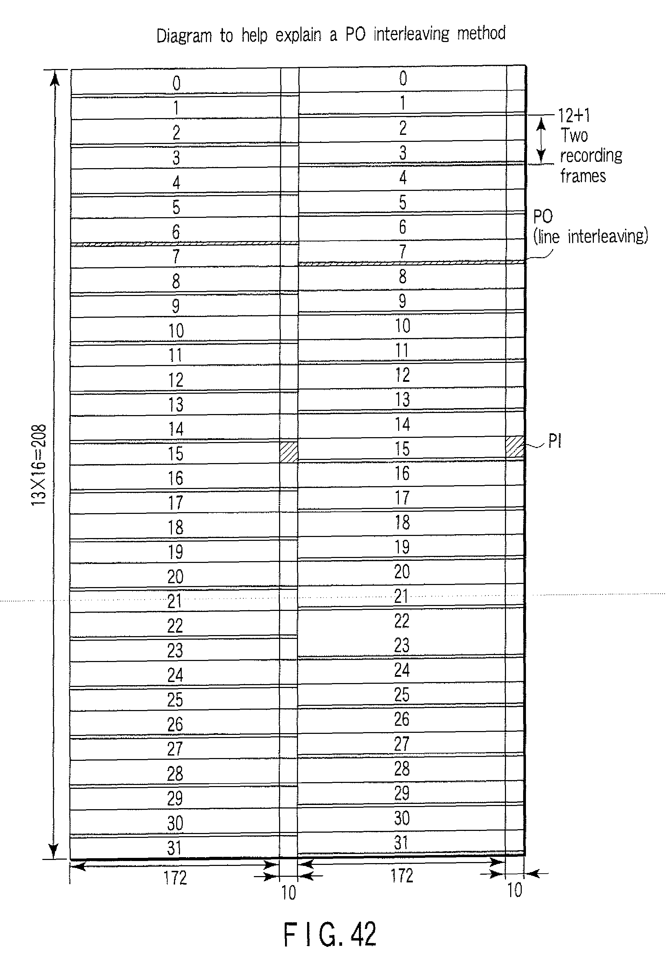

The recording frame includes outer parity code (Parity of Outer-code) PO and inner parity code (Parity of Inner-code) PI. Each of the parity codes PO and PI is an error correction code created for each ECC block composed of 32 scrambled frames. As described earlier, a recoding frame is subjected to ETM (Eight to Twelve Modulation) in which 8 data bits are converted into 12 channel bits. Then, a sync code SYNC is added to the head in units of 91 bytes, thereby creating 32 physical sectors. This embodiment is characterized in that 32 sectors constitute one error correction unit (ECC block) as written in the frame at the bottom right of FIG. 38. The numbers from "0" to "31" in each frame in FIG. 41 or 42 represent the numbers of the individual physical sectors. A total of 32 physical sectors numbered "0" to "31" constitute one large ECC block.

Next-generation DVDs are required to reproduce information accurately by an error correction process, even if as long a flaw as that in the present-generation DVD has been made in the surface of the information storage medium. In this embodiment, the recording density is increased aiming at a larger capacity. As a result, in the case of a conventional ECC block = 16 sectors, the length of a physical flaw correctable by error correction becomes shorter than that of the conventional DVD. As in the embodiment, configuring one ECC block using 32 sectors produces the effect of not only lengthening the allowable length of a flaw in the information storage medium which can be corrected by error correction but also securing the interchangeability of the ECC block structure of the existing DVD and the continuity of the format.

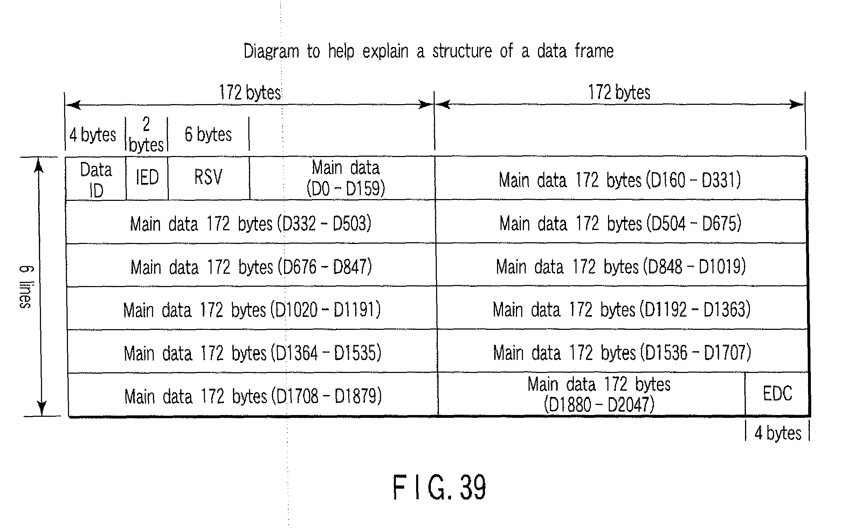

FIG. 39 shows the structure of a data frame. A data frame contains 2064 bytes made up of 172 bytes $\times$ 2 $\times$ 6 rows, which include 2048 bytes of main data. IED, which stands for ID Error Detection Code, means an error detection additional code for data ID information in reproduction. REV, which stands for Reserve, means a reserved area in which information can be set in the future. EDC, which stands for Error Detection code, means error detection additional code for all of the data frames.

Data ID is composed of data frame information 921 and information on data frame number 922. The data frame number represents the physical sector number 922 of the corresponding data frame.

Data frame information 921 is made up of the following information:

- Format type 931 -- 0b : represents CLV
  1b : represents a zone configuration
- Tracking method 932 -- 0b : uses a DPD (Differential Phase Detect) method in a pit-compatible manner in this embodiment
  1b : uses a Push-Pull method or a DPP (Differential Push-Pull) method in a pre-groove-compatible manner
- Reflectivity of the recording film 933 -- 0b : 40% or more
  1b : 40% or less
- Recording type information 934 -- 0b : General data
  1b : Real-time data (Audio Video data)
- Area type information 935 -- 00b : Data area DTA
  01b : System lead-in area SYLDI or data lead-in area DTLDI
  10b : Data lead-out area DTLDO or system lead-out area SYLDO
- Data type information 936 -- 0b : Reproduce-only data
  1b : Rewritable data
- Layer number 937 -- 0b : Layer 0
  1b : Layer 1

FIG. 40 is a diagram to help explain an example of the structure of an ECC block. An ECC block is composed of 32 consecutive scrambled frames. There are provided 192 rows + 16 rows in the vertical direction and (172 + 10) $\times$ 2 columns in the horizontal direction. Each of $B_{0,0}$, $B_{1,0}$, ... is one byte. PO and PI, which are error correction codes, are outer parity and inner parity, respectively. In this embodiment, an ECC block structure using a product sign is configured. Specifically, data to be recorded on an information storage medium are arranged two-dimensionally. As error correction additional bits, PI (Parity in) is added in the direction of "row" and PO (Parity out) is added in the direction of "column". Configuring an ECC block structure using a product sign this way makes it possible to assure a high error correction capability using an erasure correction process and a vertical and horizontal repeated correction process.

The ECC block structure of FIG. 40 is characterized in that it differs from the ECC block structure of a conventional DVD in that PI is set in two places in the same "row". That is, PI of a 10-byte size written in the middle of FIG. 40 is added to 172 bytes provided at left. Specifically, for example, a 10-byte PI from $B_{0,172}$ to $B_{0,181}$ is added to 172 bytes of data from $B_{0,0}$ to $B_{0,171}$. A 10-byte PI from $B_{1,172}$ to $B_{1,181}$ is added to 172 bytes of data from $B_{1,0}$ to $B_{1,171}$.

PI of a 10-byte size written at right of FIG. 40 is added to 172 bytes provided in the middle at left. Specifically, for example, a 10-byte PI from $B_{0,354}$ to $B_{0,363}$ is added to 172 bytes of data from $B_{0,182}$ to $B_{0,353}$.

FIG. 41 is a diagram to help explain an example of the arrangement of a scrambled frame. A unit of (6 rows $\times$ 172 bytes) is used as a scrambled frame. That is, one ECC block is made up of 32 consecutive scrambled frames. In addition, this system treats (a block of 182 bytes $\times$ 207 bytes) as a pair. L is given to the number of each scrambled frame in the ECC block at left and R is given to the number of each scrambled frame in the ECC block at right, with the result that the scrambled frames are arranged as shown in FIG. 41. That is, in the left block, left and right scrambled frames are arranged alternately. In the right block, scrambled frames are provided alternately.

Specifically, an ECC block is composed of 32 consecutive scrambled frames. Each row in the left half of an odd-numbered sector is replaced with a row in the right half. 172 $\times$ 2 bytes $\times$ 192 rows, which are equal to 172 bytes $\times$ 12 rows $\times$ 32 scrambled frames, make a data area. A 16-byte PO is added to each set of 172 $\times$ 2 columns to form an outer code for RS (208, 192, 17). A 10-byte PI (RS (182, 172, 11)) is added to each set of 208 $\times$ 2 rows in the right and left blocks. PI is also added to the row of PO. The number in a frame indicates a scrambled frame number. The suffixes R, L mean the right half and left half of a scrambled frame, respectively.

The embodiment is characterized in that the same data frame is distributed over a plurality of small ECC blocks. Specifically, in the embodiment, two small ECC blocks constitute a large ECC block. The same data frame is distributed over the two small ECC blocks alternately. As explained in FIG. 40, PI of a 10-byte size written in the middle is added to 172 bytes provided on its right side and PI of a 10-byte size written at the right end is added to 172 bytes provided on its left side and in the middle. That is, 172 bytes from the left end of FIG. 40 and PI of consecutive 10 bytes constitute a left small ECC block and 172 bytes in the middle and PI of 10 bytes at the right end constitute a right small ECC block.

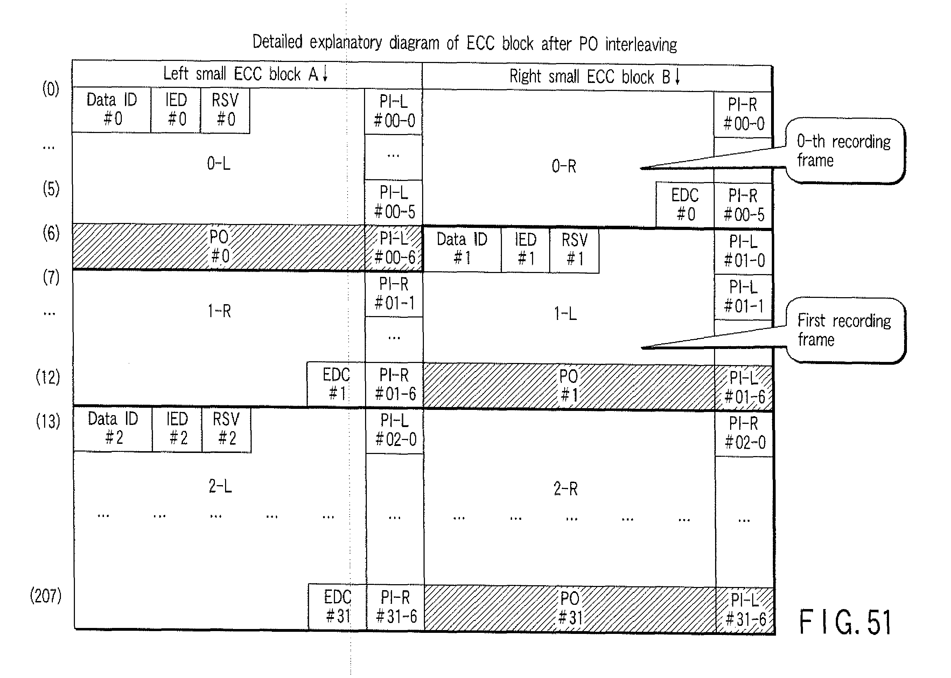

The symbols in each frame of FIG. 41 are set according to the above. For example, "2-R" in FIG. 41 indicates which of data frame number and right and left small blocks it belongs to (e.g., it belongs to the right small ECC block in the second data frame). In addition, the data in the same physical sector is also distributed over the right and left small ECC blocks alternately in each physical sector finally configured. In FIGS. 33A, 33B, 33C, 33D, 33E, and 33F, the left-half column is included in the left small ECC block (the left small ECC block A shown in FIG. 51) and the right-half column is included in the right small ECC block (the right small ECC block B shown in FIG. 51).

As described above, distributing the same data frame over a plurality of small ECC blocks improves the error correcting capability of the data in the physical sector (FIGS. 33A, 33B, 33C, 33D, 33E, and 33F), which increases the reliability of the recorded data. For example, suppose the optical head has come off the track and overwritten the recorded data, with the result that one physical sector of data has been destroyed. In this embodiment, since one sector of destroyed data is subjected to error correction using two small ECC blocks, the burden of correcting errors in one ECC block is alleviated, which assures higher-performance error correction. Moreover, in the embodiment, since data ID is provided at the begin position of each sector even after an ECC block is formed, the data position in access is checked at high speed.

FIG. 42 is a diagram to help explain a PO interleaving method. As shown in FIG. 42, 16 parity rows are distributed one by one. That is, 16 parity rows are arranged in such a manner that one parity row is provided for every two recording frames. Therefore, a recording frame composed of 12 rows includes 12 rows + 1 row. After the row interleaving has been done, 13 rows × 182 bytes are referred to as a recording frame. As a result, an ECC block subjected to row interleaving is composed of 32 recording frames. As shown in FIG. 41, in one recording frame, there are 6 rows in each of the right and left blocks. PO is so arranged that it lies in a position in the left block (182 × 208 bytes) and in a different position in the right block (182 × 208 bytes). FIGS. 33A, 33B, 33C, 33D, 33E, and 33F show one complete ECC block. However, when data is actually reproduced, such ECC blocks arrive at the error correcting section consecutively. To increase the correcting capability of the error correction process, an interleaving method as shown in FIG. 42 has been used.

FIG. 51 is a diagram to help explain a detailed structure of an ECC block after PO interleaving. Using FIG. 51, the relationship between the structure of one data frame of FIG. 42 and the PO interleaving method of FIG. 42 will be explained in detail. In FIG. 51, the upper part of the ECC block structure subjected to PO interleaving shown in FIG. 42 is enlarged and the locations of data ID, IED, RSV, EDC shown in FIG. 39 are pointed out specifically in the enlarged diagram, which enables the connection between conversions in FIGS. 39 to 42 to be seen at a glance. "0-L", "0-R", "1-R", "1-L" of FIG. 51 correspond to "0-L", "0-R", "1-R", "1-L" of FIG. 41, respectively. "0-L" or "1-L" means the data obtained by scrambling only the main data in the left half of FIG. 39, that is, a set of 172 bytes to the left of the center line and 6 rows. Similarly, "0-R" or "1-R" means the data obtained by scrambling only the main data in the right half of FIG. 39, that is, a set of 172 bytes to the right of the center line and 6 rows. Therefore, as seen from FIG. 39, data ID, IED, and RSV are arranged in that order from the first to 12th bytes in the first row (0th row) in "0-L" or "1-L".

In FIG. 51, the left side of the center line constitutes a small ECC block A and the right side of the center line constitutes a small ECC block B. Therefore, as seen from FIG. 51, data ID#1, data ID#2, IED#0, IED#2, RSV#0, RSV#2 included in "0-L" or "2-L" are included in the left small ECC block A. While in FIG. 41, "0-L" and "2-L" are arranged on the left side and "0-R" and "2-R" are arranged on the right side, "1-R" and "1-L" are reversed in position, with the result that "1-L" is positioned on the right side and "1-R" is positioned on the left side. Since data ID#1, IED#1, RSV#1 are arranged from the first to 12th byte in the first row in "1-L", the result of reversal of the right and left positions causes ID#1, IED#1, RSV#1 included in "1-L" to be configured in the right small ECC block B as seen from FIG. 51.

In this embodiment, a combination of "0-L" and "0-R" is called "0th recording frame" and a combination of "1-L" and "1-R" is called "1st recording frame" in FIG. 51. The boundary between the recording frames is shown by a bold line of FIG. 51. As seen from FIG. 51, data ID is provided at the head of each recording frame and PO and PI-L are provided at the end of each recording frame. As shown in FIG. 51, an odd-numbered recording frame differs from an even-numbered recording frame in a small ECC block which includes data ID and a succession of recording frames causes data ID, IED, and RSV to be arranged in the left and right small ECC blocks A and B alternately. The error correcting capability in a single small ECC block has its limits and random errors exceeding a specific number and burst errors exceeding a specific length cannot be subjected to error correction. Arranging data ID, IEC, and RSV in the left and right small ECC blocks alternately as described above enables the reliability of reproduction of data ID to be improved. Specifically, even if many defects have occurred in the information storage medium and a small ECC block cannot be subjected to error correction and therefore the data ID belonging to the ECC block cannot be deciphered, since data ID, IED, and RSV are arranged in the left and right small ECC blocks A and B alternately, the other small ECC block can be subjected to error correction, enabling the remaining data ID to be deciphered. Since there is a continuity of address information in the data ID, the data ID that could not be deciphered can be interleaved using information on the decipherable data ID. As a result, the embodiment of FIG. 51 can increase the reliability of access. The number in parentheses at left of FIG. 51 indicates the row number in an ECC block after PO interleaving. When an information storage medium is recorded into, recording is done from left to right in the order of row numbers. In FIG. 51, since data ID included in the individual recording frames are arranged at regular intervals, the capability of searching for the position of data ID is improved.

A small ECC block including data ID in an odd-numbered recording frame differs from a small ECC block including data ID in an even-numbered recording frame (they are provided alternately) (FIG. 51), which improves the reliability of reproduction of data ID and increases the reliability of access.

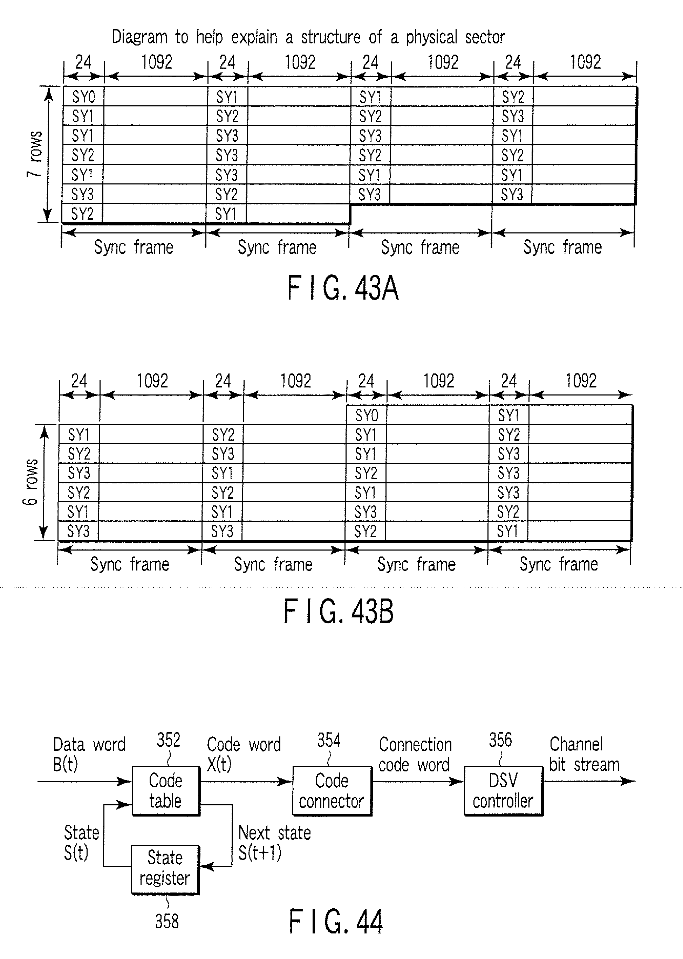

FIGS. 43A and 43B show examples of the structure of a physical sector. FIG. 43A shows the structure of an even-numbered physical sector and FIG. 43B shows the structure of an odd-numbered physical sector. In FIGS. 43A and 43B, information on outer parity PO of FIG. 42 is inserted into the sync data area in the last two sync frames (that is, the last sync code is the SY3 part and sync data just behind it and the other sync code is the SY1 part and sync data just behind it) in each of an even recorded data field and an odd recorded data field.

A part of the left PO shown in FIG. 41 is inserted into the last two sync frames in an even-numbered recording data area and a part of the right PO shown in FIG. 41 is inserted into the last two sync frames in an odd-numbered recording data area. As shown in FIG. 41, one ECC block is composed of a right and a left small ECC block. Data on a different PO group (either PO belonging to the left small ECC block or PO belonging to the right small ECC block) is inserted in each sector alternately. Each of an even-numbered physical sector structure of FIG. 43A and an odd-numbered data structure of FIG. 43B is divided in two at the center line. "24 + 1092 + 24 + 1092 channel bits" on the left side are included in the left small ECC block shown in FIG. 40 or 41 and "24 + 1092 + 24 + 1092 channel bits" on the right side are included in the right small ECC block shown in FIG. 40 or 41.

When the physical sector structure shown in each of FIGS. 43A and 43B is recorded onto the information storage medium, it is recorded serially column by column. Therefore, for example, when the channel bit data in an even-numbered physical sector structure shown in FIG. 43A is recorded onto the information storage medium, 2232 channel bits of data to be recorded first are included in the left small ECC block and 2232 channel bits of data to be recorded next are included in the right small ECC block. Moreover, 2232 channel bits of data to be recorded further are included in the left small ECC block. In contrast, when the channel bit data in an odd-numbered data structure shown in FIG. 43B is recorded onto the information storage medium, 2232 channel bits of data to be recorded first are included in the right small ECC block and 2232 channel bits of data to be recorded next are included in the left small ECC block. Moreover, 2232 channel bits of data to be recorded further are included in the right small ECC block.

As described above, in this embodiment, the same physical sector is caused to belong to two small ECC blocks alternately in units of 2232 channel bits. To put it another way, the data in the right small ECC block and the data in the left small ECC block are distributed alternately in units of 2232 channel bits to form physical sectors, thereby recording data onto the information storage medium. This produces the effect of achieving a structure resistant to burst errors. For example, consider a burst error state where a long flaw has been made in the circumferential direction of the information storage medium and more than 172 bytes of data cannot be read. In this case, since the burst error exceeding 172 bytes is distributed over two small ECC blocks, the burden of error correction in one ECC block is alleviated, assuring higher-performance error correction.

As shown in FIGS. 43A and 43B, the embodiment is characterized in that the data structure of the physical sector differs, depending on whether the physical sector number of a physical sector constituting an ECC block is even or odd. Specifically,

(1) A small ECC block (right or left) to which the first 2232 channel bits of data in the physical sector belong differs.
(2) The structure is such that a different PO group of data is inserted alternately on a sector basis.

As a result, even after an ECC block has been configured, the structure that assures the arrangement of data ID at the begin positions of all of the physical sectors is guaranteed, which makes it possible to check the data positions at high speed at the time of accessing. Furthermore, inserting PO belonging to different small ECC blocks into the same sector in a mixed manner simplifies the PO inserting method as shown in FIG. 42, which not only makes it easier to extract information sector by sector after the error correcting process in the information reproducing apparatus but also simplifies the process of constructing ECC block data in the information recording and reproducing apparatus.

In a method of realizing concretely what has been described above, a structure where PO interleaving and inserting positions at right differ from those at left is used. A part shown by a narrow double line in FIG. 42 or a part shown by a narrow double line and a slanted line indicates a PO interleaving and inserting position. In an even-numbered physical sector, PO is inserted in the left-side end. In an odd-numbered physical sector, PO is inserted in the right-side end. Use of this structure enables data ID to be arranged at the begin position of the physical sector even after the ECC block is configured, which makes it possible to check the data positions at high speed in accessing.

FIG. 44 is a diagram to help explain an example of the configuration of a modulation block. Modulation is performed using a code conversion table. The conversion table lists data words "00h" to "FFh", 12 channel bits in the code word for each of State 0 to State 2, and State of the next data word. FIG. 44 shows the configuration of a modulation block. A code table 352 determines code word X(t) and next state S(t+1) from data word B(t) and state S(t) as follows:

$$X(t) = H\{B(t), S(t)\}$$

$$S(t+1) = G\{B(t), S(t)\}$$

where H is a code word output function and G is a next State output function.

A state register 358 inputs next state $S(t+1)$ from the code table 352 and outputs (current) state $S(t)$ to the code table 352. Some 12 channel bits in the code conversion table include not only "0b" and "1b" but also asterisk bit "*" and sharp bit "#". Asterisk bit "*" in the code conversion table indicates that the bit is a margining bit. Some code words in the conversion table have a margining bit at LSB. A code connector 354 sets the margining bit to either "0b" or "1b" according to the channel bit following the margining bit. If the following channel bit is "0b", the margining bit is set to "1b". If the following channel bit is "1b", the margining bit is set to "0b". Sharp bit "#" in the conversion table indicates that the bit is a DSV control bit. The DSV control bit is determined as a result of DVC component suppression control performed by a DSV controller 536.

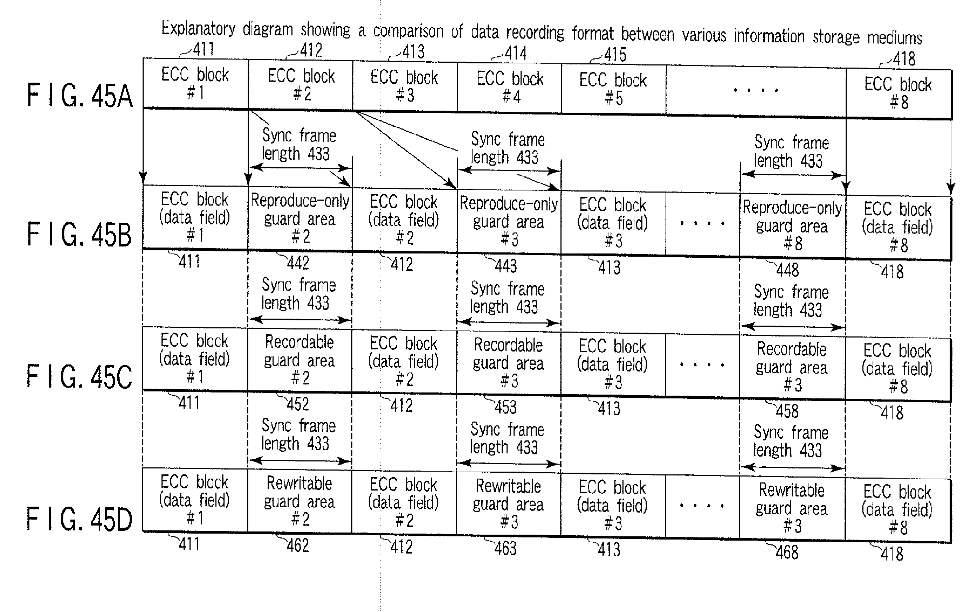

FIGS. 45A, 45B, 45C, and 45D are diagrams to help explain comparative examples of the data recording formats of various information storage mediums. A comparison of data recording format between various information storage mediums in the embodiment will be explained using FIGS. 45A, 45B, 45C, and 45D. FIG. 45A shows data recording formats in a conventional reproduce-only information storage medium DVD-ROM, a conventional recordable information storage medium DVD-R, and a conventional rewritable information storage medium DVD-RW. FIG. 45B shows a data recording format of a reproduce-only information storage medium in the embodiment. FIG. 45C shows a data recording format of a recordable information storage medium in the embodiment. FIG. 45D shows a data recording format of a rewritable information storage medium in the embodiment.

Although the individual ECC blocks 411 to 418 are shown in the same size for comparison, 16 physical sectors constitute one ECC block in a conventional reproduce-only information storage medium DVD-ROM, a conventional recordable information storage medium DVD-R, and a conventional rewritable information storage medium DVD-RW shown in FIG. 45A, whereas 32 physical sectors constitute one ECC block in the embodiment shown in FIGS. 45B, 45C, and 45D. As shown in FIGS. 458, 45C, and 45D, in this embodiment, guard areas 442 to 448 having the same length as the sync frame length 433 are provided between ECC blocks #1 411 to #8 418.

In a conventional reproduce-only information storage medium DVD-ROM, ECC blocks #1 411 to #8 418 are recorded consecutively as shown in FIG. 45A. When a additional recording or rewriting process called a restricted overwrite is carried out to assure the interchangeability of data recording format between a conventional recordable information storage medium DVD-R and conventional rewritable information storage medium DVD-RW and a conventional reproduce-only information storage medium DVD-ROM, this causes a problem: a part of the ECC block is destroyed by overwriting and therefore the reliability of data in reproduction is impaired seriously. In contrast, providing guard areas 442 to 448 between data fields (ECC blocks) as in the embodiment limits the overwriting area to the guard area 442 to 448, which produces the effect of preventing the data in the data fields (ECC blocks) from being destroyed.

The embodiment is characterized in that the length of each of the guard areas 442 to 448 is made equal to the sync frame length 433 of one sync frame size as shown in FIGS. 45A, 45B, 45C, and 45D. As shown in FIGS. 43A, 43B, 45A, 45B, 45C, and 45D, sync codes are arranged at regular intervals of a 1116-channel-bit sync frame length 433. The sync code position extracting section 145 of FIG. 24 extracts the positions of sync codes using the regular intervals. In the embodiment, making the length of each of the guard areas 442 to 448 equal to the sync frame length 433 keeps the sync frame intervals unchanged, even if the guard areas 442 to 448 are crossed over during reproduction. This produces the effect of making it easy to detect the positions of sync codes during reproduction.

Furthermore, in the embodiment, sync codes (sync data) are provided in the guard areas for the purpose of achieving the following:

(1) The frequency of appearances of sync code is made equal even in a place crossing over the guard areas 442 to 448, thereby improving the accuracy of sync code position detection.
(2) The determination of the positions of physical sectors including the guard areas 442 to 448 is made easier.

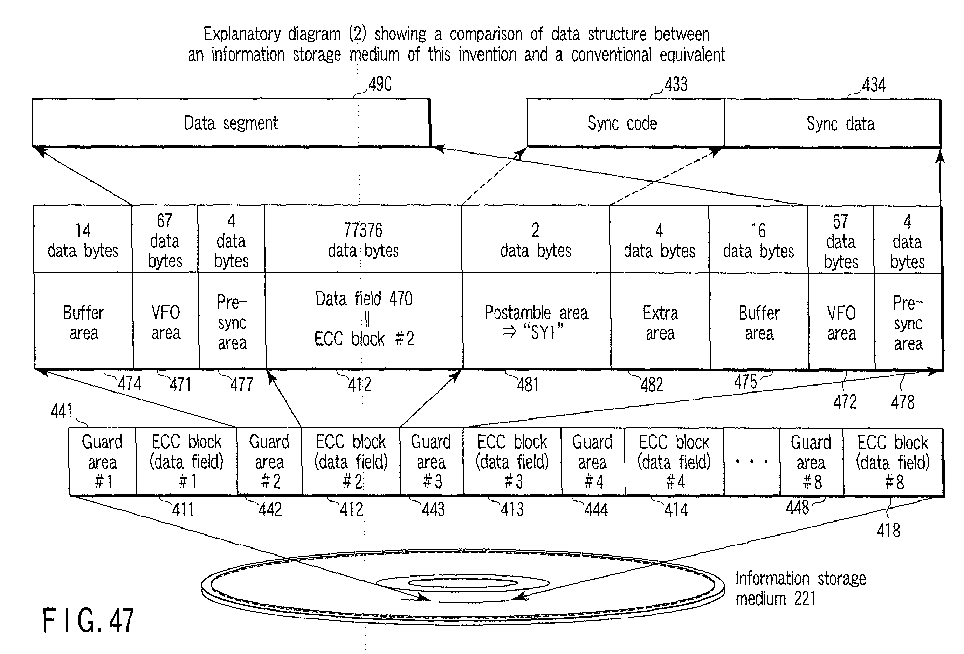

Specifically, as shown in FIG. 47, a postamble field 481 is formed at the starting position of each of the guard areas 442 to 468. In the postamble 481, sync code "SY1" with sync code number "1" is provided. As seen from FIGS. 43A and 43B, combinations of sync code numbers of three consecutive sync codes in physical sectors are different in all of the places. Moreover, combinations of sync code numbers of three consecutive sync codes, taking sync into account code number "1" in the guard areas 442 to 448, are also different in all of the places. Therefore, a combination of sync code numbers of three consecutive sync codes in an arbitrary area makes it possible to determine not only position information in the physical sectors but also the positions in the physical sectors including the positions of the guard areas.

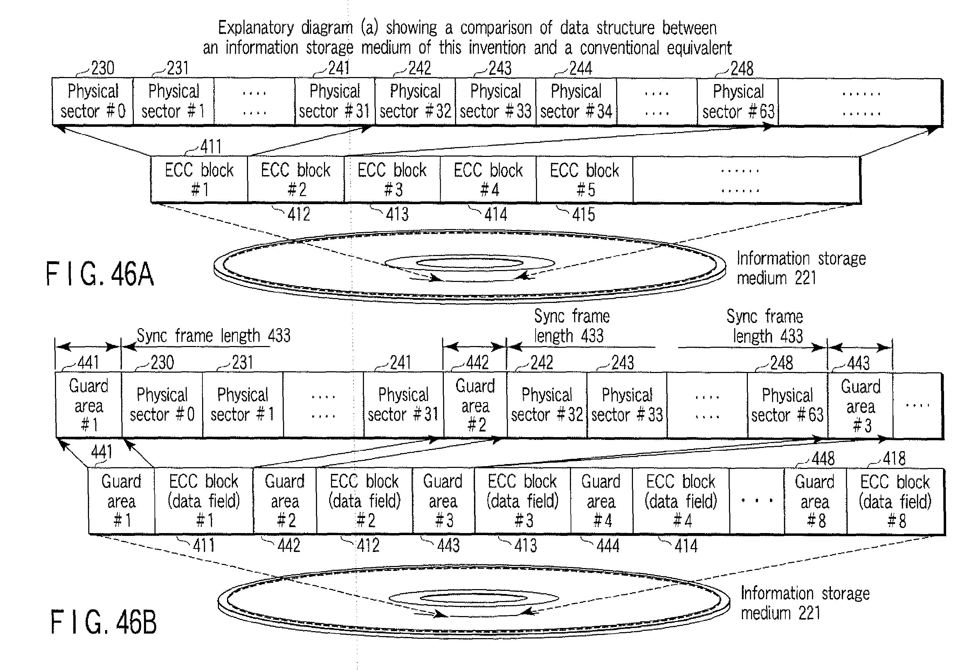

FIGS. 46A and 46B are diagrams to help explain example 1 of the comparison of the data structure of the information storage medium with that of a conventional equivalent for various information storage mediums. FIG. 47 is a diagram to help explain example 2 of the comparison of the data structure of the information storage medium with that of a conventional equivalent. FIG. 47 shows a detailed structure of the guard areas 441 to 448 shown in FIGS. 45A, 45B, 45C, and 45D. The structure of a physical sector is composed of a combination of sync code 431 and sync data 432. Similarly, each of the guard areas 441 to 448 is composed of a combination of sync code 433 and sync data 434. The data modulated according to the same modulation rule as that of sync data 432 in a sector is placed in the sync data 434 area in the guard area #3 443.

In this embodiment, the area of one ECC block #2 (see FIGS. 46A, 46B, and 47) 412 composed of 32 physical sectors of FIG. 40 is called a data field 470. In FIG. 47, VFO (Variable Frequency Oscillators) areas 471, 472 are used to synchronize reference clocks in the information reproducing apparatus or information recording and reproducing apparatus in reproducing the data area 470. The contents of data recorded in the VFO areas 471, 472 are such that data before modulation according to a common modulation rule is a repetition of consecutive "7Eh" and the actually recorded channel bit pattern after modulation is a repetition of "010001 000100" (a repeated pattern of three consecutive "0s"). To obtain this pattern, the begin byte in each of the VFO areas 471, 472 has to be set to State 2 in modulation.

Pre-sync areas 477, 478 indicate the positions of the boundary between the VFO areas 471, 472 and the data area 470. The recording channel bit pattern after modulation is a repetition of "100000 100000" (a repeated pattern of 5 consecutive "0s"). The information reproducing apparatus or information recording and reproducing apparatus detects the position of a change in a repeated pattern of "100000 100000" in the pre-sync areas 477, 478 from a repeated pattern of "010001 000100" in the VFO areas 471, 471, thereby realizing the approach of the data area 470. The postamble field 481 indicates not only the end position of the data area 470 but also the starting position of a guard area 443. The pattern in the postamble field 481 coincides with the pattern of "SY1" in a sync code.

An extra area 482 is an area used for copy control and unauthorized copy prevention. When the extra area 482 is not used for copy control and unauthorized copy prevention, all of it is set to "0" in channel bits. In the buffer area, the same data before modulation as in the VFO areas 471, 472 is a repetition of "7Eh" and the actually recorded channel bit pattern after modulation is a repeated pattern of "010001 000100" (a repeated pattern of three consecutive "0s"). To obtain this pattern, the begin byte in each of the VFO areas 471, 472 has to be set to State 2 in modulation.

As shown in FIG. 47, the postamble field 481 in which a pattern of "SY1" is recorded corresponds to the sync code area 433. The area from the extra area 482 just behind the sync code area 433 to the pre-sync 478 corresponds to the sync data area 434. The area from the VFO area 471 to a buffer area 475 (that is, the area including the data area 470 and a part of the guard areas in front of and behind the data area 470) is called a data segment 490, which indicates the contents different from a "physical segment" explained later. The data size of each item of data shown in FIG. 47 is expressed in the number of bytes of data before modulation.

In this embodiment, not only the structure of FIG. 47 but also a method described below as one other embodiment may be used. The pre-sync area 477 is arranged in the middle of the VOF areas 471, 472 instead of arranging the pre-sync area 477 at the boundary between the VOF are 471 and the data area 470. In the one other embodiment, the distance between the sync code "SY0" at the begin position of the data block 470 and the pre-sync area 477 is increased, thereby securing a great distance correlation, which sets the pre-sync area 477 as a tentative Sync and uses it as distance correlation information on the real Sync position (although differing from another inter-Sync distance). If the real Sync cannot be detected, Sync is inserted in the position in which the real one created from the tentative Sync is to be detected. The one other embodiment is characterized in that the pre-sync area 477 is kept a little away from the real sync ("SY0"). Providing the pre-sync area 477 at the beginning of each of the VFO areas 471, 472 reduces the function of pre-sync because PLL of a reading clock is not locked. Therefore, it is desirable that the pre-sync area 477 be provided in the mid-point of the VFO areas 471, 472.

In this embodiment, address information on a recording (rewritable or recordable) information storage medium is recorded in advance by wobble modulation. In the wobble modulation method, $\pm 90°$ (180°) phase modulation is used. Address information is recorded in advance onto the information storage medium by the NRZ (Non-Return to Zero) method.

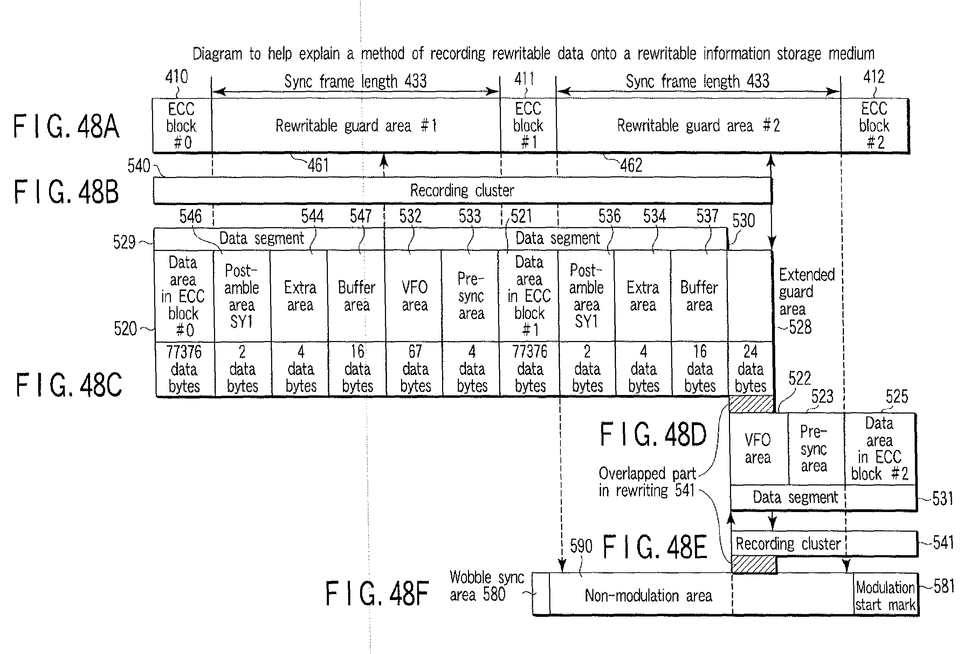

FIGS. 48A, 48B, 48C, 48D, 48E, and 48F are diagrams to help explain a method of recording rewritable data to be recorded on a rewritable information storage medium. FIG. 48A shows the same contents as that of FIG. 45D. In the embodiment, rewritable data is rewritten in recording clusters 540, 541 shown in FIGS. 48B and 48E. One recording cluster is composed of one or more data segments 529 to 531 and an extended guard field 528 arranged last. Specifically, the start of one recording cluster 531 coincides with the starting position of the data segment 531 and starts at the VFO area 522.

When a plurality of data segments 529, 530 are recorded consecutively, a plurality of data segments 529, 530 are arranged consecutively in the same recording cluster 531 as shown in FIGS. 48B and 48C. Since the buffer area 547 existing at the end of the data segment 529 is connected consecutively to the VFO area 532 existing at the beginning of the next data segment, the phases (of the recording reference clock) in both areas coincide with each other. After the continuous recoding is completed, an extended guard area 528 is placed at the end position of the recording cluster 540. The data size of the extended guard area 528 is a 24-data-byte size in unmodulated data.

As seen from a correspondence between FIG. 48A and FIG. 48C, the rewritable guard areas 461, 462 include postamble areas 546, 536, extra areas 544, 534, buffer areas 547, 537, VFO areas 532, 522, and pre-sync areas 533, 523, respectively. Only in a continuous recording end place is an extended guard field 528 provided.

To compare physical ranges of rewriting units, FIG. 48C shows a part of the recording cluster 540 serving as a unit of information rewriting, and FIG. 48D shows a part of the recording cluster 541 serving as a unit of next rewriting. Rewriting is done so that the extended guard area 528 and the following VFO 522 may partially overlap with each other at the overlap 541 in rewriting. Rewriting with partial overlapping prevents a gap (an area where no recording mark is formed) from occurring between the recording clusters 540, 541 and interlayer crosstalk on the information storage medium enabling data to be recorded on a single-sided double recording layer is removed, which makes it possible to detect a stable reproduced signal.

The size of rewritable data in one data segment in the embodiment is:

$$67 + 4 + 77376 + 2 + 4 + 16 = 77469 \text{ data bytes} \quad (01)$$

In addition, as seen from FIGS. 69(c) and 69(d), one wobble data unit 560 is composed of:

$$6 + 4 + 6 + 68 = 84 \text{ wobbles} \quad (02)$$

17 wobble data units constitute one physical segment 550. The length of seven physical segments 550 to 556 coincides with the length of one data segment 531, the length of one data segment 531 includes:

$$84 \times 17 \times 7 = 9996 \text{ wobbles} \quad (03)$$

Therefore, from equation (01) and equation (03), the following corresponds to one wobble:

$$77496 \div 9996 = 7.75 \text{ data bytes/wobble} \quad (04)$$

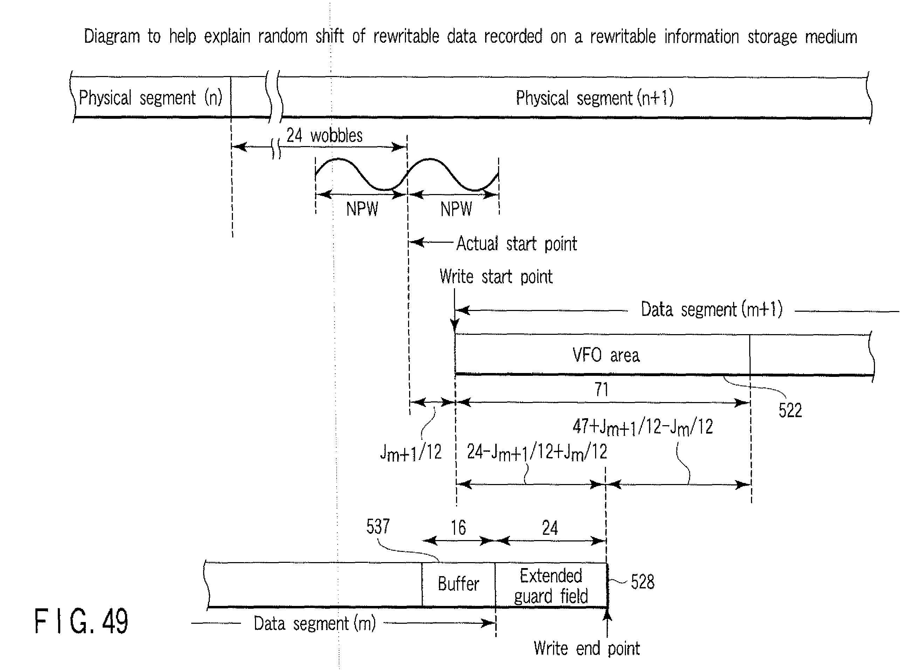

FIG. 49 is a diagram to help explain an example of a data random shift of rewritable data written on a rewritable information storage medium. As shown in FIG. 49, the part where the next VFO area 522 and the extended guard field 528 overlap with each other lies 24 wobbles or more from the begin position of a physical segment. 16 wobbles from the head of a physical segment 550 constitute a wobble sync area 580 and the following 68 wobbles constitute an unmodulated area 590. Therefore, the part where the next VFO area 522 and the extended guard field 528 overlap with each other from 24 wobbles or more from the head of the physical segment 550 is in the unmodulated area 590. As described above, locating the begin position of the data segment 24 wobbles or more from the begin position of the physical segment not only causes the overlapping place to lie in the unmodulated area 590 but also secures the detection time for a wobble sync area 580 and the preparation time for a recording process suitably, which assures a stable, high-accuracy recording process.

In the embodiment, the recording film of the rewritable information storage medium uses a phase-change recording film. In a phase-change recording film, since the recording film begins to deteriorate near the rewrite starting and end positions, repeating the recording start and end in the same position limits the number of rewrites due to the deterioration of the recording film. In the embodiment, to alleviate this problem, a shift of $(J_{m+1}/12)$ data bytes is made in rewriting as shown in FIG. 49, thereby shifting the recording start position at random.

In FIGS. 48C and 48D, to explain the basic concept, the begin position of the extended guard field 528 is caused to coincide with the begin position of the VFO area 522. Strictly speaking, however, the begin position of the VFO area 522 is shifted at random as shown in FIG. 48 in the embodiment.

A DVD-RAM disk, an existing rewritable information storage medium, also uses a phase-change recording film and shifts the recording start and end positions at random to increase the number of rewrites. The maximum amount of shift in making a random shift on an existing DVD-RAM disk is set to 8 data bytes. The channel bit length (of modulated data recorded on the disk) in an existing DVD-RAM disk is set to 0.143 μm on average.

In the rewritable information storage medium of the embodiment, from FIG. 32, from the channel bit length (B) of FIG. 32, the average length of a channel bit is:

$$(0.087 + 0.093) \div 2 = 0.090 \text{ μm} \qquad (05)$$

When the length of the physical shift range is adapted to the existing DVD-RAM disk, the required minimum length as the random shift range in the embodiment is calculated using the above value as follows:

$$8 \text{ bytes} \times (0.143 \text{ μm} \div 0.090 \text{ μm}) = 12.7 \text{ byte} \qquad (06)$$

In the embodiment, to facilitate the reproduced signal detecting process, the unit of the amount of random shift is adapted to a "channel bit" after modulation. In the embodiment, since ETM modulation (Eight to Twelve modulation) that converts 8 bits into 12 bits is used, the amount of random shift is expressed using a mathematical formula with a date byte as a reference:

$$Jm/12 \text{ data bytes} \qquad (07)$$

It follows from equation (06) that:

$$12.7 \times 12 = 152.4 \qquad (08)$$

Therefore, the values Jm can take are from 0 to 152. For the above reasons, in the range satisfying equation (08), the length of the random shift range agrees with the existing DVD-RAM disk, which assures the same number of rewrites as that of the existing DVD-RAM disk.

In the embodiment, to secure the number of rewrites larger than that of the existing DVD-RAM disk, a small margin is allowed for the value of equation (06) as follows:

$$\text{The length of the random shift range is set to 14 data bytes} \qquad (09)$$

Substituting the value of equation (10) into equation (07) gives $14 \times 12 = 168$. Therefore, it follows that:

$$\text{The values Jm can take are from 0 to 167} \qquad (10)$$

The amount of random shift is set to a larger range than Jm/12 ($0 \leq Jm \leq 154$), thereby satisfying equation (08) and causing the length of the physical range for the amount of random shift to agree with the existing DVD-RAM, which produces the effect of assuring the same number of repeated recordings as that of the existing DVD-RAM.

In FIGS. 48A, 48B, 48C, 48D, 48E, and 48F, the length of the buffer area 547 and that of the VFO area 532 are constant in the recording cluster 540. The amount Jm of random shift of each of the data segments 529, 530 has the same value throughout the same recording cluster 540. When a recording cluster 540 including many data segments is recorded consecutively, the recording positions are monitored using wobbles. Specifically, the position of the wobble sync area 580 is detected and the number of wobbles in the unmodulated areas 590, 591 are counted, thereby checking the recording positions on the information storage medium and recording data at the same time.

At this time, there may be rare occasions when a wobble slip (recording done in a position shifted by one wobble period) will occur due to the miscounting of wobbles or uneven rotation of the rotating motor that rotates the information storage medium and therefore the recording position will shift on the information storage medium. In the information storage medium of the embodiment, if a shift in the recoding position has been detected as described above, adjustment is made in a rewritable guard area 461 of FIGS. 48A, 48B, 48C, 48D, 48E, and 48F or in a recordable guard area 452 of FIGS. 45A, 45B, 45C, and 45D, thereby correcting the recording timing.

In FIGS. 48A, 48B, 48C, 48D, 48E, and 48F, important information that permits neither the omission of bits nor the redundancy of bits is recorded in the postamble area 546, extra area 544, and pre-sync area 533. However, in the buffer area 547 and VFO area 532, a specific pattern is repeated. Therefore, the omission and redundancy of only one pattern are permitted, as long as the repeated boundary positions are secured. Therefore, in the embodiment, in the guard area 461, particularly in the buffer area 547 or VFO area 532, adjustment is made to correct the recording timing.

In this embodiment, as shown in FIG. 49, the actual start point position serving as a reference of position setting is set so as to coincide with the position of the wobble amplitude "0" (the center of wobble). However, since the wobble position detecting accuracy is low, this embodiment permits the actual start point position to have up to

$$\texttt{a shift of } \pm 1 \texttt{ data bytes} \qquad (11)$$

In FIGS. 48A, 48B, 48C, 48D, 48E, 48F, and 49, the amount of random shift in the data segment 530 is set to $J_m$ (as described above, the amount of random shift is the same in all of the data segments 529 in the recording cluster 540). Thereafter, the amount of random shift in a data segment 531 in which additional recording is done is set to $J_{m+1}$. A value $J_m$ in (10) and $J_{m+1}$ can take is, for example, the intermediate value: $J_m = J_{m+1} = 84$. When the position accuracy of the actual start point is sufficiently high, the starting position of the extended guard field 528 coincides with the starting position of the VFO area 522 as shown in FIGS. 48A, 48B, 48C, 48D, 48E, and 48F.

In contrast, when a data segment 530 is recorded in the rearmost position and a data segment 531 to be rewritten or additionally recorded later is recorded in the very front position, the begin position of the VFO area 522 may go into the buffer area 537 by up to 15 data bytes because of the values in (09) and (10). In the extra area 534 just in front of the buffer area 537, specific important information has been recorded. Therefore, in the embodiment, the following must be met:

$$\texttt{the length of the buffer area 537 has to be}$$
$$\texttt{15 data bytes or more} \qquad (12)$$

In the embodiment shown in FIGS. 48A, 48B, 48C, 48D, 48E, and 48F, the data size of the buffer area 537 is set to 16 data bytes, taking an allowance of one data byte into account.

If a gap occurs between the extended guard area 528 and the VFO area 522 as a result of a random shift, when a single-sided double-recording-layer structure is used, interlayer crosstalk is caused by the gap during reproduction. To overcome this problem, the extended guard field 528 and VFO area 522 are caused to always partially overlap with each other even when a random shift is made, thereby preventing a gap from occurring. Therefore, in the embodiment, from (12), the length of the extended guard field 528 must be set to 15 data bytes or more. Since a subsequent VFO 522 is made as long as 71 data bytes, even if the overlapping area of the extended guard field 528 and VFO area 522 becomes a little wider, this has no adverse effect in reproducing a signal (because the time required to synchronize the reproduction reference clock in the unoverlapped VFO area 522 is secured sufficiently). Therefore, the extended guard field 528 can be set to a larger value than 15 data bytes.

There may be rare occasions when a wobble slip will occur in continuous recording and the recording position will shift by one wobble period. As seen from equation (04), a wobble period corresponds to 7.75 (about 8) data bytes. Thus, taking this into account, (12) is modified as follows in the embodiment:

$$\texttt{The length of the extended guard field 528 is set}$$

$$\text{to } (15 + 8) = 23 \text{ data bytes or more} \qquad (14)$$

In the embodiment shown in FIGS. 48A, 48B, 48C, 48D, 48E, and 48F, a margin of one data byte is given as in the buffer area 537 and the length of the extended guard field 528 is set to 24 data bytes.

In FIG. 48E, the recording start position of the recording cluster 541 has to be set accurately. The information recording and reproducing apparatus of the embodiment detects the recording start position by using the wobble signal previously recorded on a rewritable or a recordable information storage medium. All of the areas, excluding the wobble sync area 580, are changed in pattern from NPW to IPW in units of 4 wobbles. In contrast, in the wobble sync area 580, since the wobble switching unit partially shifts from 4 wobbles, the wobble sync area 580 is easiest to detect. Therefore, the information recording and reproducing apparatus of the embodiment detects the position of the wobble sync area 580 and then prepares for a recording process and starts recording. Thus, the starting position of the recording cluster 541 must lie in the unmodulated area 590 just behind the wobble sync area 580.

FIG. 49 shows its contents. A wobble sync area 580 is provided immediately after the switching of physical segments. The length of the wobble sync area 580 is equivalent to 16 wobble periods. After the wobble sync area 580 is detected, 8 wobble periods are needed, allowing a margin for preparation for a recording process. As shown in FIG. 49, the begin position of the VFO area 522 existing at the begin position of the recording cluster 541 has to be placed 24 wobbles or more behind a physical segment switching position, even taking random shift into account.

As shown in FIGS. 48A, 48B, 48C, 48D, 48E, and 48F, a recording process is carried out many times in an overlapping place 541 in rewriting. When rewriting is repeated, the physical shape of a wobble groove or a wobble land changes (or deteriorates), resulting in a decrease in the quality of the wobble reproduced signal. In the embodiment, as shown in FIG. 48F, an overlapping place 541 is prevented from lying in the wobble sync area 580 or wobble address area 586 in rewriting or additional recording, and then is recorded in the unmodulated area 590. Since a specific wobble pattern (NPW) is simply repeated in the unmodulated area 590, even if the quality of the wobble reproduced signal has partially deteriorated, the signal can be supplemented with the preceding and following wobble reproduced signals. As described above, setting is done so that the position of the overlapping place 541 may lie in the unmodulated area 590 in rewriting or additional recording, making it possible to prevent the quality of the wobble reproduced signal from deteriorating due to the deterioration of the shape in the wobble sync area 580 or wobble address area 586, which produces the effect of assuring a stable wobble sense signal from the wobble address information 610.

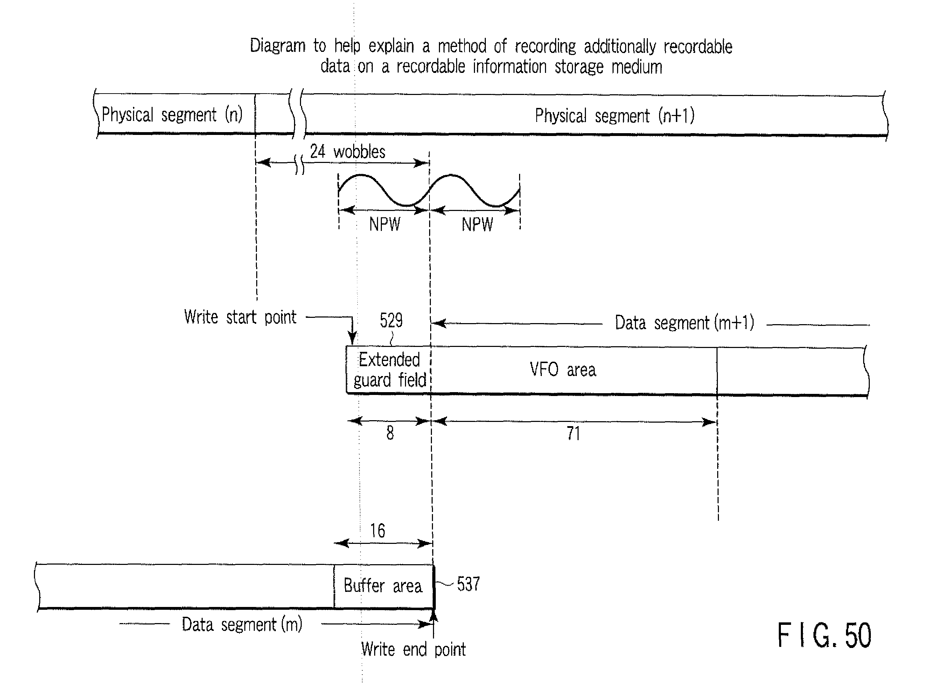

FIG. 50 is a diagram to help explain a method of additionally writing recordable data recorded on a recordable information storage medium. Since recording is done only once on a recordable information storage medium, the above-described random shift is not needed. In a recordable information storage medium too, as shown in FIG. 49, setting is done so that the begin position of a data segment may lie 24 wobbles or more from the begin position of a physical segment and therefore an overlapping place may lie in the unmodulated area of a wobble.

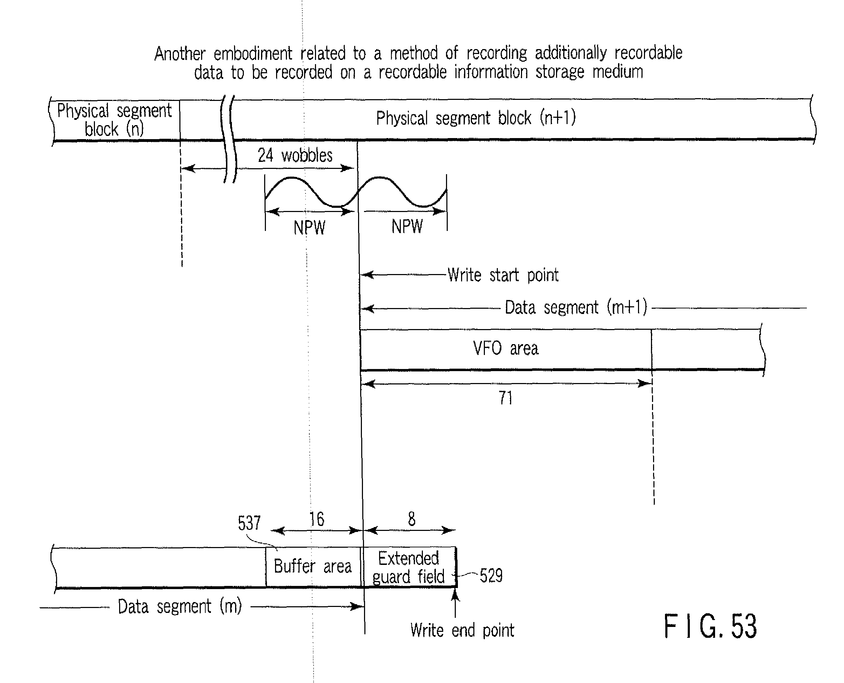

FIG. 53 is a diagram to help explain another example of the method of additionally writing recordable data recorded on a recordable information storage medium. In the example, a position 24 wobbles behind the boundary position of a physical segment block is a write starting point. In data to be newly added, a 71-data-byte VFO area is formed and then a data area (data field) in the ECC block is written. The write starting point coincides with the end position of the buffer area 537 of the recording data recorded just before. The end of an extended guard field formed so as to have a length of 8 data bytes from the starting point is the recording end position (or write ending point). Accordingly, when data has been additionally written, the extended guard field 529 recorded just before and a VEO area additionally recorded are recorded in such a manner that they overlap with each other by 8 data bytes.

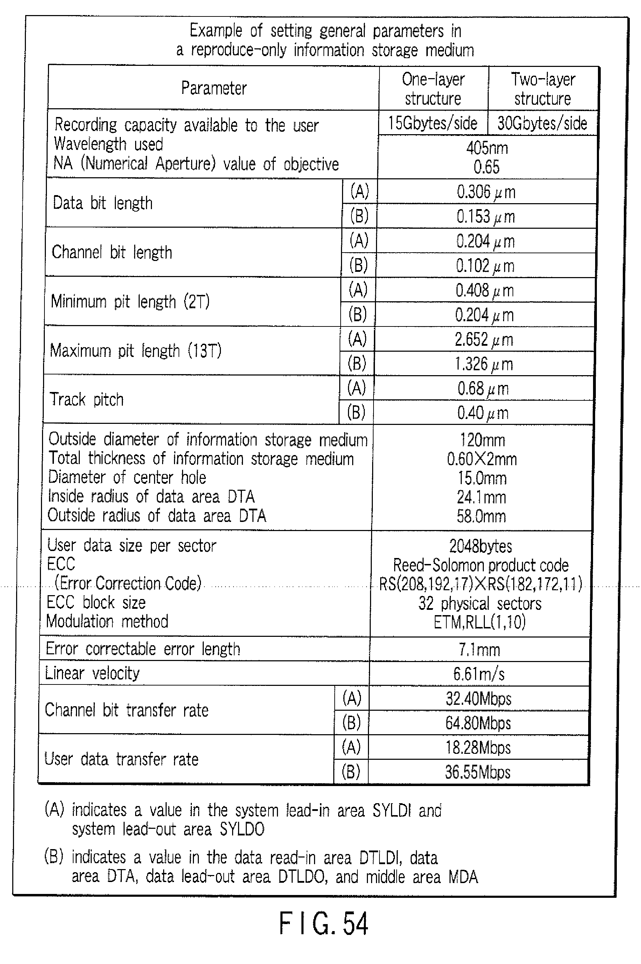

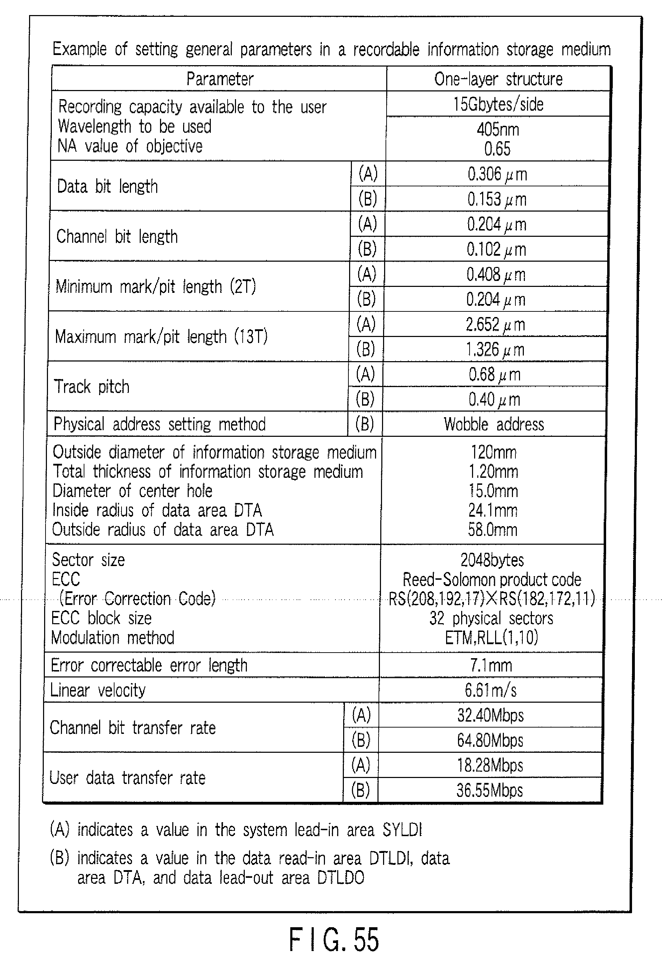

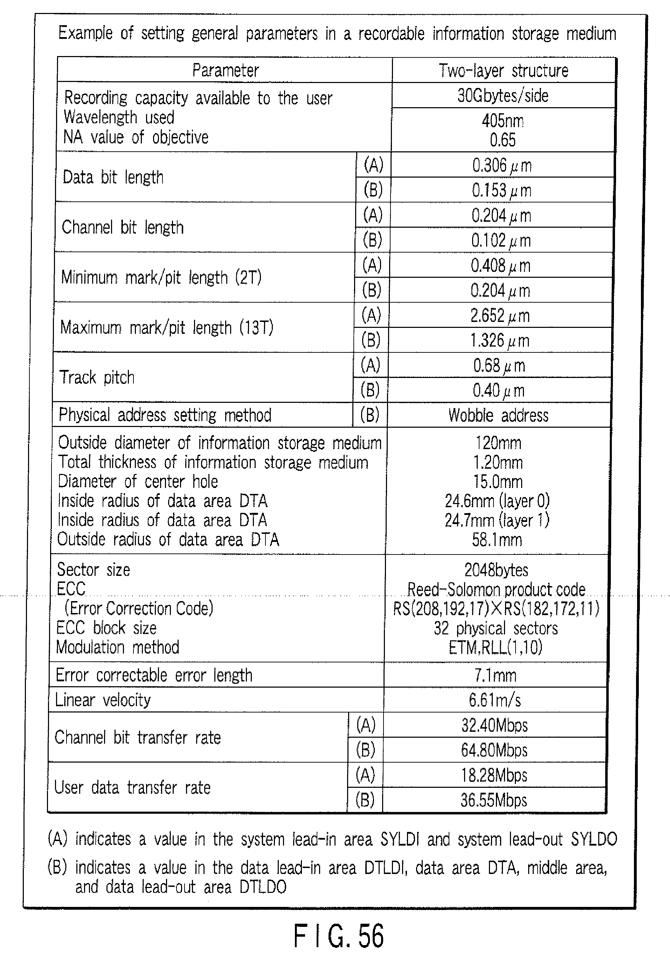

FIG. 54 is a table to help explain an example of the values of general parameters in a reproduce-only information storage medium (of the 15-GB single-sided, single-layer type and of the 30-GB single-sided, dual-layer type). FIG. 55 is a table to help explain an example of the values of general parameters in a recordable information storage medium (of the 15-GB single-sided, single-layer type). FIG. 56 is a table to help explain an example of the values of general parameters in a recordable information storage medium (of the 30-GB single-sided, dual-layer type). As seen from the comparison between the example of parameters in FIG. 32 and the example of parameters (particularly in item (B)) in FIG. 54, 55, or 56, an information storage medium of the rewritable type (in FIG. 32) has a narrower track pith and a higher linear density (or a shorter data bit length) than those of an information storage medium of the reproduce-only type (in FIG. 54) or of the recordable type (in FIGS. 55 and 56). This increases the recording capacity per layer of the rewritable medium of FIG. 32. In the rewritable information storage medium, use of the land-groove recording method reduces the effect of crosstalk between adjacent tracks and decreases the track pitch.

Moreover, in any one of the reproduce-only information storage medium (in FIG. 54), recordable information storage mediums (in FIGS. 55 and 56), and rewritable information storage medium (in 32), the data bit length and track pitch (corresponding to the recording density) of the system lead-in/-out areas SYLDI/SYLDO are made greater than those of the data lead-in/data lead-out areas DTLDI/DTLDO (or the recording density of the former is made lower than that of the latter). That is, in an optical disk (for $\lambda$ = 405 nm laser) according to an embodiment of the invention, the data bit length and track pitch of the system lead-in/system lead-out areas SYLDI/SYLDO are brought near the values of the lead-in area in an existing DVD disk (for $\lambda$ = 650 nm laser), thereby securing the interchangeability with the existing DVD.

In another embodiment of the invention, as with an existing DVD-R, the step of an emboss in the system lead-in/system lead-out areas SYLDI/SYLDO of the recordable information medium is set shallow. This makes the depth of a pre-groove in the recordable information storage medium shallower, producing the effect of increasing the modulation degree of the reproduced signal from the recording mark formed in additional writing on the pre-groove. Conversely, there arises another problem: the modulation degree of the reproduced signal from the system lead-in/system lead-out areas SYLDI/SYLDO becomes smaller. To overcome this problem, the data bit length (and/or track pitch) of the system lead-in/system lead-out areas SYLDI/SYLDO is made rougher, thereby separating (making much lower) the repeat frequency of pits and spaces in the densest position from the optical cut-off frequency of the reproduction objective MTF (Modulation Transfer Function), which makes it possible to increase the amplitude of the reproduced signal from the system lead-in/system lead-out areas SYLDI/SYLDO and stabilize reproduction.

Although the general parameters of the 30-GB single-sided, dual-layer type (in FIG. 56) are almost the same as those of the 15-GB single-sided, single-layer type (in FIG. 55), they differ in the following points. In the 30-GB single-sided, dual-layer type, the recording capacity the user can use increases to twice that of the 15-GB single-sided, single layer type, the inside radius of the data area is 24.6 mm in layer 0 (corresponding to L0 recording film of FIG. 1) and 24.7 mm in layer 1 (corresponding to L1 recording film of FIG. 1), and the outside radius of the data area is 58.1 mm (common to layer 0 and layer 1).

<Format of information area>

An information area provided over two layers includes seven areas: a system lead-in area, a connection area, a data lead-in area, a data area, a data lead-out area, a system lead-out area, and a middle area. Providing each layer with a middle area enables a reproduction beam to be moved from layer 0 to layer 1. In the data area, main data is recorded. The system lead-in area includes control data and reference code. The data lead-out area enables continuous smooth reading.

<Lead-out area>

The system lead-in area and system lead-out area include tracks composed of emboss pits. The data lead-in area, data area, and middle area in layer 0 and the middle area, data area, and data lead-out area in layer 1 include groove tracks. The groove track is continuous from the starting position of the data lead-in area to the end position of the middle area in layer 0 and from the starting position of the middle area to the end position of the data lead-out area in layer 1. Laminating single-sided, dual-layer disks together produces a double-sided, dual-layer disk having two reading surfaces (or a disk having a total of four recording layers).

Each track in the system lead-in area and system lead-out area is divided into data segments.

Each track in the data lead-in area, data area, data lead-out area, and middle area is divided into PS blocks. Each PS block is divided into seven physical segments. Each physical segment contains 11067 bytes.

<Lead-in area, lead-out area, and middle area>

The layout of the middle area can be changed by rearrangement. The boundary between individual zones and between areas in each of the lead-in area, lead-out area, and middle area coincide with the boundary between data segments. On the inner edge side of layer 0, the system lead-in area, connection area, data lead-in area, and data area are provided in that order from the innermost periphery. On the inner edge side of layer 1, the system lead-out area, connection area, data lead-out area, and data area are provided in that order from the innermost periphery.

As described above, since the data lead-in area including a management area is provided only in layer 0, when finalization is performed in layer L1, information on layer L1 is also written in the data lead-in area. This makes it possible to acquire all the management information by reading only layer L0 at the time of start-up, which eliminates the burden of reading layer L0 and layer L1 each time. To record data into layer L1, all of layer L0 has to be written into beforehand. It is at the time of finalization that the management area is filled in.

The system lead-in area in layer 0 is composed of an initial zone, a buffer zone, a control data zone, and a buffer zone in that order from the inner edge side. The data lead-in area in layer 0 is composed of a blank zone, a guard track zone, a drive test zone, a disk test zone, a blank zone, an RMD duplication zone, an L-RMD (recording management data), an R physical format information zone, and a reference code zone in that order from the inner edge side. The starting address (on the inner edge side) of the data area in layer 0 is shifted a clearance from the ending address (on the inner edge side) of the data area in layer 1. The ending address (on the inner edge side) of the data area in layer 1 is closer to the outer edge side than the starting address of the data area in layer 0.

The data lead-out area in layer 1 is composed of a blank zone, a disk test zone, a drive test zone, and a guard track zone in that order from the inner edge side. The blank zone is an area which has grooves but has no data written into. The guard track zone is a zone in which a specific pattern is recorded for testing. In the guard track zone, data "00" before modulation is recorded. The guard track zone in layer 0 is provided to record the disk test zone and drive test zone in layer 1. Therefore, the guard track zone in layer 0 corresponds to a field obtained by adding at least a clearance to the disk test zone and drive test zone in layer 1. The guard track zone in layer 1 is provided to record the drive test zone, disk test zone, blank zone, RMD duplication zone, L-RMD, R physical format information zone, and reference code zone in layer 0. Therefore, the guard track zone in layer 1 corresponds to a field obtained by adding at least a clearance to the drive test zone, disk test zone, blank zone, RMD duplication zone, L-RMD, R physical format information zone, and reference code zone in layer 0.

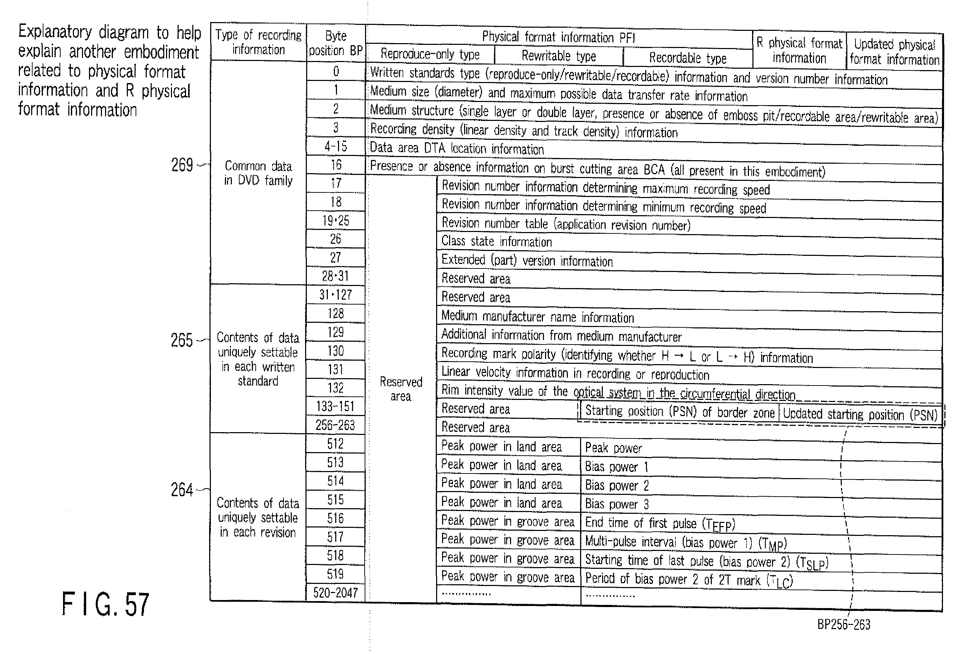

FIG. 57 is a table to help explain another example of the contents of physical format information and R physical format information. The configuration of FIG. 57 is such that "updated physical format information" is added to the example of FIG. 37. In the example of FIG. 57, byte positions 0 to 31 are used as a recording area of common information 269 in the DVD family and byte position 32 and later are set for written standards.

Like byte positions 197 to 511 in FIG. 37, a part of byte positions 256 to 263 in FIG 57 can be configured in the HD_DVD-R physical format information (or R physical format information in FIG. 57) so as to enable PSN of the starting position of the border zone (corresponding to the starting physical segment number of the present border out) and PSN of the updated starting position (corresponding to the starting physical segment number of the next border out) to be written.

Furthermore, although not shown, byte position 32 in FIG 57 can be configured to enable the actual value of the maximum reading speed guaranteed on the disk to be written. In byte position 32, for example, 0001010b corresponds to 1×. The 1× represents a channel bit rate of 64.8 Mbps. The actual maximum reading speed is calculated using Value × (1/10).

Moreover, although not shown, in byte position 33 in FIG. 57, "Layer format table" about the physical format of HD_DVD-R (two-layer disk having layer 0 and layer 1) can be written. The table can be configured using eight bits. Of the eight bits, three bits represent the format of layer 0 (e.g., if the three bits are 000b, layer 0 is in the HD_DVD-R format) and the remaining three bits represent the format of layer 1 (e.g., if the three bits are 000b, layer 0 is in the HD_DVD-R format). In a single-sided, single-layer R disk, the layer format table of byte position 33 is ignored.

In addition, although not shown, in byte position 133 to byte position 151 in FIG. 57, the following information can be written. In byte position 133 to byte position 148, the actual value of an i-th (i = 1, 2, ..., 16) recording speed is written. Here, "an i-th recording speed" indicates an i-th minimum speed among the applicable speeds on the disk. Therefore, in byte position 133 with i = 1, the lowest recording speed is written. Although a first to a 16th area are prepared for i in byte position 133 to byte position 148, all of them may not be written into. For example, when 00000000b has been written (or when an i-th recording speed is absent), this means that the bytes in the (i-th) area have been reserved. The i-th recording speed is calculated using Value × (1/10).

In byte position 149, the reflectivity of the data area is written. For example, when 00101000b has been written in byte position 149, this means that the reflectivity is 20%. The actual reflectivity is calculated using Value × (1/2)%.

In byte position 150, information on a push-pull signal including a track-shape bit is written. When the track-shape bit is 0b, this means that the track is on a groove. When the bit is 1b, this means that the track is on a land. Moreover, when seven bits representing a push-pull signal is 0101000b, the value of the push-pull signal is, for example, "0.40". The actual amplitude $((I1 - I2)_{PP}/(I1 + I2)_{DC})$ of the push-pull signal is calculated using Value × (1/100).

In byte position 151, the amplitude of "on-track signal" is written. When the description in byte position 151 is 01000110b, this means that the amplitude of the on-track signal is 0.70. The amplitude value of the actual on-track signal is calculated using Value × (1/100).

In a recordable information storage medium, physical formation information PFI (or a copy of common information on the HD_DVD family) is recorded in R-physical format information recorded in the R physical information zone RIZ in the data lead-in area DTLDI in such a manner that information on the starting position of a border zone (or the outermost address of the first border) is added to the physical format information.

In updated physical format information U_PFI in the border-in BRDI, physical format information PFI (a copy of common information on the HD_DVD family) is recorded in such a manner that information on its updated starting position (or the outermost address of its border) is added to the format information. In the example of FIG. 37, information on the starting position of the border zone is arranged from byte position 197 to byte position 204. In contrast, in the example of FIG. 57, information on the starting position of the border zone is arranged from the 133rd byte to the 140th byte, which are in the byte positions ahead of information about the recording conditions including peak power and bias power 1 (or the information content 264 uniquely settable for each revision) and behind the common information 269 in the DVD family. Like information on the starting position of the border zone, information on the updated starting position is also

arranged from the 133rd byte to the 140th byte, which are in the byte positions ahead of information about the recording conditions including peak power and bias power 1 (or the information content 264 uniquely settable for each revision) and behind the common information 269 in the DVD family.

There is a possibility that the revision number will be increased and more accurate recording condition be required in the future and therefore, for example, byte position 197 to byte position 207 will be used for information on recording conditions for a rewritable information storage medium. In that case, if information on the starting position of the border zone of R physical format information recorded in the recordable information storage medium as shown in the example of FIG. 37 is arranged in byte position 197 to byte position 204, there is a danger that the correspondence (or interchangeability) between the rewritable information storage medium and the recordable information storage medium will collapse in terms of the arrangement of recording conditions. To avoid this problem, information on the starting position of the border zone and information on the updated starting position are arranged in byte position 133 to byte position 140. By doing this, the correspondence (or interchangeability) between the rewritable information storage medium and the recordable information storage medium in terms of recording positions of various types of information can be secured.

The contents of concrete information on the starting position of the border zone are as follows. In byte position 133 to byte position 136, "information on the starting position of the border-out BRDO outside the border-in area BRDA currently being used" is written using a physical sector number (PSN) or a physical segment number (PSN). In byte position 137 to byte position 140, "information on the starting position of the border-in BRDI related to the border-in area BRDA to be used next" is written using a physical sector number (PSN) or a physical segment number (PSN).

The contents of concrete information on the updated starting position represent the latest border zone information when a border-in area BRDA has been newly set. Specifically, in byte position 133 to byte position 136, information on the starting position of the border-out BRDO outside the border-in area BRDA currently being used is written using a physical sector number or a physical segment number (PSN). In byte position 137 to byte position 140, information on the starting position of the border-in BRDI related to the border-in area BRDA to be used next is written using a physical sector number or a physical segment number (PSN). When the next border-in area BRDA cannot be recorded into, the area (ranging from byte position 137 to byte position 140) is all filled with "00h".

In contrast with the example of FIG. 37, in the example of FIG. 57, "information on the name of the medium manufacturer" and "additional information from the medium manufacturer" have been eliminated and information on the polarity (identifying whether it is High-to-Low or Low-to-High) of a recording mark has been arranged, starting at byte position 128. However, the following configuration is possible: in any unused area in the range from byte position 31 to byte position 263 of FIG. 57, information on the name of the medium manufacturer and additional information from the medium manufacturer shown in byte position 128 to byte position 191 of FIG. 37 are written.

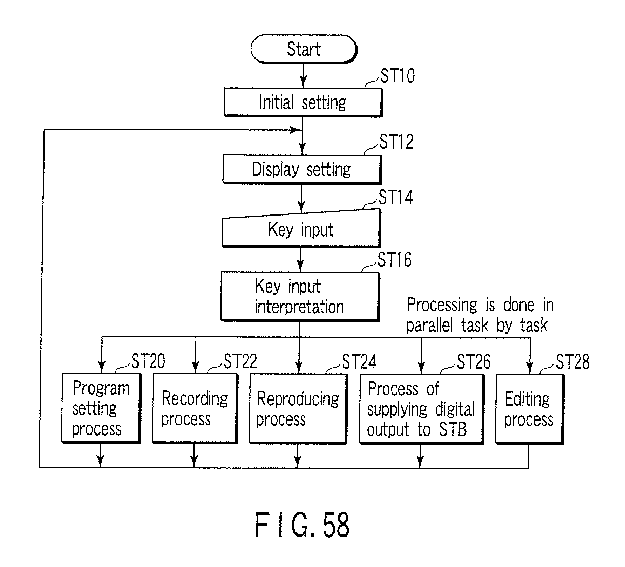

FIG. 58 is a flowchart to help explain the processing when digital video information (including TV broadcast programs) is recorded or reproduced using the optical recording medium of FIG. 1. In FIG. 58, the following five processes are illustrated: a picture recording process, a reproducing process, a data transfer process (such as the process of outputting digital signals to a set-top box STB), a program setting process, and an editing process. When the power supply of a digital recorder (not shown) provided with a micro processing unit (MPU) is turned on, the MPU does initial setting at the time of factory shipment or after the user has done setting (ST10) and does display setting (ST12) and waits for a user operation. When the user performs a key input from a key input section (not shown) or a remote controller (ST14), the MPU interprets the content of the key input (ST16). According to the result of the interpretation of the key input, the following four data processes are executed as needed.

Specifically, if the key input is, for example, a key operation of setting timer recording, a program setting process is started (ST20). If the key input is a key operation of starting picture recording, a picture recording process is started (ST22). If the key input is a key operation of starting reproduction, a reproducing process is started (ST24). If the key input is a key operation of outputting a digital signal to a STB or the like, a digital output process is started (ST26). If the key input is a key operation of editing, an editing process is started (ST28).

The processes in step ST20 to ST28 are processed in parallel in each task as needed. For example, during the reproducing process (ST24), the process of outputting a digital signal to the STB (ST26) is carried out in parallel. Moreover, a new program setting process (ST20) may be configured to be processed in parallel, while the process of recording video without timer recording is being carried out (ST22). Alternatively, taking into account the advantage of fast accessible disk recording, a reproducing process (ST24) and a digital output process (ST26) may be configured to be carried out in parallel during the recording process (ST22). The process of editing on a disk (ST28) may be configured to be carried out, while a hard disk drive (HDD) (not shown) is being recorded into.

The optical disk substrates used in the embodiments disclosed in this specification are roughly divided into two types:

(a) One type uses a so-called land-groove recording method that has a groove pitch of about 0.6 to 0.8 $\mu$m and records data into both lands and grooves. Hereinafter, this type of information storage medium is also referred to as a rewritable (1) information storage medium.

(b) The other type uses a so-called groove recording method that has a groove pitch of about 0.3 to 0.4 $\mu$m and records data into only either lands or grooves (the name is also used when data is recorded into only lands for the sake of convenience).

Hereinafter, this type of information storage medium is also referred to as a rewritable (2) information storage medium.

The thickness of the substrate on the light incident side is possible in the range from as thin as about 0.1 mm (with NA = about 0.85) to about 0.6 mm (with NA = about 0.65) according to the size of NA of the objective of the optical pickup. The wavelength $\lambda$ of the laser beam to be used is assumed to be 405 nm.

Next, a detailed configuration of the information recording and reproducing apparatus and a disk (or information recording medium) when each of the methods is used in this embodiment will be explained. First, a case where the land-groove recording method (a) is used will be described.

The details have been already explained. FIG. 24 is a diagram to help explain the configuration of an information recording and reproducing apparatus. FIG. 25 is a diagram to help explain a signal processing circuit using a representative PRML detecting method used in the information recording and reproducing apparatus. FIG. 26 is a diagram to help explain the configuration of a Viterbi decoder used in the PRML method. FIG. 27 is a diagram of state transition of classes to be used. FIG. 28 shows a concrete example of the structure and dimensions of an optical recording medium. FIG. 29 shows a method of setting physical sector numbers in a rewritable information storage medium or a reproduce-only information storage medium with a one-layer structure. FIGS. 30A and 30B show a method of setting physical sector numbers in a reproduce-only information storage medium with a two-layer structure. FIG. 31 shows a method of setting physical sector numbers in a rewritable information storage medium. FIG. 32 shows an example of setting a general parameter in a rewritable information storage medium. FIGS. 33A, 33B, 33C, 33D, 33E, and 33F are diagrams to help explain comparative examples of the data structure of a data area and a data lead-out area. FIGS. 34A, 34B, and 35 are diagrams to help explain the waveform (write strategy) of recording pulses an example of defining the shape of recording pulses. FIGS. 36A, 36B, 36C, and 36D are diagrams to help explain the data structure of a control data zone and an R physical information zone. FIG. 37 is a diagram to help explain the contents of physical format information and R physical format information. As described below, the invention has disclosed suitable combinations of these configurations, data structures, and medium configurations. To record and reproduce data more stably, these combinations are very important.

FIG. 38 is a diagram to help explain the procedure for conversion in configuring a physical sector structure. FIG. 39 is a diagram to help explain the structure of a data frame. FIG. 40 is a diagram to help explain the structure of an ECC block. FIG. 41 is a diagram to help explain a frame arrangement after scrambling. FIG. 42 is a diagram to help explain a PO interleaving method. FIGS. 43A and 43B are diagrams to help explain the structure of a physical sector. FIG. 44 is a diagram to help explain the contents of a synchronizing code pattern. Since the structure of an ECC block and others, together with the data structure and the like, are particularly crucial in the error correction process, they play a very important part in achieving a high density and a high reliability in the actual recording and reproducing apparatus and information storage medium.

For example, when information is additionally recorded into a medium in which certain data has been written, it is necessary to record data immediately behind the backmost part of the previously recorded data to record data into an information storage medium without loss of data. In that case, a part of the data might be overwritten. In such a case, the configuration of an information recording medium of the invention shown in the embodiment below is suitable because the overwrite (OW) erase ratio is particularly high.

The details have been already explained. FIGS. 45A, 45B, 45C, and 45D are diagrams to help explain the comparison between the data recording formats of the individual information storage mediums. FIGS. 46A, 46B, and 47 are diagrams (1) and (2) to help explain the comparison of the data structure of the information storage medium with that of a conventional equivalent. FIGS. 48A, 48B, 48C, 48D, 48E, and 48F are diagrams to help explain a method of recording rewritable data to be recorded on a rewritable information storage medium. FIG. 49 is a diagram to help explain a data random shift of rewritable data written on a rewritable (1) information storage medium using the land-groove recording method (a). FIG. 50 is a diagram to help explain a method of additionally writing recordable data to be recorded on a rewritable (2) information storage medium using the land or groove recording method (b). FTG. 51 is a diagram to help explain a detailed structure of an ECC block after PO interleaving.

As described above, when information is additionally recorded into a medium which has been recorded into halfway, it is necessary to record data immediately behind the backmost part of the already recorded data to record data into the information storage medium without loss of data. In that case, a part of the ending of the recorded data might be overwritten. In such a case, the configuration of an information recording medium shown in an embodiment of the invention below is suitable because the OW erase ratio is particularly high. Since in the age in which next-generation high-capacity mediums are used, the amount of information handled is large, the data recordable characteristic of a rewritable medium is also very important. Use of an optical recording medium according to the embodiment enables a high-density, high-reliability medium to be obtained and information to be recorded and reproduced more stably.

Next, a case where the land or groove method (b) is used will be explained. In the explanation below, what overlaps with the description of the land-groove recording method (a) will be omitted as needed. FIGS. 52A, 52B, and 52C, which are recording pulse timing parameter setting tables, are diagrams to help explain a method of setting recording conditions. FIG. 53 is a diagram to help explain a method of rewriting rewritable (2) data using the land or groove recording method.

The details have been already explained. FIG. 54 shows an example of setting general parameters in a reproduce-only information storage medium. FIGS. 55 and 56 show examples of setting general parameters in a rewritable (2) information storage medium using the land or groove recording method (b). FIG. 32 shows an example of setting general parameters in a rewritable (1) information storage medium using the land-groove recording method (a). FIG. 57 is a table to help explain another example of physical format information and R physical format information (one example is shown in FIG. 37).

The embodiments of the invention are suitable combinations of the apparatus configurations, data structures, and medium configurations disclosed in the present application. Use of optical recording mediums according to the embodiments of the invention enables a high-density, high-reliability medium to be obtained and data to be recorded and reproduced more stably.

<Consequence>

The inventors of this application have come to the realization that the following are important. In a recording medium (100) which has a substrate (1a, 1b), and a stacked structure that includes a protective film or dielectric film (11a, 11b), a recording film (phase-change recording film 13a, 13b) capable of changing an atomic arrangement reversibly, a crystallization enhancing film (12a, 12b and/or 14a, 14b) in contact with the recording film, and a reflecting film (16a, 16b) and which enables the recording film (13) to be recorded into or erased from reversibly with light, an optical recording medium is suitable which is so configured that the elements (including Ge and Te) constituting the recording film (13a, 13b) have a segregation or a concentration distribution (see FIGS. 5A, 5B, and 5C) in the direction of the thickness of the recording film (or in the vertical direction of FIG. 1) from a region (21a, 21b) in contact with the recording film (13a, 13b), or in the in-plane direction of the recording film (or in the lateral direction or in the direction of normal line in FIG. 1: in the direction perpendicular to the thickness direction).

In a recording medium capable of being recorded into or erased from reversibly with light, an optical recording medium is suitable which comprises a substrate, a recording film capable of changing an atomic arrangement reversibly, a film having a crystallization enhancing function and in contact with the recording film, a protective film or dielectric film, and a reflecting film, and which has an ultrathin oxide film with an average thickness of 0.1 nm or more and 1 nm or less made up of the constituent elements of the recording film in a region in contact with the recording film.

In a recording medium capable of being recorded into or erased from reversibly with light, an optical recording medium is suitable which comprises a substrate, a recording film capable of changing an atomic arrangement reversibly, a film having a crystallization enhancing function and in contact with the recording film, a protective film or dielectric film, a reflecting film, and a dielectric film that contributes to optical enhancement and/or thermal diffusion, and in which the elements constituting the recording film have a segregation or a concentration distribution in the direction of the thickness of the recording film from a region in contact with the recording film, or in the in-plane direction of the recording film.

In a recording medium capable of being recorded into or erased from reversibly with light, an optical recording medium is suitable which comprises a substrate, a recording film capable of changing an atomic arrangement reversibly, a film having a crystallization enhancing function and in contact with the recording film, a protective film or dielectric film, a reflecting film, and a dielectric film that contributes to optical enhancement and/or thermal diffusion, and which has an ultrathin oxide film with an average thickness of 0.1 nm or more and 1 nm or less made up of the constituent elements of the recording film in a region in contact with the recording film.

In a recording medium capable of being recorded into or erased from reversibly with light, an optical recording medium is suitable which comprises a substrate, a recording film capable of changing an atomic arrangement reversibly, a film having a crystallization enhancing function and in contact with the recording film, a protective film (or dielectric film), and a reflecting film, and in which the ratio of the DOS of the crystalline state to the DOS of the amorphous state (the DOS of the crystalline state/the DOS of the amorphous state) at an energy level 0.5 [eV] lower than the top of the DOS for the valance band of the recording film is 1.0 or more and 2.5 or less.

In a recording medium capable of being recorded into or erased from reversibly with light, an optical recording medium is suitable which comprises a substrate, a recording film capable of changing an atomic arrangement reversibly, a film having a crystallization enhancing function and in contact with the recording film, a protective film (or dielectric film), a reflecting film, and a dielectric film that contributes to optical enhancement and/or thermal diffusion, and in which the ratio of the DOS of the crystalline state to the DOS of the amorphous state (the DOS of the crystalline state/the DOS of the amorphous state) at an energy level 0.5 [eV] lower than the top of the DOS for the valance band of the recording film is 1.0 or more and 2.5 or less.

In a recording medium capable of being recorded into or erased from reversibly with light, an optical recording medium is suitable which comprises a substrate, a recording film capable of changing an atomic arrangement reversibly, a film having a crystallization enhancing function and in contact with the recording film, a protective film (or dielectric film), and a reflecting film, and which has such a configuration as performs control in such a manner that the crystallization speed over the recording film differs from that under the recording film.

In a recording medium capable of being recorded into or erased from reversibly with light, an optical recording medium is suitable which comprises a substrate, a recording film capable of changing an atomic arrangement reversibly, a film having a crystallization enhancing function and in contact with the recording film, a protective film (or dielectric film), a reflecting film, and a dielectric film that contributes to optical enhancement and/or thermal diffusion, and which has such a configuration as performs control in such a manner that the crystallization speed over the recording film differs from that under the recording film.

In the phase-change recording film, an optical recording medium is suitable in which the crystallization enhancing film (upper interface film or lower interface film) is configured to include germanium nitride (GeN), germanium-chrome nitride (GeCrN), zirconium oxide (Zr02), stabilized zirconia + chrome oxide (ZrO2+Cr2O3), stabilized zirconia + silicon oxide + chrome oxide (ZrO2+SiO2+Cr2O3), zircon + chrome oxide (ZrSi04 + Cr203), or hafnium oxide (Hf02). Alternatively, the crystallization enhancing film is composed of a compound ($HfO_{2-x}N_x$) containing hafnium (Hf), oxygen (O), and nitrogen (N). Alternatively, the crystallization enhancing film is composed of a film ($(ZrO_{2-x}N_x)_{1-y}((Y_2O_3)_{1-z}(Nb_2O_5)_z)_y$ where z = 0) containing zirconium (Zr), oxygen (O), nitrogen (N), and yttria (Y). Alternatively, the crystallization enhancing film is composed of a film ($(ZrO_{2-x}N_x)_{1-y}((Y_2O_3)_{1-z}(Nb_2C_5)_z)_y$ where z = 1) containing zirconium (Zr), oxygen (O), nitrogen (N), and niobium (Nb). Alternatively, the crystallization enhancing film is composed of a film ($(ZrO_{2-x}N_x)_{1-y}((Y_2O_3)_{1-z}(Nb_2O_5)_z)_y$ where $0 \leq z \leq 1$) containing zirconium (Zr), oxygen (O), nitrogen (N), yttria (Y), and niobium (Nb). Alternatively, the crystallization enhancing film is configured to include chrome oxide (Cr203), zinc oxide (ZnO), zinc oxide + tantalum oxide (ZnO+Ta2O5), zinc oxide + tantalum oxide + indium oxide (ZnO+Ta2O5+In2O3), tin oxide (Sn02), tin oxide + antimony oxide (SnO2+Sb2O3), tin oxide + tantalum oxide (SnO2+Ta2O5), or tin oxide + niobium oxide (SnO2+Nb2O5).

In the phase-change recording film, an optical recording medium is suitable in which one of the films with the crystallization enhancing function sandwiching the recording film between them (one of the upper interface film and lower information film) is configured to include germanium nitride (GeN), germanium-chrome nitride (GeCrN), zirconium oxide (Zr02), stabilized zirconia + chrome oxide (ZrO2+Cr2O3), stabilized zirconia + silicon oxide + chrome oxide (ZrO2+SiO2+Cr2O3), zircon + chrome oxide (ZrSi04+Cr2O3), or hafnium oxide (Hf02). Alternatively, one of the films is composed of a compound ($HfO_{2-x}N_x$) containing hafnium (Hf), oxygen (O), and nitrogen (N). Alternatively, one of the films is composed of a compound ($(ZrO_{2-x}N_x)_{1-y}((Y_2O_3)_{1-z}(Nb_2O_5)_z)_y$) where z = 0) containing zirconium (Zr), oxygen (O), nitrogen (N), and yttria (Y). Alternatively, one of the films is composed of a compound ($(ZrO_{2-x}N_x)_{1-y}4(Y_2O_3)_{1-z}(Nb_2O_5)_z)_y$) where z = 1) containing zirconium (Zr), oxygen (O), nitrogen (N), and niobium (Nb). Alternatively, one of the films is composed of a compound ($(ZrO_{2-x}N_x)_{1-y}((Y_2O_3)_{1-z}(Nb_2O_5)_z)_y$) where $0 \leq z \leq 1$) containing zirconium (Zr), oxygen (O), nitrogen (N), yttria (Y), and niobium (Nb).

the other of the films with the crystallization enhancing function sandwiching the recording film between them (the other of the upper interface film and lower information film) is configured to include chrome oxide (Cr203), zinc oxide (ZnO), zinc oxide + tantalum oxide (ZnO+Ta2O5), zinc oxide + tantalum oxide + indium oxide (ZnO+Ta2O5+In2O3), tin oxide (Sn02), tin oxide + antimony oxide (Sn02+Sb2O3), tin oxide + tantalum oxide (SnO2+Ta2O5), or tin oxide + niobium oxide (SnO2+Nb2O5).

The recording film includes at least Ge, Sb, and Te. When its composition is expressed as $Ge_xSb_yTe_z$ where x + y + z = 100, a composition in the area defined by x = 55, z = 45 and x = 45, z = 55 and x = 10, y = 28, z = 42 and x = 10, y = 36, z = 54 in a GeSbTe ternary phase diagram is suitable for the recording film. The recording film is obtained by sputtering a sputtering target of the above composition with an inert gas, such as Ar.

Ge in the recording film is relatively liable to get oxidized. A sputtering target serving as a starting material and an inert gas, such as Ar, used in sputtering include a trace of oxygen. Thus, the mixing of a trace of oxygen in the recording film is inevitable. If an oxide thin film is used for a layer in contact with the recording film, a trace of oxygen diffuses into the recording film, resulting in an increase in the amount of oxygen. As described above, even if not only Ge, Sb, and Te but also oxygen (O) or the like has been detected in the recording film, this does not depart from the spirit of the invention. Similarly, it is well known that there is a little difference between the composition of the sputtering target and the composition of the thin film formed under various conditions in the recording film. Generally, compositions with a difference of about $\pm 1$ [at.%] are regarded as the same composition except for a special case.

The recording film may include at least Ge, Sb, and Te and, on the basis of the composition within the above-described range, have a part of the composition replaced with bismuth (Bi) and/or indium (In) and/or tin (Sn). When the composition after the replacement is expressed as $(Ge(1-w) Snw)x(Sb(1-v)(Bi(1-u) Inu)v)yTez$ where x + y + z = 100, a recording film is suitable in which w, v, and u in the composition satisfy the following: $0 \leq w \leq 0.5$ and $0 \leq v \leq 0.7$ and $0 \leq u \leq 1$. The recording film is obtained by sputtering a sputtering target of the above composition with an inert gas, such as Ar.

As described above, Ge in the recording film is relatively liable to get oxidized. A sputtering target serving as a starting material and an inert gas, such as Ar, used in sputtering include a trace of oxygen. Thus, the mixing of a trace of oxygen in the recording film is inevitable. If an oxide thin film is used for a layer in contact with the recording film, a trace of oxygen diffuses into the recording film, resulting in an increase in the amount of oxygen. As described above, even if not only Ge, Sb, and Sn/Bi/In but also oxygen (O) or the like has been detected in the recording film, this does not depart from the spirit of the invention.

The recording film includes at least Ge, Bi, and Te. When its composition is expressed as $Ge_xBi_yTe_z$ where x + y + z = 100, a composition in the area defined by x = 55, z = 45 and x = 45, z = 55 and x = 10, y = 28, z = 42 and x = 10, y = 36, z = 54 in a GeSiTe ternary phase diagram is suitable for the recording film. The recording film is obtained by sputtering a sputtering target of the above composition with an inert gas, such as Ar.

As described above, Ge in the recording film is relatively liable to get oxidized. A sputtering target serving as a starting material and an inert gas, such as Ar, used in sputtering include a trace of oxygen. Thus, the mixing of a trace of oxygen in the recording film is inevitable. If an oxide thin film is used for a layer in contact with the recording film, a trace of oxygen diffuses into the recording film, resulting in an increase in the amount of oxygen. As described above, even if not only Ge, Bi, and Te but also oxygen (O) or the like has been detected in the recording film, this does not depart from the spirit of the invention.

The recording film includes at least Ge, Sb, Te, and N (nitrogen). When its composition is expressed as $Ge_xSb_yTe_z$ where x + y + z = 100, it is desirable that 1 to 5 at.% of nitrogen (N) should be added to a GeSbTe-series compound in the area defined by x = 55, z = 45 and x = 45, z = 55 and x = 10, y = 28, z = 42 and x = 10, y = 36, z = 54 in a GeSiTe ternary phase diagram.

The added nitrogen is not always distributed uniformly in the film and can be distributed inhomogeneously depending on film forming conditions. In that case, it is necessary to analyze and evaluate the amount of nitrogen added using the sum total in the film to which nitrogen is to be added. When the layer in contact with the recording film includes nitrogen, nitrogen can diffuse from the layer in contact with the recording film. The recording film is obtained by sputtering a sputtering target of the above composition with an inert gas, such as Ar.

In this example, too, Ge in the recording film is relatively liable to get oxidized. A sputtering target serving as a starting material and an inert gas, such as Ar, used in sputtering include a trace of oxygen. In addition, when a gas including nitrogen (N2) is used as a sputtering gas, the sputtering gas also includes a trace of oxygen (O). Thus, the mixing of a trace of oxygen in the recording film is inevitable. If an oxide thin film is used for a layer in contact with the recording film, a trace of oxygen diffuses into the recording film, resulting in an increase in the amount of oxygen. As described above, even if not only Ge, Sb, and Te but also oxygen (O) or the like has been detected in the recording film, this does not depart from the spirit of the invention.

The recording film includes at least Ge, Sb, Te, and N (nitrogen). When its composition is expressed as $Ge_xSb_yTe_z$ where x + y + z = 100, a part of the composition is replaced with bismuth (Bi) and/or indium (In) and/or tin (Sn) on the basis of a composition in the area defined by x = 55, z = 45 and x = 45, z = 55 and x = 10, y = 28, z = 42 and x = 10, y = 36, z = 54 in a GeSbTe ternary phase diagram. When the composition after the replacement is expressed as (Ge(1-w) Snw) x (Sb(1-v) (Bi(1-u) Inu)v)yTez where x + y + z = 100, a recording film is suitable in which w, v, and u in the composition satisfy the following: $0 \le w \le 0.5$ and $0 \le v \le 0.7$ and $0 \le u \le 1$. In this case, it is desirable that 1 to 5 at.% of nitrogen (N) should be added to a GeSnSbTe, a GeSnSbTeIn, a GeSbTeIn, a GeSbTeBiIn, a GeSbSnTeBiIn, a GeSbTeBi, a GeSnSbTeBi, and GeBiTeIn, and a GeSnSbTeBiIn series compound with the above composition.

The added nitrogen is not always distributed uniformly in the film and can be distributed inhomogeneously depending on film forming conditions. In that case, it is necessary to analyze and evaluate the amount of nitrogen added using the sum total in the film to which nitrogen is to be added. When the layer in contact with the recording film includes nitrogen, nitrogen can diffuse from the layer in contact with the recording film.

The recording film is obtained by sputtering a sputtering target of the above composition with an inert gas, such as Ar. In this example, too, Ge in the recording film is relatively liable to get oxidized. A sputtering target serving as a starting material and an inert gas, such as Ar, used in sputtering include a trace of oxygen. In addition, when a gas including nitrogen (N2) is used as a sputtering gas, the sputtering gas also includes a trace of oxygen (O). Thus, the mixing of a trace of oxygen in the recording film is inevitable. If an oxide thin film is used for a layer in contact with the recording film, a trace of oxygen diffuses into the recording film, resulting in an increase in the amount of oxygen. As described above, even if not only Ge, Sb, Te, and Sn/Bi/In but also oxygen (O) or the like has been detected in the recording film, this does not depart from the spirit of the invention.

The recording film includes at least Ge, Bi, Te, and N (nitrogen). When its composition is expressed as $Ge_xBi_yTe_z$ where x + y + z = 100, it is desirable that 1 to 5 at.% of nitrogen (N) should be added to a GeBiTe-series compound in the area defined by x = 55, z = 45 and x = 45, z = 55 and x = 10, y = 28, z = 42 and x = 10, y = 36, z = 54 in a GeBiTe ternary phase diagram.

The added nitrogen is not always distributed uniformly in the film and can be distributed inhomogeneously depending on film forming conditions. In that case, it is necessary to analyze and evaluate the amount of nitrogen added using the sum total in the film to which nitrogen is to be added. When the layer in contact with the recording film includes nitrogen, nitrogen can diffuse from the layer in contact with the recording film.

The recording film is obtained by sputtering a sputtering target of the above composition with an inert gas, such as Ar. Ge in the recording film is relatively liable to get oxidized. A sputtering target serving as a starting material and an inert gas, such as Ar, used in sputtering include a trace of oxygen. In addition, when a gas including nitrogen (N2) is used as a sputtering gas, the sputtering gas also includes a trace of oxygen (O). Thus, the mixing of a trace of oxygen in the recording film is inevitable. If an oxide thin film is used for a layer in contact with the recording film, a trace of oxygen diffuses into the recording film, resulting in an increase in the amount of oxygen. As described above, even if not only Ge, Si, and Te but also oxygen (O) or the like has been detected in the recording film, this does not depart from the spirit of the invention.

Although the material series and compositions of the recording films are selected according to the necessary crystallization speed, the sensitivity of mediums, and the optical characteristics, including the reflectivity, contrast, and transmittance of mediums, those in the above range are suitable.

Practicing any one of the embodiments of the invention makes it possible to realize a phase-change recording medium in which cross erase is less liable to take place, the contrast between crystalloid and amorphous material is high, and the erase ratio at high linear velocity is high, and which is excellent in the overwrite (OW) cycle characteristic and environment resistance and enables high-speed overwriting to be done with high density and high capacity.

This invention is not limited to the above embodiments and, on the basis of available skills in the present or future implementation phase, may be practiced or embodied in still other ways without departing from the spirit or character thereof. For instance, an information storage medium used in the embodiments is not limited to an optical disk obtained by laminating 0.6-mm thick substrates together and may be an optical disk obtained by providing a 0.1-mm-thick protective layer (or transparent sheet) on the surface of a 1.2-mm-thich substrate (that is, an optical disk produced by laminating a 0.1-mm-thick transparent sheet to a 1.1-mm-thick substrate on which a recording layer and others have been formed). Alternatively, the information storage medium may be an optical disk which has a 0.1-mm-thick transparent protective layer (or transparent sheet) provided on one of or both of the surfaces of the substrates of the optical disk obtained by laminating 0.6-mm-thick substrates. While in the embodiments, an ultrathin oxide film whose average thickness is 0.1 nm or more and 1 nm or less has been used, the lower limit may be 0.1 nm or less, provided that necessary values can be controlled in mass production. The upper limit and lower limit representing the average thickness of an ultrathin oxide film have been defined by one effective digit, allowing a certain amount of margin. Specifically, in mass production, a margin of $\pm20\%$ to $\pm30\%$ is allowed for an average thickness of 0.1 nm to 1 nm. Some scholarly study has shown that an ultrathin film can present a so-called island like micro-structure and therefore is not a uniform film. However, in the invention, an ultrathin film is used as a film which has an average film thickness. Even if an ultrathin film presents an island texture, this does not impair the effect of the invention.

**Claims**

1. In a recording medium which has a substrate (1a, 1b) and a stacked structure (19, 20) including an interference film (11a, 11b, 15a, 15b, 17a), a recording film (13a, 13b) capable of changing an atomic arrangement reversibly, a crystallization enhancing film (12a, 12b, 14a, 14b) in contact with the recording film (13a, 13b), and a reflecting film (16a, 16b) and which enables the recording film (13a, 13b) to be recorded into or erased from reversibly with light, an optical recording medium being so configured that the elements constituting the recording film (13a, 13b) have a segregation or a concentration distribution in the direction of the thickness of the recording film (13a, 13b) from a region in contact with the recording film (13a, 13b), or in the in-plane direction of the recording film (13a, 13b).

2. The optical recording medium according to claim 1, **characterized in that** an ultrathin oxide film (21a, 21b) with an average thickness of 0.1 nm or more and 1 nm or less made up of the constituent elements of the recording film (13a, 13b) is provided on the region in contact with the recording film (13a, 13b).

3. The optical recording medium according to claim 1, **characterized in that** the stacked structure (19, 20) is configured to include a dielectric film which contributes to optical enhancement (11a, 11b, 15a, 15b, 17a) and/or thermal diffusion.

4. The optical recording medium according to claim 1, **characterized in that** the interference film (11a, 11b, 15a, 15b, 17a) functions as a protective film for the recording film (13a, 13b).

5. The optical recording medium according to claim 1, **characterized in that** the ratio of the density of state (DOS) of a crystalline state to the DOS of an amorphous state at an energy level 0.5 [eV] lower than the top of the DOS for the valance band of the recording film (13a, 13b) is 1.0 or more and 2.5 or less.

6. The optical recording medium according to claim 1, **characterized in that** the ratio of the DOS of a crystalline state to the DOS of an amorphous state an an energy level 0.25 to 1.0 [eV] lower than the top of the DOS for the valance band of the recording film (13a, 13b) is 1.0 or more and 2.5 or less.

7. The optical recording medium according to claim 1, **characterized in that** the crystallization enhancing film (12a, 12b, 14a, 14b) is composed of an upper interface film (14a, 14b) in contact with one surface of the recording film (13a, 13b) and a lower interface film (12a, 12b) in contact with the other surface of the recording film (13a, 13b) and the upper interface film (14a, 14b) and the lower interface film (12a, 12b) are so controlled that the crystallization speed over the recording film (13a, 13b) differs from that under the recording film (13a, 13b).

8. The optical recording medium according to claim 1, **characterized in that** the crystallization enhancing film (12a, 12b, 14a, 14b) is composed of an upper interface film (14a, 14b) in contact with one surface of the recording film (13a, 13b) or a lower interface film (12a, 12b) in contact with the other surface of the recording film (13a, 13b) and the upper interface film (14a, 14b) and the lower interface film (12a, 12b) are so controlled that the crystallization speed over the recording film (13a, 13b) differs from that under the recording film (13a, 13b).

9. The optical recording medium according to claim 1, **characterized in that** the crystallization enhancing film (12a, 12b, 14a, 14b) is configured to include
germanium nitride, germanium-chrome nitride, zirconium oxide, stabilized zirconia + chrome oxide, stabilized zirconia + silicon oxide + chrome oxide, zircon + chrome oxide, or hafnium oxide,
alternatively, is composed of a compound containing hafnium, oxygen, and nitrogen,
alternatively, is composed of a film containing zirconium, oxygen, nitrogen, and yttria,
alternatively, is composed of a film containing zirconium, oxygen, nitrogen, and niobium,
alternatively, is a film containing zirconium, oxygen, nitrogen, yttria, and niobium, or
alternatively, is configured to include chrome oxide, zinc oxide, zinc oxide + tantalum oxide, zinc oxide + tantalum oxide + indium oxide, tin oxide, tin oxide + antimony oxide, tin oxide + tantalum oxide, or tin oxide + niobium oxide.

10. The optical recording medium according to claim 7, **characterized in that** one of the upper interface film (14a, 14b) and the lower interface film (12a, 12b) is configured to include germanium nitride, germanium-chrome nitride, zirconium oxide, stabilized zirconia + chrome oxide, stabilized zirconia + silicon oxide + chrome oxide, zircon + chrome oxide, or hafnium oxide,
alternatively, is composed of a compound containing hafnium, oxygen, and nitrogen,
alternatively, is composed of a film containing zirconium, oxygen, nitrogen, and yttria,
alternatively, is composed of a film containing zirconium, oxygen, nitrogen, and niobium, or
alternatively, is composed of a film containing zirconium, oxygen, nitrogen, yttria, and niobium, and
the other of the upper interface film (14a, 14b) and the lower interface film (12a, 12b) is configured to include chrome oxide, zinc oxide, zinc oxide + tantalum oxide, zinc oxide + tantalum oxide + indium oxide, tin oxide, tin oxide + antimony oxide, tin oxide + tantalum oxide, or tin oxide + niobium oxide.

11. The optical recording medium according to claim 8, **characterized in that** one of the upper interface film (14a, 14b) and the lower interface film (12a, 12b) is configured to include germanium nitride, germanium-chrome nitride, zirconium oxide, stabilized zirconia + chrome oxide, stabilized zirconia + silicon oxide + chrome oxide, zircon + chrome oxide, or hafnium oxide,
alternatively, is composed of a compound containing hafnium, oxygen, and nitrogen,
alternatively, is composed of a film containing zirconium, oxygen, nitrogen, and yttria,
alternatively, is composed of a film containing zirconium, oxygen, nitrogen, and niobium, or
alternatively, is composed of a film containing zirconium, oxygen, nitrogen, yttria, and niobium, and
the other of the upper interface film (14a, 14b) and the lower interface film (12a, 12b) is configured to include chrome oxide, zinc oxide, zinc oxide + tantalum oxide, zinc oxide + tantalum oxide + indium oxide, tin oxide, tin oxide + antimony oxide, tin oxide + tantalum oxide, or tin oxide + niobium oxide.

12. The optical recording medium according to claim 1, **characterized in that** the recording film (13a, 13b) is configured to include germanium, antimony, and tellurium and, when its composition is expressed as $Ge_xSb_yTe_z$ where $x + y + z = 100$, to have a composition in and on an area defined by $x = 55$, $z = 45$ and $x = 45$, $z = 55$ and $x = 10$, $y = 28$, $z = 42$ and $x = 10$, $y = 36$, $z = 54$ in a GeSbTe ternary phase diagram.

**13.** The optical recording medium according to claim 12, **characterized in that** 1 to 5 at.% of nitrogen is added to a GeSbTe-series compound with the above composition.

**14.** The optical recording medium according to claim 1, **characterized in that** the recording film (13a, 13b) is configured to include at least germanium, bismuth, and tellurium and, when its composition is expressed as $Ge_xBi_yTe_z$ where $x + y + z = 100$, to have a composition in and on an area defined by x = 55, z = 45 and x = 45, z = 55 and x = 10, y = 28, z = 42 and x = 10, y = 36, z = 54 in a GeBiTe ternary phase diagram.

**15.** The optical recording medium according to claim 14, **characterized in that** 1 to 5 at.% of nitrogen is added to a GeBiTe-series compound with the above composition.

**16.** The optical recording medium according to claim 1, **characterized in that**, when a part of the composition of the recording film (13a, 13b) is replaced with bismuth and/or indium and/or tin and the composition after the replacement is expressed as $(Ge(1-w) Snw)x(Sb(1-v) (Bi(1-u) Inu)v)yTez$ where $x + y + z = 100$, the recording film (13a, 13b) is so configured that w, v, and u in the composition satisfy the following: $0 \leq w \leq 0.5$ and $0 \leq v \leq 0.7$ and $0 \leq u \leq 1$.

**17.** The optical recording medium according to claim 16, **characterized in that** 1 to 5 at.% of nitrogen is added to a GeSnSbTe, a GeSnSbTeIn, a GeSbTeIn, a GeSbTeBiIn, a GeSbSnTeBiIn, a GeSbTeBi, GeBiTeIn, a GeSnSbTeBi, and a GeSnSbTeBiIn series compound with the above composition.

**18.** An information recording and reproducing apparatus which uses the optical recording medium according to claim 1, **characterized by** comprising:

means for recording information into the recording film (13a, 13b) of the optimal medium (141); and
means for reproducing the information from the recording film (13a, 13b) in which information has been recorded (141).

**19.** An information recording and reproducing method which uses the optical recording medium according to claim 1, **characterized by** comprising:

recording information into the recording film (13a, 13b) of the optimal medium; and
reproducing the information from the recording film (13a, 13b) in which information has been recorded.

⟨Example of fragmentary sectional view of single-sided, dual-layer optical disk⟩

FIG. 1

Si, glass substrate, polycarbonate, or the like — 1

— 16 (Reflecting film)
— 15 (Interference film)
— 14 (Interface film 1)
Crystalline/amorphous — 13 (Recording film)
— 12 (Interface film 2)
— 11 (Interference film)

FIG. 2

FIG.3

Start

ST100
Load a substrate

ST102
Vacuumize the load lock chamber

ST104
Degree of vacuum in the load lock camber<1e-3 [Pa]?

NO

YES

ST106
Move the substrate to a desired process chamber

ST108
Rotate the substrate and the magnet on the anode plate

ST110
Introduce gas into the process chamber

ST112
Start plasma ignition

ST114
Form a film

ST116
Stop the introduction of gas into the process chamber

ST118
Is another film to be formed?

YES

NO

ST120
Stop rotating the substrate and the magnet on the anode plate

ST122
Transport the substrate to the load lock chamber

ST124
Leak outside air into the load lock chamber and take out the substrate

End

FIG. 4

FIG. 5A

FIG. 5B

FIG. 5C

| No. | Interface layer (upper interface film and/or lower interface film) |
|-----|---------------------------------------------------------------------|
| 1 | GeN |
| 2 | GeCrN |
| 3 | ZrO2+Y2O3 |
| 4 | ZrO2+Y2O3+Cr2O3 |
| 5 | ZrO2+Y2O3+SiO2+Cr2O3 |
| 6 | ZrSiO4+Cr2O3 |
| 7 | HfO2 |
| 8 | $(ZrO_{2-x}N_x)_{1-y}((Y_2O_3)_{1-z}(Nb_2O_5)_z)_y$ |
| 9 | $HfO_{2-x}N_x (0.1 \leqq x \leqq 0.2)$ |
| 10 | Cr2O3 |
| 11 | ZnO+Ta2O5 |
| 12 | ZnO+Ta2O5+In2O3 |
| 13 | SnO2+Sb2O3 |
| 14 | SnO2+Ta2O5 |
| 15 | SnO2+Nb2O5 |

$(ZrO_{2-x}N_x)_{1-y}((Y_2O_3)_{1-z}(Nb_2O_5)_z)_y$ is suitable
in a composition range meeting the expressions $0 < x \leqq 0.2$, $0 < y \leqq 0.1$, $0 \leqq z \leqq 1$
$HfO_{2-x}N_x$ is suitable in a composition range meeting the expression
$0.1 \leqq x \leqq 0.2$

# FIG. 6

GeN composition ratio [at.%]

| No. | Ge | N |
|-----|----|----|
| 1 | 54 | 46 |
| 2 | 52 | 48 |
| 3 | 50 | 50 |
| 4 | 48 | 52 |
| 5 | 47 | 53 |

# FIG. 7

Composition of recording film

| No. | Composition of recording film |
|-----|-------------------------------|
| 1 | Ge10Sb2Te13 |
| 2 | Ge4Sb2Te7 |
| 3 | Ge8Sb2Te13Bi2 |
| 4 | Ge3Sb2Te7Bi |
| 5 | Ge6Sb2Te13Sn4 |
| 6 | Ge3Sb2Te7Sn |
| 7 | Ge10Bi2Te13 |
| 8 | Ge2.9BiTe4.4 |
| 9 | Ge11.25BiTe12.75 |
| 10 | Ge10Sb1.5In0.5Te13 |
| 11 | Ge10Bi1.5In0.5Te13 |
| 12 | Ge4Sb1.5In0.5Te7 |
| 13 | Ge2.9Bi0.75In0.25Te4.4 |
| 14 | Ge10Sb1.2In0.8Te13 |

FIG. 8

Comparative examples

| No. | Interface layer |
|-----|-----------------|
| Comparative example 1 | None |
| Comparative example 2 | SiO2 |
| Comparative example 3 | Y2O3 |

FIG. 9

Measurement of the density of state (DOS) for a valence band

| No. | Interface layer 1 | Interface layer 2 | State density ratio※ |
|---|---|---|---|
| 1 | Zr02+Y203 | Zn0+Ta205 | 1.1 |
| 2 | GeCrN | Cr203 | 1.2 |
| 3 | Zr02+Y203+Cr203 | Sn02+Sb203 | 2.3 |
| 4 | ZrSi04+Cr203 | Cr203 | 1.4 |
| 5 | Zr02+Y203+Si02+Cr203 | Zn0+Ta205+In203 | 2.5 |
| 6 | $(ZrO_{2-x}N_x)_{1-y}((Y_2O_3)_{1-z}(Nb_2O_5)_z)_y$ | Sn02+Nb205 | 1.6 |
| 7 | $HfO_{2-x}N_x(0.1 \leqq x \leqq 0.2)$ | GeN | 1.4 |
| 8 | GeN | Cr203 | 1.1 |
| 9 | $HfO_{2-x}N_x(0.1 \leqq x \leqq 0.2)$ | ZrSi04+Cr203 | 1.9 |
| 10 | Cr203 | Zn0+Ta205 | 2.2 |
| 11 | GeN | Sn02+Ta205 | 1.1 |
| 12 | Zr02+Y203+Cr203 | Zn0+Ta205+In203 | 2.4 |

# FIG. 10

Measurement of the density of state (DOS) for a valence band

| No. | Interface layer 1 | Interface layer 2 | State density ratio※ |
|---|---|---|---|
| Comparative example 1 | None | None | 7 |
| Comparative example 2 | Si02 | Si02 | 4 |
| Comparative example 3 | Y203 | Y203 | 5 |

# FIG. 11

Standard evaluation condition

| Item | Condition |
|---|---|
| Wavelength [nm] | 405 |
| N.A. | 0.65 |
| Track Pitch [$\mu$m] (Land&Grove) | 0.34 |
| Linear velocity [m/sec] (at constant speed) ※ | 5.4 |

※Double speed and quad speed correspond to
10.8 [m/sec] and 21.6 [m/sec], respectively.

# FIG. 12

Measurement of disk characteristics

| Embodiment | CNR [dB] | SbER | CNR [dB] | SbER (v=4.4 [m/sec]) |
|---|---|---|---|---|
| Embodiment 2 | 52.9 | $1.8 \times 10^{-6}$ | 33.8 | $3.2 \times 10^{-5}$ |
| Embodiment 3 | 52.6 | $1.5 \times 10^{-6}$ | 33.1 | $4.2 \times 10^{-5}$ |
| Embodiment 4 | 52.8 | $1.6 \times 10^{-6}$ | 33.1 | $3.8 \times 10^{-5}$ |
| Embodiment 5 | 53.7 | $1.9 \times 10^{-6}$ | 34.8 | $3.1 \times 10^{-5}$ |
| Embodiment 6 | 53.6 | $2.2 \times 10^{-6}$ | 34.9 | $3.9 \times 10^{-5}$ |
| Embodiment 7 | 53.7 | $1.8 \times 10^{-6}$ | 34.8 | $2.4 \times 10^{-5}$ |
| Embodiment 8 | 52.0 | $2.6 \times 10^{-6}$ | 30.9 | $3.2 \times 10^{-5}$ |
| Embodiment 9 | 53.2 | $1.9 \times 10^{-6}$ | 34.6 | $3.4 \times 10^{-5}$ |
| Embodiment 10 | 53.6 | $2.2 \times 10^{-6}$ | 34.7 | $4.2 \times 10^{-5}$ |
| Embodiment 11 | 51.9 | $2.6 \times 10^{-6}$ | 31.3 | $3.4 \times 10^{-5}$ |
| Embodiment 12 | 53.8 | $2.0 \times 10^{-6}$ | 34.8 | $3.9 \times 10^{-5}$ |
| Embodiment 13 | 53.7 | $1.9 \times 10^{-6}$ | 34.9 | $3.5 \times 10^{-5}$ |
| Embodiment 14 | 53.1 | $1.4 \times 10^{-6}$ | 34.9 | $2.9 \times 10^{-5}$ |
| Embodiment 15 | 51.9 | $1.5 \times 10^{-6}$ | 34.6 | $2.9 \times 10^{-5}$ |

# FIG. 13

High-speed recording and erasing characteristic

| Sample No. | ER[dB] | | |
|---|---|---|---|
| | Constant speed | Double speed | Quad speed |
| Embodiment 2 | 34.9 | 34.1 | 32 |
| Embodiment 3 | 30.1 | 30.3 | 30.3 |
| Embodiment 4 | 34.2 | 35.2 | 34.3 |
| Embodiment 5 | 32.8 | 32.9 | 32.2 |
| Embodiment 6 | 36.2 | 34.5 | 33.4 |
| Embodiment 7 | 33.2 | 32.2 | 30.3 |
| Embodiment 8 | 33.9 | 31.7 | 30.5 |
| Embodiment 9 | 31.3 | 30.8 | 30.1 |

# FIG. 14

Composition of recording film and result of evaluation

| No. | Composition of recording film | CNR[dB] | SbER |
|---|---|---|---|
| 1 | Ge10Sb2Te13 | 52.8 | $2.2 \times 10^{-6}$ |
| 2 | Ge4Sb2Te7 | 52.2 | $2.2 \times 10^{-6}$ |
| 3 | Ge8Sb2Te13Bi2 | 53.7 | $1.8 \times 10^{-6}$ |
| 4 | Ge3Sb2Te7Bi | 54.4 | $2.1 \times 10^{-6}$ |
| 5 | Ge6Sb2Te13Sn4 | 52.2 | $1.9 \times 10^{-6}$ |
| 6 | Ge3Sb2Te7Sn | 52.8 | $2.4 \times 10^{-6}$ |
| 7 | Ge10Bi2Te13 | 53.6 | $2.2 \times 10^{-6}$ |
| 8 | Ge2.9BiTe4.4 | 53.1 | $2.4 \times 10^{-6}$ |
| 9 | Ge11.25BiTe12.75 | 53.6 | $2.2 \times 10^{-6}$ |
| 10 | Ge10Sb1.5In0.5Te13 | 55.8 | $3.4 \times 10^{-6}$ |
| 11 | Ge10Bi1.5In0.5Te13 | 55.6 | $2.9 \times 10^{-6}$ |
| 12 | Ge4Sb1.5In0.5Te7 | 54.2 | $3.6 \times 10^{-6}$ |
| 13 | Ge2.9Bi0.75In0.25Te4.4 | 55.1 | $2.9 \times 10^{-6}$ |
| 14 | Ge10Sb1.2In0.8Te13 | 53.1 | $2.2 \times 10^{-6}$ |

# FIG. 15

Composition of nitrogen-added recording film and result of evaluation

| No. | Composition of recording film | CNR[dB] | SbER |
|---|---|---|---|
| 1 | Ge10Sb2Te13+N(3at.%) | 54.8 | $3.3 \times 10^{-6}$ |
| 2 | Ge4Sb2Te7+N(3at.%) | 55.2 | $3.4 \times 10^{-6}$ |
| 3 | Ge4Sb2Te7+N(5at.%) | 54.7 | $2.1 \times 10^{-6}$ |
| 4 | Ge8Sb2Te13Bi2+N(3at.%) | 55.4 | $2.3 \times 10^{-6}$ |
| 5 | Ge3Sb2Te7Bi+N(3at.%) | 54.2 | $3.6 \times 10^{-6}$ |
| 6 | Ge10Bi2Te13+N(1at.%) | 55.8 | $3.4 \times 10^{-6}$ |
| 7 | Ge10Bi2Te13+N(2.5at.%) | 55.6 | $2.9 \times 10^{-6}$ |
| 8 | Ge2.9BiTe4.4+N(1at.%) | 55.1 | $2.9 \times 10^{-6}$ |
| 9 | Ge11.25BiTe12.75+N(3at.%) | 55.6 | $2.9 \times 10^{-6}$ |
| 10 | Ge10Sb1.5In0.5Te13+N(1at.%) | 52.8 | $2.4 \times 10^{-6}$ |
| 11 | Ge10Bi1.5In0.5Te13+N(3at.%) | 53.6 | $2.2 \times 10^{-6}$ |
| 12 | Ge4Sb1.5In0.5Te7+N(3at.%) | 52.2 | $2.2 \times 10^{-6}$ |
| 13 | Ge2.9Bi0.75In0.25Te4.4+N(2.5at.%) | 53.7 | $1.8 \times 10^{-6}$ |
| 14 | Ge10Sb1.2In0.8Te13+N(1at.%) | 52.3 | $2.5 \times 10^{-6}$ |

# FIG. 16

Result of evaluating comparative examples (disk characteristics)

| Comparative examples | Interface layer | CNR[dB] | SbER | ER[dB] |
|---|---|---|---|---|
| Comparative example 1 | None | 49.8 | Incapable measurement | 25 |
| Comparative example 2 | SiO2 | 48.8 | $5.0 \times 10^{-4}$ | 25 |
| Comparative example 3 | Y2O3 | 50.9 | $3.3 \times 10^{-3}$ | 19 |

# FIG. 17

Result of evaluating the high-speed recording and
erasing characteristic of samples in comparative examples

| Comparative examples | Interface layer | ER[dB] | | |
|---|---|---|---|---|
| | | Constant speed | Double speed | Quad speed |
| Comparative examples 2 | SiO2 | 28 | 22.6 | 11.3 |
| Comparative examples 3 | Y2O3 | 20 | 17 | 9 |

F I G. 18

Example without an interface layer

F I G. 19   Binding Energy [eV]

Example with an interface layer

F I G. 20   Binding Energy [eV]

F I G. 21

F I G. 22

F I G. 23

Explanatory diagram showing the configuration of an information recording and reproducing apparatus

FIG. 24

Legend:
→ Main information
→ Flow of information
---→ Reference clock
----→ Direction of command

EP 1 847 992 A2

Explanatory diagram of signal processing circuit using
PRML detecting techniques

F I G. 25

Explanatory diagram showing the configuration of Viterbi decoder

F I G. 26

State transition diagram of PR (1, 2, 2, 2, 1) class

FIG. 27

Embodiment of the configuration and dimensions of an information storage medium

Φ44.6 $^{0.0}_{-0.8}$ mm ⟶

Information area INFOA

Burst cutting area BCA ⟶

Φ46.3±0.10mm ⟶

Maximum allowable diameter of data area DTA ⟶
Reproduce-only and recordable type : Φ116.0mm
Rewritable type : Φ115.78mm

Φ46.6 $^{0.0}_{-0.4}$ mm ⟶

System lead-in area SYLDI ⟶
(In the case of an OPT reproduce-only medium,
the radial dimensions of the system lead-out
area SYLDO overlap with those of this area)

Data area DTA

Connection area CNA ⟶

Data lead-out area DTLDO ⟶
(In the case of an OPT reproduce-only medium,
this area corresponds to a middle area MDA)

Data lead-in area DTLDI ⟶
(In the case of an OPT reproduce-only medium,
the radial dimensions of the data lead-out
area DTLDO overlap with those of this area)

Outside diameter of information area INFOA ⟶

Starting position of data lead-in area DTLDI ⟶

Recordable type : Φ118.0 $^{0.0}_{-0.4}$ mm

Φ47.6 $^{0.0}_{-0.4}$ mm

Rewritable type : Φ117.2 $^{0.0}_{-0.4}$ mm

FIG. 28

EP 1 847 992 A2

A method of setting physical sector numbers in a recordable information storage medium or a one-layer reproduce-only information storage medium

Physical sector number

Address

02 6AFFh

03 00000h

Radial direction

☐ : Data area DTA
▨ : System lead-in area SYLDI
▧ : Connection area CNA
▦ : Data lead-in area DTLDI
▨ : Data lead-out area DTLDO

F I G. 29

F I G. 30A

F I G. 30B

A method of setting physical sector numbers in a rewritable information storage medium

| | Zone | Normal radius (mm) | Physical segment per track | No. of tracks | System/land | | Groove | |
|---|---|---|---|---|---|---|---|---|
| | | | | | Start physical sector number (hex value) | End physical sector number (hex value) | Start physical sector number (hex value) | End physical sector number (hex value) |
| System lead-in area | Initial zone | 23.300 – 23.795 | | 728.1 | 022400 | 024AFF | | |
| | Buffer zone | | | | 024B00 | 024EFF | | |
| | Control data zone | | | | 024F00 | 0266FF | | |
| | Buffer zone | | | | 026700 | 026AFF | | |
| Connection area | Connection zone | 23.300 – 23.795 | - - - | - - - | - - - | - - - | - - - | |
| Data lead-in area | Guard track zone | 23.795 – 24.100 | 13 | 5404 | 029A00 | 02A3FF | 829A00 | 82A3FF |
| | Disk test zone | | | | 02A400 | 02B3FF | 82A400 | 82B3FF |
| | Drive test zone | | | | 02B400 | 02C9FF | 82B400 | 82C9FF |
| | Guard track zone | | | | 02CA00 | 02CCFF | 82CA00 | 82CCFF |
| | Disk ID zone | | | | 02CD00 | 02CDFF | 82CD00 | 82CDFF |
| | DMA1 & DMA2 | | | | 02CE00 | 02FFFF | 82CE00 | 82FFFF |
| Data area | Zone 0 | 24.100 – 25.639 | | | 030000 | 050D3F | 830000 | 850D3F |
| | Zone 1 | 25.639 – 27.471 | 14 | 5390 | 050D40 | 07AEFF | 850D40 | 87AEFF |
| | Zone 2 | 27.471 – 29.304 | 15 | 5390 | 07AF00 | 0A80DF | 87AF00 | 8A80DF |
| | Zone 3 | 29.304 – 31.136 | 16 | 5390 | 0A80E0 | 0D82DF | 8A80E0 | 8D82DF |
| | Zone 4 | 31.136 – 32.969 | 17 | 5390 | 0D82E0 | 10B4FF | 8D82E0 | 90B4FF |
| | Zone 5 | 32.969 – 34.802 | 18 | 5390 | 10B500 | 14173F | 90B500 | 94173F |
| | Zone 6 | 34.802 – 36.634 | 19 | 5390 | 141740 | 17A99F | 941740 | 97A99F |
| | Zone 7 | 36.634 – 38.467 | 20 | 5390 | 17A9A0 | 1B6C1F | 97A9A0 | 9B6C1F |
| | Zone 8 | 38.467 – 40.299 | 21 | 5390 | 1B6C20 | 1F5EBF | 9B6C20 | 9F5EBF |
| | Zone 9 | 40.299 – 42.132 | 22 | 5390 | 1F5EC0 | 23817F | 9F5EC0 | A3817F |
| | Zone 10 | 42.132 – 43.965 | 23 | 5390 | 238180 | 27D45F | A38180 | A7D45F |
| | Zone 11 | 43.965 – 45.797 | 24 | 5390 | 27D460 | 2C575F | A7D460 | AC575F |
| | Zone 12 | 45.797 – 47.630 | 25 | 5390 | 2C5760 | 310A7F | AC5760 | B10A7F |
| | Zone 13 | 47.630 – 49.462 | 26 | 5390 | 310A80 | 35EDBF | B10A80 | B5EDBF |
| | Zone 14 | 49.462 – 51.295 | 27 | 5390 | 35EDC0 | 3B011F | B5EDC0 | BB011F |
| | Zone 15 | 51.295 – 53.128 | 28 | 5390 | 3B0120 | 40449F | BB0120 | C0449F |
| | Zone 16 | 53.128 – 54.960 | 29 | 5390 | 4044A0 | 45B83F | C044A0 | C5B83F |
| | Zone 17 | 54.960 – 56.793 | 30 | 5390 | 45B840 | 4B5BFF | C5B840 | CB5BFF |
| | Zone 18 | 56.793 – 57.888 | | | 4B5C00 | 4ED73F | CB5C00 | CED73F |
| Data lead-out area | DM3 & DMA4 | 57.888 – 58.497 | 31 | 5012 | 4ED740 | 4F093F | CED740 | CF093F |
| | Guard track zone | | | | 4F0940 | 4F0C3F | CF0940 | CF0C3F |
| | Drive test zone | | | | 4F0C40 | 4F223F | CF0C40 | CF223F |
| | Disk test zone | | | | 4F2240 | 4F323F | CF2240 | CF323F |
| | Guard track zone | | | | 4F3240 | 50C73F | CF3240 | D0C73F |

FIG. 31

Example of setting general parameters in a reproduce-only information storage medium

| Parameter | | One-layer structure |
|---|---|---|
| Recording capacity available to the user | | 20Gbytes/side |
| Wavelength used | | 405nm |
| NA value of objective | | 0.65 |
| Data bit length | (A) | 0.306 $\mu$m |
| | (B) | 0.130 to 0.140 $\mu$m |
| Channel bit length | (A) | 0.204 $\mu$m |
| | (B) | 0.087 to 0.093 $\mu$m |
| Minimum mark/pit length (2T) | (A) | 0.408 $\mu$m |
| | (B) | 0.173 to 0.187 $\mu$m |
| Maximum mark/pit length (13T) | (A) | 2.652 $\mu$m |
| | (B) | 1.126 to 1.213 $\mu$m |
| Track pitch | (A) | 0.68 $\mu$m |
| | (B) | 0.34 $\mu$m |
| Physical address setting method | (B) | Wobble address |
| Outside diameter of information storage medium | | 120mm |
| Total thickness of information storage medium | | 0.60×2mm |
| Diameter of center hole | | 15.0mm |
| Inside radius of data area DTA | | 24.1mm |
| Outside radius of data area DTA | | 57.89mm |
| Sector size | | 2048bytes |
| ECC | | Reed-Solomon product code |
| (Error Correction Code) | | RS (208,192,17) ×RS (182,172,11) |
| ECC block size | | 32 physical sectors |
| Modulation method | | ETM,RLL(1,10) |
| Error correctable error length | (A) | 7.1mm |
| | (B) | 6.0mm |
| Linear velocity | (A) | 6.61m/s |
| | (B) | 5.64 to 6.03m/s |
| Channel bit transfer rate | (A) | 32.40Mbps |
| | (B) | 64.80Mbps |
| User data transfer rate | (A) | 18.28Mbps |
| | (B) | 36.55Mbps |

(A) indicates a value in the system lead-in area SYLDI
(B) indicates a value in the data lead-in area DTLDI, data area DTA, and data lead-out area DTLDO

## F I G. 32

Explanatory diagram showing a comparison of data structure between the data area and the data lead-out area

**F I G. 33A**

| Data lead-in area DTLDI | Data area DTA | Data lead-out area DTLDO | System lead-out area SYLDO |
|---|---|---|---|
| | User data prerecording area | All main data="00h" | All main data="00h" |

201

**F I G. 33B**

| Data lead-in area DTLDI | Spare area SPA | Data area DTA | Data lead-out area DTLDO | | | | | | |
|---|---|---|---|---|---|---|---|---|---|
| | | User data rewritable range | Defect management area 3 DMA3 | Defect management area 4 DMA4 | Guard track zone 3 GTZ3 | Drive test zone DRTZ | Disk test zone DKTZ | Guard track zone 4 GTZ4 | Servo calibration zone SCZ |

202

**F I G. 33C**

| Data lead-in area DTLDI | Spare area SPA | Data area DTA | | Data lead-out area DTLDO | | | | | | |
|---|---|---|---|---|---|---|---|---|---|---|
| | | User data rewritable range | Extended spare area ESPA | Defect management area 3 DMA3 | Defect management area 4 DMA4 | Guard track zone 3 GTZ3 | Drive test zone DRTZ | Disk test zone DKTZ | Guard track zone 4 GTZ4 | Servo calibration zone SCZ |

203   ↑ α (starting position address)   204   211 ⟋ Emboss pit

**F I G. 33D**

| Data lead-in area DTLDI | Spare area SPA | Data area DTA | Data lead-out area DTLDO | | | |
|---|---|---|---|---|---|---|
| | | User data additionally recordable range | Drive test zone DRTZ | Disk test zone DKTZ | Guard track zone 4 GTZ4 | Servo calibration zone SCZ |

**F I G. 33E**

| Data lead-in area DTLDI | Spare area SPA | Data area DTA | | | | | Data lead-out area DTLDO | | | |
|---|---|---|---|---|---|---|---|---|---|---|
| | | User data additionally recordable range | Extended spare area 2 ESPA2 | Extended drive test zone 2 EDRTZ2 | Extended spare area 1 ESPA1 | Extended drive test zone 1 EDRTZ1 | Drive test zone DRTZ | Disk test zone DKTZ | Guard track zone 4 GTZ4 | Servo calibration zone SCZ |

205   205   ↑ ζ   ↑ τ   ↑ σ   ↑ γ   ↑ β   211 ⟋ Emboss pit

**F I G. 33F**

| Data lead-in area DTLDI | Spare area SPA | Data area DTA | | Data lead-out area DTLDO | | | |
|---|---|---|---|---|---|---|---|
| | | User data additionally recordable range | Extended spare area ESPA | Extended drive test zone EDRTZ | Drive test zone DRTZ | Disk test zone DKTZ | Guard track zone 4 GTZ4 / Servo calibration zone SCZ |

EP 1 847 992 A2

NRZI signal

F I G. 34A

Waveform of optical pulse

F I G. 34B

Explanatory diagram to help explain the definition of a recording pulse

P1 : (peak power)—(bias power 1)
P2 : (peak power)—(bias power 3)
P3 : (peak power)—(bias power 2)
P4 : (bias power 1)— (bias power 3)

F I G. 35

EP 1 847 992 A2

Explanatory diagram to help explain the data structure of the control data zone and R physical information zone

**F I G. 36A**

| System lead-in area SYLDI | | | | | Connection area CNA | Data lead-in area DTLDI | | | | | | | Data area DTA |
|---|---|---|---|---|---|---|---|---|---|---|---|---|---|
| Initial zone INZ | Buffer zone 1 BFZ1 | Control data zone CDZ | Buffer zone 2 BFZ2 | Connection zone CNZ | Guard track zone 1 GTZ1 | Disk test zone DKTZ | Drive test zone DRTZ | Guard track zone 2 GTZ2 | Recording position management zone RMZ | R physical information zone RIZ | Reference code recording zone RCZ | | |

**F I G. 36B**

| ... | Control data zone CDZ | | ... | R physical information zone RIZ | | ... |
|---|---|---|---|---|---|---|
| ... | Physical format information PFI | Medium-manufacture-related information DMI | ... | Medium-manufacture-related information DMI | R physical format information R_PFI | ... |

**F I G. 36C**

| Medium-manufacture-related information DMI | | |
|---|---|---|
| Data on the name of the country where the disk was manufactured | Data on the country to which the medium maker belongs | Other disk manufacture related information |
| 251 | 252 | 253 |

| Information name | Physical format information PFI or R physical format information R_PFI | | | |
|---|---|---|---|---|
| Type of recording information | Common data in DVD family | Common data in HD_DVD family | Unique data on the type and version of each standard | Contents of data uniquely settable in each revision |
| Byte location | 0 – 31 | 32 – 127 | 128 – 511 | 512 – 2047 |
| | 261 | 262 | 263 | 264 |

**F I G. 36D**

| Byte position | 0 – 16 | 17 – 31 |
|---|---|---|
| Type of recording information | Information equally recorded in all of a reproduce-only, a rewritable, and a recordable information storage medium | Information equally recorded in a rewritable and a recordable information storage medium (not recorded in a reproduce-only one) |
| | 267 | 268 |

EP 1 847 992 A2

Explanatory diagram showing a comparison of information contents between physical format information and R physical format information

267 ~

268 ~

263 ~

264 ~

| Type of recording information | Byte position | Physical format information PFI | | | R physical format information |
|---|---|---|---|---|---|
| | | Reproduce-only type | Rewritable type | Recordable type | |
| Data common to all of a reproduce-only, a rewritable, and a recordable information storage medium | 0 | Written standards type (reproduce-only/rewritable/recordable) information and version number information | | | |
| | 1 | Medium size (diameter) and maximum possible data transfer rate information | | | |
| | 2 | Medium structure (single layer or double layer, presence or absence of emboss pit/recordable area/rewritable area) | | | |
| | 3 | Recording density (linear density and track density) information | | | |
| | 4-15 | Data area DTA location information | | | |
| | 16 | Presence or absence information on burst cutting area BCA (all present in this embodiment) | | | |
| Data common to DVD family and to a rewritable and a recordable information storage medium | 17 | Reserved area | Revision number information determining maximum recording speed | | |
| | 18 | | Revision number information determining minimum recording speed | | |
| | 19·25 | | Revision number table (application revision number) | | |
| | 26 | | Class state information | | |
| | 27 | | Extended (part) version information | | |
| | 28·31 | | Reserved area | | |
| HD_DVD | 31·127 | | Reserved area | | |
| Unique data on the type and version of each written standard | 128-175 | | Medium manufacturer name information | | |
| | 176-191 | | Additional information from medium manufacturer | | |
| | 192 | | Recording mark polarity (identifying whether H → L or L → H) information | | |
| | 193 | | Linear velocity information in recording or reproduction | | |
| | 194 | | Rim intensity value of the optical system in the circumferential direction | | |
| | 195 | | Rim intensity value oft the optical system in the radial direction | | |
| | 196 | | Recommended laser power in reproduction (the amount of light on the recording surface) | | |
| | 197-511 | | Reserved area | | |
| Contents of data uniquely settable in each revision | 512 | | Peak power in land area | Peak power | |
| | 513 | | Bias power 1 in land area | Bias power 1 | |
| | 514 | | Bias power 2 in land area | Bias power 2 | |
| | 515 | | Bias power 3 in land area | Bias power 3 | |
| | 516 | | Peak power in groove area | End time of first pulse ($T_{EFP}$) | |
| | 517 | | Bias power 1 in groove area | Multi-pulse interval ($T_{MP}$) | |
| | 518 | | Bias power 2 in groove area | Starting time of last pulse ($T_{SLP}$) | |
| | 519 | | Bias power 3 in groove area | Period of bias power 2 of 2T mark ($T_{LC}$) | |
| | 520-196 | | ············· | ············· | |
| | 197-204 | | Reserved area | Starting position information on border zone | |
| | 204·2047 | | Reserved area | | |

FIG. 37

EP 1 847 992 A2

81

Diagram to help explain the converting procedure for the formation of a physical sector structure

F I G. 38

EP 1 847 992 A2

Diagram to help explain a structure of a data frame

F I G. 39

Explanatory diagram of ECC block structure

| | | | | | | | | | | |
|---|---|---|---|---|---|---|---|---|---|---|
| B0,0 | | B0,171 | B0,172 | | B0,181 | B0,182 | | B0,353 | B0,354 | | B0,363 |

FIG. 40

Explanatory diagram of frame arrangement after scrambling

FIG. 41

Diagram to help explain a PO interleaving method

F I G. 42

Diagram to help explain a structure of a physical sector

| 24 | 1092 | 24 | 1092 | 24 | 1092 | 24 | 1092 |
|-----|------|-----|------|-----|------|-----|------|
| SY0 | | SY1 | | SY1 | | SY2 | |
| SY1 | | SY2 | | SY2 | | SY3 | |
| SY1 | | SY3 | | SY3 | | SY1 | |
| SY2 | | SY3 | | SY2 | | SY2 | |
| SY1 | | SY3 | | SY1 | | SY1 | |
| SY3 | | SY2 | | SY3 | | SY3 | |
| SY2 | | SY1 | | | | | |

7 rows

| Sync frame | Sync frame | Sync frame | Sync frame |

F I G. 43A

| 24 | 1092 | 24 | 1092 | 24 | 1092 | 24 | 1092 |
|-----|------|-----|------|-----|------|-----|------|
| | | | | SY0 | | SY1 | |
| SY1 | | SY2 | | SY1 | | SY2 | |
| SY2 | | SY3 | | SY1 | | SY3 | |
| SY3 | | SY1 | | SY2 | | SY3 | |
| SY2 | | SY2 | | SY1 | | SY3 | |
| SY1 | | SY1 | | SY3 | | SY2 | |
| SY3 | | SY3 | | SY2 | | SY1 | |

6 rows

| Sync frame | Sync frame | Sync frame | Sync frame |

F I G. 43B

Data word B(t) → 352 Code table → Code word X(t) → 354 Code connector → Connection code word → 356 DSV controller → Channel bit stream

State S(t) — State register 358 — Next state S(t+1)

F I G. 44

Explanatory diagram showing a comparison of data recording format between various information storage mediums

| | 411 | 412 | 413 | 414 | 415 | | 418 |
|---|---|---|---|---|---|---|---|
| **F I G. 45A** | ECC block #1 | ECC block #2 | ECC block #3 | ECC block #4 | ECC block #5 | · · · · | ECC block #8 |

Sync frame length 433          Sync frame length 433          Sync frame length 433

| | 411 | 442 | 412 | 443 | 413 | 448 | 418 |
|---|---|---|---|---|---|---|---|
| **F I G. 45B** | ECC block (data field) #1 | Reproduce-only guard area #2 | ECC block (data field) #2 | Reproduce-only guard area #3 | ECC block (data field) #3 | · · · · Reproduce-only guard area #8 | ECC block (data field) #8 |

Sync frame length 433          Sync frame length 433          Sync frame length 433

| | 411 | 452 | 412 | 453 | 413 | 458 | 418 |
|---|---|---|---|---|---|---|---|
| **F I G. 45C** | ECC block (data field) #1 | Recordable guard area #2 | ECC block (data field) #2 | Recordable guard area #3 | ECC block (data field) #3 | · · · · Recordable guard area #3 | ECC block (data field) #8 |

Sync frame length 433          Sync frame length 433          Sync frame length 433

| | 411 | 462 | 412 | 463 | 413 | 468 | 418 |
|---|---|---|---|---|---|---|---|
| **F I G. 45D** | ECC block (data field) #1 | Rewritable guard area #2 | ECC block (data field) #2 | Rewritable guard area #3 | ECC block (data field) #3 | · · · · Rewritable guard area #3 | ECC block (data field) #8 |

EP 1 847 992 A2

Explanatory diagram (a) showing a comparison of data structure between
an information storage medium of this invention and a conventional equivalent

| _230 | _231 | | _241 | _242 | _243 | _244 | | _248 | |
|---|---|---|---|---|---|---|---|---|---|
| Physical sector #0 | Physical sector #1 | .... .... | Physical sector #31 | Physical sector #32 | Physical sector #33 | Physical sector #34 | .... | Physical sector #63 | ...... ...... |

_411

| ECC block #1 | ECC block #2 | ECC block #3 | ECC block #4 | ECC block #5 | ...... ...... |
|---|---|---|---|---|---|

412   413   414   415

**F I G. 46A**

Information storage medium 221

Sync frame length 433   Sync frame length 433   Sync frame length 433

| _441 | _230 | _231 | | _241 | _442 | _242 | _243 | | _248 | _443 | |
|---|---|---|---|---|---|---|---|---|---|---|---|
| Guard area #1 | Physical sector #0 | Physical sector #1 | .... .... | Physical sector #31 | Guard area #2 | Physical sector #32 | Physical sector #33 | .... | Physical sector #63 | Guard area #3 | .... |

441   _448   _418

| Guard area #1 | ECC block (data field) #1 | Guard area #2 | ECC block (data field) #2 | Guard area #3 | ECC block (data field) #3 | Guard area #4 | ECC block (data field) #4 | · · · | Guard area #8 | ECC block (data field) #8 |
|---|---|---|---|---|---|---|---|---|---|---|

411   442   412   443   413   444   414

**F I G. 46B**

Information storage medium 221

EP 1 847 992 A2

Explanatory diagram (2) showing a comparison of data structure between
an information storage medium of this invention and a conventional equivalent

| 490 | | | | | 433 | | | 434 | |
| Data segment | | | | | Sync code | | | Sync data | |

| 14 data bytes | 67 data bytes | 4 data bytes | 77376 data bytes | 2 data bytes | 4 data bytes | 16 data bytes | 67 data bytes | 4 data bytes |
|---|---|---|---|---|---|---|---|---|
| Buffer area | VFO area | Pre-sync area | Data field 470 ‖ ECC block #2 | Postamble area ⇒ "SY1" | Extra area | Buffer area | VFO area | Pre-sync area |

474  471  477  412  481  482  475  472  478

441

| Guard area #1 | ECC block (data field) #1 | Guard area #2 | ECC block (data field) #2 | Guard area #3 | ECC block (data field) #3 | Guard area #4 | ECC block (data field) #4 | · · · | Guard area #8 | ECC block (data field) #8 |

411  442  412  443  413  444  414  448  418

Information storage medium 221

FIG. 47

EP 1 847 992 A2

Diagram to help explain a method of recording rewritable data onto a rewritable information storage medium

EP 1 847 992 A2

FIG. 48A

| 410 | Sync frame length 433 | 411 | Sync frame length 433 | 412 |
|---|---|---|---|---|
| ECC block #0 | Rewritable guard area #1 | ECC block #1 | Rewritable guard area #2 | ECC block #2 |

FIG. 48B

540

461 → 462

Recording cluster

FIG. 48C

529

520

| 546 | 544 | 547 | 532 | 533 | 521 | 536 | 534 | 537 | 530 |
|---|---|---|---|---|---|---|---|---|---|
| | Data segment | | | | | Data segment | | | |
| Data area in ECC block #0 | Post-amble area SY1 | Extra area | Buffer area | VFO area | Pre-sync area | Data area in ECC block #1 | Post-amble area SY1 | Extra area | Buffer area |
| 77376 data bytes | 2 data bytes | 4 data bytes | 16 data bytes | 67 data bytes | 4 data bytes | 77376 data bytes | 2 data bytes | 4 data bytes | 16 data bytes |

Extended guard area ~528

24 data bytes

FIG. 48D

Overlapped part in rewriting 541

| 522 | 523 | 525 |
|---|---|---|
| VFO area | Pre-sync area | Data area in ECC block #2 |
| Data segment | | ~531 |

FIG. 48E

590

Recording cluster ~541

FIG. 48F

Wobble sync area 580

| Non-modulation area | Modulation start mark |
|---|---|
| | ~581 |

Diagram to help explain random shift of rewritable data recorded on a rewritable information storage medium

Physical segment (n) | Physical segment (n+1)

24 wobbles

NPW

NPW

Actual start point

Write start point

Data segment (m+1)

VFO area

71

522

$47+J_{m+1}/12-J_m/12$

$24-J_{m+1}/12+J_m/12$

24

$J_m+1/12$

16

537

Buffer

Extended guard field

528

Write end point

Data segment (m)

F I G. 49

Diagram to help explain a method of recording additionally recordable data on a recordable information storage medium

Physical segment (n) | Physical segment (n+1)

24 wobbles

NPW
NPW

Write start point

529

Extended guard field

VFO area

Data segment (m+1)

71

8

16

537

Buffer area

Data segment (m)

Write end point

F I G. 50

Detailed explanatory diagram of ECC block after PO interleaving

| | Left small ECC block A↓ | | | | | Right small ECC block B↓ | | | | |
|---|---|---|---|---|---|---|---|---|---|---|
| (0) | Data ID #0 | IED #0 | RSV #0 | | PI-L #00-0 | | | | | PI-R #00-0 |
| ... | | 0-L | | | ... | | 0-R | | | |
| (5) | | | | | PI-L #00-5 | | | | EDC #0 | PI-R #00-5 |
| (6) | | PO #0 | | | PI-L #00-6 | Data ID #1 | IED #1 | RSV #1 | | PI-L #01-0 |
| (7) | | | | | PI-R #01-1 | | | | | PI-L #01-1 |
| ... | | 1-R | | | ... | | 1-L | | | |
| (12) | | | EDC #1 | | PI-R #01-6 | | PO #1 | | | PI-L #01-6 |
| (13) | Data ID #2 | IED #2 | RSV #2 | | PI-L #02-0 | | | | | PI-R #02-0 |
| | | 2-L | | | | | 2-R | | | |
| | ... | ... | ... | ... | ... | ... | ... | ... | ... | ... | ... |
| (207) | | | EDC #31 | | PI-R #31-6 | | PO #31 | | | PI-L #31-6 |

0-th recording frame

First recording frame

F I G. 51

Explanatory diagram to help explain a
method of setting recording conditions

| T$_{SFP}$ table | | Mark length | | |
|---|---|---|---|---|
| | | 2T | 3T | >4T |
| Begin space length | 2T | a | b | c |
| | 3T | d | e | f |
| | >4T | g | h | i |

F I G. 52A

| T$_{ELP}$ table | | Mark length | | |
|---|---|---|---|---|
| | | 2T | 3T | >4T |
| End space length | 2T | j | k | l |
| | 3T | m | n | o |
| | >4T | p | q | r |

F I G. 52B

| T$_{LC}$ table | Mark length | | |
|---|---|---|---|
| | 2T | 3T | >4T |
| | s | t | u |

F I G. 52C

Another embodiment related to a method of recording additionally recordable
data to be recorded on a recordable information storage medium

FIG. 53

EP 1 847 992 A2

Example of setting general parameters in
a reproduce-only information storage medium

| Parameter | | One-layer structure | Two-layer structure |
|---|---|---|---|
| Recording capacity available to the user | | 15Gbytes/side | 30Gbytes/side |
| Wavelength used | | 405nm | |
| NA (Numerical Aperture) value of objective | | 0.65 | |
| Data bit length | (A) | 0.306 $\mu$m | |
| | (B) | 0.153 $\mu$m | |
| Channel bit length | (A) | 0.204 $\mu$m | |
| | (B) | 0.102 $\mu$m | |
| Minimum pit length (2T) | (A) | 0.408 $\mu$m | |
| | (B) | 0.204 $\mu$m | |
| Maximum pit length (13T) | (A) | 2.652 $\mu$m | |
| | (B) | 1.326 $\mu$m | |
| Track pitch | (A) | 0.68 $\mu$m | |
| | (B) | 0.40 $\mu$m | |
| Outside diameter of information storage medium | | 120mm | |
| Total thickness of information storage medium | | 0.60×2mm | |
| Diameter of center hole | | 15.0mm | |
| Inside radius of data area DTA | | 24.1mm | |
| Outside radius of data area DTA | | 58.0mm | |
| User data size per sector | | 2048bytes | |
| ECC | | Reed-Solomon product code | |
| (Error Correction Code) | | RS(208,192,17)×RS(182,172,11) | |
| ECC block size | | 32 physical sectors | |
| Modulation method | | ETM,RLL(1,10) | |
| Error correctable error length | | 7.1mm | |
| Linear velocity | | 6.61m/s | |
| Channel bit transfer rate | (A) | 32.40Mbps | |
| | (B) | 64.80Mbps | |
| User data transfer rate | (A) | 18.28Mbps | |
| | (B) | 36.55Mbps | |

(A) indicates a value in the system lead-in area SYLDI and
system lead-out area SYLDO

(B) indicates a value in the data read-in area DTLDI, data
area DTA, data lead-out area DTLDO, and middle area MDA

# F I G. 54

Example of setting general parameters in a recordable information storage medium

| Parameter | | One-layer structure |
|---|---|---|
| Recording capacity available to the user | | 15Gbytes/side |
| Wavelength to be used<br>NA value of objective | | 405nm<br>0.65 |
| Data bit length | (A) | 0.306 $\mu$m |
| | (B) | 0.153 $\mu$m |
| Channel bit length | (A) | 0.204 $\mu$m |
| | (B) | 0.102 $\mu$m |
| Minimum mark/pit length (2T) | (A) | 0.408 $\mu$m |
| | (B) | 0.204 $\mu$m |
| Maximum mark/pit length (13T) | (A) | 2.652 $\mu$m |
| | (B) | 1.326 $\mu$m |
| Track pitch | (A) | 0.68 $\mu$m |
| | (B) | 0.40 $\mu$m |
| Physical address setting method | (B) | Wobble address |
| Outside diameter of information storage medium<br>Total thickness of information storage medium<br>Diameter of center hole<br>Inside radius of data area DTA<br>Outside radius of data area DTA | | 120mm<br>1.20mm<br>15.0mm<br>24.1mm<br>58.0mm |
| Sector size<br>ECC<br>(Error Correction Code)<br>ECC block size<br>Modulation method | | 2048bytes<br>Reed-Solomon product code<br>RS(208,192,17)×RS(182,172,11)<br>32 physical sectors<br>ETM,RLL(1,10) |
| Error correctable error length | | 7.1mm |
| Linear velocity | | 6.61m/s |
| Channel bit transfer rate | (A) | 32.40Mbps |
| | (B) | 64.80Mbps |
| User data transfer rate | (A) | 18.28Mbps |
| | (B) | 36.55Mbps |

(A) indicates a value in the system lead-in area SYLDI

(B) indicates a value in the data read-in area DTLDI, data area DTA, and data lead-out area DTLDO

# F I G. 55

Example of setting general parameters in a recordable information storage medium

| Parameter | | Two-layer structure |
|---|---|---|
| Recording capacity available to the user | | 30Gbytes/side |
| Wavelength used<br>NA value of objective | | 405nm<br>0.65 |
| Data bit length | (A) | 0.306 μm |
| | (B) | 0.153 μm |
| Channel bit length | (A) | 0.204 μm |
| | (B) | 0.102 μm |
| Minimum mark/pit length (2T) | (A) | 0.408 μm |
| | (B) | 0.204 μm |
| Maximum mark/pit length (13T) | (A) | 2.652 μm |
| | (B) | 1.326 μm |
| Track pitch | (A) | 0.68 μm |
| | (B) | 0.40 μm |
| Physical address setting method | (B) | Wobble address |
| Outside diameter of information storage medium<br>Total thickness of information storage medium<br>Diameter of center hole<br>Inside radius of data area DTA<br>Inside radius of data area DTA<br>Outside radius of data area DTA | | 120mm<br>1.20mm<br>15.0mm<br>24.6mm (layer 0)<br>24.7mm (layer 1)<br>58.1mm |
| Sector size<br>ECC<br>  (Error Correction Code)<br>ECC block size<br>Modulation method | | 2048bytes<br>Reed-Solomon product code<br>RS(208,192,17)×RS(182,172,11)<br>32 physical sectors<br>ETM,RLL(1,10) |
| Error correctable error length | | 7.1mm |
| Linear velocity | | 6.61m/s |
| Channel bit transfer rate | (A) | 32.40Mbps |
| | (B) | 64.80Mbps |
| User data transfer rate | (A) | 18.28Mbps |
| | (B) | 36.55Mbps |

(A) indicates a value in the system lead-in area SYLDI and system lead-out SYLDO

(B) indicates a value in the data lead-in area DTLDI, data area DTA, middle area, and data lead-out area DTLDO

F I G. 56

Explanatory diagram to help explain another embodiment related to physical format information and R physical format information

269 ~

265 ~

264 ~

# FIG. 57

| Type of recording information | Byte position BP | Physical format information PFI | | | R physical format information | Updated physical format information |
|---|---|---|---|---|---|---|
| | | Reproduce-only type | Rewritable type | Recordable type | | |
| Common data in DVD family | 0 | Written standards type (reproduce-only/rewritable/recordable) information and version number information | | | | |
| | 1 | Medium size (diameter) and maximum possible data transfer rate information | | | | |
| | 2 | Medium structure (single layer or double layer, presence or absence of emboss pit/recordable area/rewritable area) | | | | |
| | 3 | Recording density (linear density and track density) information | | | | |
| | 4-15 | Data area DTA location information | | | | |
| | 16 | Presence or absence information on burst cutting area BCA (all present in this embodiment) | | | | |
| | 17 | Reserved area | Revision number information determining maximum recording speed | | | |
| | 18 | | Revision number information determining minimum recording speed | | | |
| | 19·25 | | Revision number table (application revision number) | | | |
| | 26 | | Class state information | | | |
| | 27 | | Extended (part) version information | | | |
| | 28·31 | | Reserved area | | | |
| Contents of data uniquely settable in each written standard | 31·127 | | Reserved area | | | |
| | 128 | | Medium manufacturer name information | | | |
| | 129 | | Additional information from medium manufacturer | | | |
| | 130 | | Recording mark polarity (identifying whether H → L or L → H) information | | | |
| | 131 | | Linear velocity information in recording or reproduction | | | |
| | 132 | | Rim intensity value of the optical system in the circumferential direction | | | |
| | 133-151 | | Reserved area | Starting position (PSN) of border zone | Updated starting position (PSN) | |
| | 256-263 | | Reserved area | | | |
| Contents of data uniquely settable in each revision | 512 | | Peak power in land area | Peak power | | |
| | 513 | | Peak power in land area | Bias power 1 | | |
| | 514 | | Peak power in land area | Bias power 2 | | |
| | 515 | | Peak power in land area | Bias power 3 | | |
| | 516 | | Peak power in groove area | End time of first pulse ($T_{EFP}$) | | |
| | 517 | | Peak power in groove area | Multi-pulse interval (bias power 1) ($T_{MP}$) | | |
| | 518 | | Peak power in groove area | Starting time of last pulse (bias power 2) ($T_{SLP}$) | | |
| | 519 | | Peak power in groove area | Period of bias power 2 of 2T mark ($T_{LC}$) | | |
| | 520-2047 | | ················· | ················· | | |

BP256-263

EP 1 847 992 A2

Start

ST10
Initial setting

ST12
Display setting

ST14
Key input

ST16
Key input
interpretation

Processing is done in
parallel task by task

ST20
Program
setting
process

ST22
Recording
process

ST24
Reproducing
process

ST26
Process of
supplying digital
output to STB

ST28
Editing
process

F I G. 58

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000322770 A
- JP 2001232941 A
- JP 11213446 A
- JP 2003006794 A
- JP 2003323743 A

### Non-patent literature cited in the description

- *Proceedings of the 12th Phase-Change Recording Workshop Symposium,* 2000, 36-41
- **S.K. BAHL et al.** attempted to examine the electronic state. *J. Appl. Phys.,* 1970, 2196
- *Proceedings of the 9th Phase-Change Recording Workshop Symposium,* 1997, 50-53
- *J. Appll. Phys.,* 1970, 2196